(19) Europäisches Patentamt
European Patent Office
Office européen des brevets

(11) **EP 2 873 186 B1**

(12) **EUROPEAN PATENT SPECIFICATION**

(45) Date of publication and mention
of the grant of the patent:
**07.03.2018 Bulletin 2018/10**

(21) Application number: **13780407.6**

(22) Date of filing: **25.07.2013**

(51) Int Cl.:
*H04L 9/00* (2006.01)     *H04L 9/30* (2006.01)

(86) International application number:
**PCT/IB2013/056102**

(87) International publication number:
**WO 2014/016795 (30.01.2014 Gazette 2014/05)**

(54) **METHOD AND SYSTEM FOR HOMOMORPHICLY RANDOMIZING AN INPUT**

VERFAHREN UND SYSTEM ZUR HOMOMORPHEN RANDOMISIERUNG EINER EINGABE

PROCÉDÉ ET SYSTÈME DE RANDOMISATION HOMOMORPHE D'UNE ENTRÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.07.2012 IL 22115212
24.01.2013 IL 22440013**

(43) Date of publication of application:
**20.05.2015 Bulletin 2015/21**

(73) Proprietor: **NDS Limited
Staines, Middlesex TW18 4EX (GB)**

(72) Inventors:
• **HIBSHOOSH, Eliphaz
6356205 Tel Aviv (IL)**
• **KIPNIS, Aviad
9043500 Efrat (IL)**

(74) Representative: **Marks & Clerk (Luxembourg) LLP
44, rue de la Vallée
2661 Luxembourg (LU)**

(56) References cited:
**WO-A1-98/08323**     **US-A1- 2011 243 320**
**US-A1- 2011 264 920**

**Description**

RELATED APPLICATIONS

The present application claims the benefit of priority from unpublished Israel applications IL 221152 filed 26-Jul-2012 and IL 224400 filed 24-Jan-2013, both of NDS Ltd.

FIELD OF THE INVENTION

The present invention relates to systems and methods of homomorphic randomization and encryption.

BACKGROUND OF THE INVENTION

Can Homomorphic Encryption be Practical, by Kristin Lauter, Michael Naehrig, Vinod Vaikuntanathan, July 2011 describes that the prospect of outsourcing an increasing amount of data storage and management to cloud services raises many new privacy concerns for individuals and businesses alike. The privacy concerns can be satisfactorily addressed if users encrypt the data they send to the cloud. If the encryption scheme is homomorphic, the cloud can still perform meaningful computations on the data, even though it is encrypted.

The promise of practical homomorphic encryption is sought by government, industry, and society. IBM and Microsoft have been vigorously pursuing research towards its potential promise as it, for example, enables 'secure encrypted search' (or 'privacy-preserving information transfer') by a public (open) cloud server; the server, for example, searches in an encrypted medical database (without knowing the query or the result), and delivering the encrypted result for decryption by the secure client. Yet another application of 'secure function evaluation' is where the open untrusted server executes a secret algorithm for an input without knowing the nature of the algorithm or the result. Thus a hacker who is presumed to have gained an open access to the public cloud server (even a malicious cloud service employee) presents no threat of compromise of the information or transaction. The applications of this homomorphic encryption are many and will enable wide-spread use of cloud computing allowing, for example, security conscious government and financial industry to move their services to the public cloud by encrypting their data bases and make them available for cloud computing without ever worrying about a security violation by the cloud service or outside hackers. Further, this privacy-preserving technology helps society cope with ever increasing attacks on confidential data not to mention private clouds. Note that the security of the above is not a result of a moving-target paradigm (e.g., software that is rapidly updated to thwart hackers' analysis) or clear software obfuscation but inherent in the mathematical nature of the homomorphic cryptosystem.

To date, homomorphic systems have been found to be impractical; only restricted special-case constrained uses have been shown to be of some potential for practical use.

Gentry et al. in STOC '09, Proceedings of the 41st Annual ACM Symposium on Theory of Computing, pgs. 169 - 178, proposes a fully homomorphic encryption scheme - i.e., a scheme that allows one to evaluate circuits over encrypted data without being able to decrypt.

Xiao et al, in a paper entitled, An Efficient Homomorphic Encryption Protocol for Multi-User Systems, available at www.utdallas.edu/~ilyen/techrep/HPbound.pdf propose a solution for the homomorphic encryption problem.

The following patent references are also believed to reflect the state of the art:

US 7,254,586 to Chen et al;
WO/2010/100015 of INTRINSIC ID B.V.;
US 20100329454 of Takashima;
US 7,472,093 to Juels; and
US 20110110525 of Gentry.

WO 98/08323 discloses the NTRU public key encryption scheme which is based on polynomials.

SUMMARY OF THE INVENTION

The present invention, in certain embodiments thereof, seeks to provide an improved practical fully homomorphic encryption system for specific data in $Z_N$ ($Z_N$ is the ring of residues modulo N; N is factored by two primes, p and q) slated for crypto applications. For certain applications it is desirable to use random, large numbers in $Z_N$, where large numbers are, for example, 1 Kbit, for practical considerations, based on the current state of the art.

Homomorphic encryption is a form of encryption which allows specific types of computations to be carried out on cipher text and obtain an encrypted result which is the cipher text of the result of operations performed on the plaintext.

For instance, one person could add two encrypted numbers and then another person could decrypt the result, without either of them being able to find the value of the individual numbers. Homomorphic encryption schemes are malleable by design. The homomorphic property of various cryptosystems can be used to create secure voting systems, collision-resistant hash functions, private information retrieval schemes and enable widespread use of cloud computing by ensuring the confidentiality of processed data.

High performance non-deterministic fully-homomorphic methods for practical - randomization of data (over commutative ring) are presented herein, and symmetric-encryption of mod-N data over ring $Z_N$ well suited for crypto applications. Embodiments of the present invention secure, for example, the multivariate input or the coefficients of a public polynomial function for running in an open untrusted environment. The methods employed may also provide enhanced protection for some existing crypto algorithms against certain attacks, e.g., securing OSS public key signature against Pollard attack. Further, the efficient nature of the methods (one large-numbers multiplication per encryption and six for the product of two encrypted values) motivates and enables the use of low cost collaborative security platforms for applications such as keyed-hash or private key derivation algorithms. Such platform is comprised of a low-cost (low performance) security element supported by an untrusted high performance server running the homomorphic algorithms. It is shown that random plaintext data is the sufficient condition for proof of security for the homomorphic encryption. The homomorphic randomization of data over a commutative ring offers protection against side-channel attacks (DPA) on, for example, AES key. Further, the methods have inherent coupling of parallel and inseparable computations that provide both fault detection and verification of computed-data integrity.

The proposed encryption scheme is expected to provide security solutions for many applications and for client/server models that include:

    1. A low-cost-security platform; and
    2. An Open untrusted platform as the public cloud server indicated above.

The low-cost-security platform is comprised of two elements that provide the collaborative security:

    a) a Low-security High-performance component (e.g., PC (personal computer), STB (set top box) or mobile computing device), that performs homomorphic calculations, while hiding its secrets, and
    b) a High-security Low-performance element (e.g., low-cost SC (smart card), RFID (radio frequency identification), SIM (subscriber identification module), or secure OTP (one-time programmable memory) serving a Secure Execution Environment) that securely holds long term secrets and use them to perform few elementary calculations in a trusted environment.

This platform is labeled as (LHHL) or (LH)$^2$ platform. Such platform could define a secure client made up of STB and SC, a smartphone with SIM, or Connected TV with an Arm TrustZone (or other secure execution environment).

The Open platform is, for example, and without limiting the generality of the foregoing, a PC (or a process running on a PC) residing in a public network (cloud) that is presumed to be untrusted.

By way of example, applications may use Homomorphic Encryption of data for:

    Efficient PK-based (public/private key) signature, using Homomorphically-Modified OSS (HoMoSS). Under this new scheme OSS is made immune to Pollard attack (as described below) and essentially retains its efficiency in comparison with RSA signing operation. In such application the signer that holds the private key is a (LH)$^2$ platform. Verification of the PK signature can be made within an Open platform.

    Hiding symmetric keys. Verification of a Keyed Hashed (e.g., secure HMAC verification) by a (LH)$^2$ client - for instance, and without limiting the generality of the foregoing, an STB with SC - where the STB performs homomorphic computation of most of the verification operation, while the SC performs the final step requiring decryption using the secret symmetric key.

There is thus provided in accordance with an embodiment of the present invention a fully homomorphic method for randomizing an input, wherein all computations are over a commutative ring hereinafter denoted as CR, the method including receiving an input denoted INP including a sequence of k input elements in CR, performing either (a) or (b): (a) randomly choosing a secret nxn matrix in CR, hereinafter denoted as S, S being utilized as a symmetric randomizing key, wherein S includes an invertible matrix over CR, determining $S^{-1}$, for each set i of m distinct input elements among k elements including INP, wherein 0<m<k+1 and m<n selected from INP that are to be jointly randomized, and denoted hereinafter as $X_1, X_2, ...,X_m$, selecting n-m (n minus m) random numbers $Y_1, Y_2, ... Y_{n-m}$, in CR, where the input elements $X_1, X_2, ...,X_m$, at least one random number selected from among the set of random numbers $Y_1, Y_2, ... Y_{n-m}$, and, optionally, one or more constants are placed in a diagonal of an nxn diagonal matrix, denoted M, wherein, aside from the diagonal, matrix M is only populated by zeros, and determining random output $A_{im}$ for the m input elements in set i

denoted as $\{X_{im}\}= X_1, X_2, ...,X_m$, by utilizing a matrix-based randomizing and homomorphic transformation function hereinafter denoted MRHT, wherein

$$MRHT(\{X_{im}\}) = A_{im} = SM\,S^{-1} = \begin{pmatrix} a_{11} & \cdots & a_{1n} \\ \vdots & \ddots & \vdots \\ a_{n1} & \cdots & a_{nn} \end{pmatrix}$$

thereby producing a random output $A_{im}$ corresponding to the set i of m input elements $\{X_{im}\} = X_1, X_2, ...,X_m$, and (b) selecting n random numbers in CR, the n random numbers hereinafter denoted as $v_1, v_2,... ,v_n$, determining a public

polynomial $P(v)= \prod_{i=1}^{n}(v - v_i) = \sum_{j=0}^{n} C_j \cdot v^j \quad (C_n=1)$, selecting a polynomial-based randomizing and homomorphic transformation function hereinafter denoted PRHT $(X_{im})$, including any function in variable v of the form

$\sum_{j=0}^{n-1} a_{ij} \cdot v^j$ which satisfies the equations

$$\sum_{j=0}^{n-1} a_{ij} \cdot v_1^{\,j} = X_1 \,, \sum_{j=0}^{n-1} a_{ij} \cdot v_2^{\,j} = X_2 \,, ..... , \sum_{j=0}^{n-1} a_{ij} \cdot v_m^{\,j} = X_m,$$

choosing n-m random values in CR, for $a_{i,m}, a_{i,m+1} ..., a_{i,n-1}$, that would yield a solution for the above equations for $a_{i,0}$, $a_{i,1} ..., a_{i,m-1}$, and performing either (c) or (d): (c) producing a random output $A_{im}$ corresponding to input elements $X_1$, $X_2,... ,X_m$ including the set $(a_{i0}, a_{i1}, ..., a_{i\,n-1})$ and public set of coefficients $(C_0, C_1, ..., C_{n-1}, C_n)$ of P(v), wherein the public set of coefficients $(C_0, C_1, ..., C_{n-1}, C_n)$ are required for arithmetic performing operations with input elements, and (d) selecting for the given input elements $X_1$, $X_2$, ...., $X_m$, n-m random values $R_1, ..., R_{n-m}$ in CR that would solve the following n simultaneous equations $\sum_{j=0}^{n-1} a_{ij} \cdot v_1^{\,j} = X_1, \;\; \sum_{j=0}^{n-1} a_{ij} \cdot v_2^{\,j} = X_2 \,, \;\; .... , \;\; \sum_{j=0}^{n-1} a_{ij} \cdot v_m^{\,j} = X_m \,,$

$$\sum_{j=0}^{n-1} a_{ij} \cdot v_{m+1}^{\,j} = R_1 \quad, \quad \sum_{j=0}^{n-1} a_{ij} \cdot v_{m+2}^{\,j} = R_2 \quad .... , \quad \sum_{j=0}^{n-1} a_{ij} \cdot v_n^{\,j} = R_{n-m}$$

for unknowns $a_{i0}, a_{i1}, ... , a_{i\,n-1}$, thereby producing, for $X_1$, $X_2,... X_m$ a random text including the set $(a_{i0}, a_{i1}, ..., a_{i\,n-1})$ and public set $(C_0, C_1, ..., C_{n-1}, C_n)$ of P(v).

Further in accordance with an embodiment of the present invention the randomization of the input INP includes a successive application of a mix of functions $PRHT(X_i)$ and $MRHT(X_i)$, where Xi denotes a set of m distinct input elements of INP and wherein

$$MRHT(PRHT(X_i)) =( MRHT(\boldsymbol{a_{i0}}),\ MRHT(\boldsymbol{a_{i1}}), ... , \boldsymbol{M}RHT(\boldsymbol{a_{i\,n-1}})) =$$

$$=\left(\begin{pmatrix} a_{11} & \cdots & a_{1n} \\ \vdots & \ddots & \vdots \\ a_{n1} & \cdots & a_{nn} \end{pmatrix}_{i0} ,\begin{pmatrix} a_{11} & \cdots & a_{1n} \\ \vdots & \ddots & \vdots \\ a_{n1} & \cdots & a_{nn} \end{pmatrix}_{i1} , ... ., \begin{pmatrix} a_{11} & \cdots & a_{1n} \\ \vdots & \ddots & \vdots \\ a_{n1} & \cdots & a_{nn} \end{pmatrix}_{i\,n-1}\right),$$

and

$$PRHT(MRHT(X_i))=PRHT \left(\begin{pmatrix} a_{11} & \cdots & a_{1n} \\ \vdots & \ddots & \vdots \\ a_{n1} & \cdots & a_{nn} \end{pmatrix}\right) \text{ where } PRHT(a_{mj}) =$$

$$(a_0, a_1, ... , a_{n-1})_{mj}, \text{ therefore}$$

$$\mathbf{PRHT(MRHT(X_i))} = \begin{pmatrix} (a_0, a_1, \dots, a_{n-1})_{11} & \cdots & (a_0, a_1, \dots, a_{n-1})_{1n} \\ \vdots & \ddots & \vdots \\ (a_0, a_1, \dots, a_{n-1})_{n1} & \cdots & (a_0, a_1, \dots, a_{n-1})_{nn} \end{pmatrix}.$$

Still further in accordance with an embodiment of the present invention performing either one of (a) and (b): (a) receiving an output including a randomized $X_{im}$ input being an nxn diagonal matrix denoted hereinafter as $A_{im}$, over

$$A_{im} = MRHT(X_{im}) = S\,M\,S^{-1} = \begin{pmatrix} a_{11} & \cdots & a_{1n} \\ \vdots & \ddots & \vdots \\ a_{n1} & \cdots & a_{nn} \end{pmatrix}$$

CR , where $\qquad\qquad$ using S *to* determine

$$S^{-1} = \begin{pmatrix} s'_{11} & \cdots & s'_{1n} \\ \vdots & \ddots & \vdots \\ s'_{n1} & \cdots & s'_{nn} \end{pmatrix}$$

and determining $X_{im}$ by performing one of $S^{-1} \cdot A_{im} \cdot S = M$ where $X_1, X_2, \dots, X_m$ are the upper left elements of the resulting diagonal matrix above, alternatively $X_i = (1/s'_{i1}) \cdot \sum_{j=1}^{n} a_{j1} \cdot s'_{ij}$ for i=1,...m, and (b) receiving the randomized output for $X_{im}$ as $(a_{i0}, a_{i1}, \dots, a_{in-1})$ and using $v_1, v_2, \dots, v_m$ to determine the derandomized input $\sum_{j=0}^{n-1} a_{ij} \cdot v_1^{\,j} = X_1$ , $\sum_{j=0}^{n-1} a_{ij} \cdot v_2^{\,j} = X_2$ , $\dots$, $\sum_{j=0}^{n-1} a_{ij} \cdot v_m^{\,j} = X_m$.

Additionally in accordance with an embodiment of the present, the method including for $X_i$ including MRHT $(X_i)$ = $A_i$ receiving $A_1$ and $A_2$, and MRHT $(X_1)$ + MRHT $(X_2)$ = $A_1$ +$A_2$, and for $X_i$ including PRHT $(X_i)$ = $a_{i0}, a_{i1}, \dots, a_{i\,n-1}$ receiving PRHT $(X_1)$ = $a_{10}, a_{11}, \dots, a_{1n-1}$ and PRHT $(X_2)$ = $a_{20}, a_{21}, \dots, a_{2\,n-1}$ and $C_0, C_1, \dots, C_{n-1}, C_n$ *of*

$$P(v) = \sum_{j=0}^{n} C_j \cdot v^j \quad (C_n = 1),$$ and PRHT $(X_1)$ + PRHT $(X_2)$ = $a_{10} + a_{20}$ , $a_{11} + a_{21}$ , $\dots$ , $a_{1\,n-1} + a_{2\,n-1}$ .

Moreover in accordance with an embodiment of the present invention, the method including for $X_i$ including MRHT $(X_i)$ = $A_i$ receiving $A_1$ and $A_2$, and MRHT $(X_1) \cdot$ MRHT $(X_2)$ = $A_1 \cdot A_2$, and for $X_i$ including PRHT $(X_i)$ = $a_{i0}, a_{i1}, \dots, a_{i\,n-1}$ receiving PRHT $(X_1)$ = $a_{10}, a_{11}, \dots, a_{1\,n-1}$ and PRHT $(X_2)$ = $a_{20}, a_{21}, \dots, a_{2\,n-1}$ and $C_0, C_1, \dots, C_{n-1}, C_n$ *of*

$$P(v) = \sum_{j=0}^{n} C_j \cdot v^j \quad (C_n = 1),$$ and PRHT $(X_1) \cdot$ PRHT $(X_2)$ = $r_{10}, r_{11}, \dots, r_{1\,n-1}$, the coefficients of the resulting n-1 order polynomial r(v), where $r(v) = ((\sum_{j=0}^{n-1} a_{1j} \cdot v^j) \cdot (\sum_{j=0}^{n-1} a_{2j} \cdot v^j)\,) \bmod \sum_{j=0}^{n} C_j \cdot v^j.$

Further in accordance with an embodiment of the present invention for $X_i$ including MRHT $(X_i)$ = $A_i$ receiving $A_1$ and $A_2$, 1/ MRHT $(X_2) = A_2^{-1}$ and MRHT $(X_1)$ / MRHT $(X_2) = A_1 \cdot A_2^{-1}$ for $X_i$ including PRHT $(X_i)$ = $a_{i0}, a_{i1}, \dots a_{i\,n-1}$ receiving PRHT $(X_1)$ = $a_{10}, a_{11}, \dots, a_{1\,n-1}$ and PRHT $(X_2)$ = $a_{20}, a_{21}, \dots, a_{2\,n-1}$ and $C_0, C_1, \dots, C_{n-1}, C_n$ *of*

$$P(v) = \sum_{j=0}^{n} C_j \cdot v^j \quad (C_n = 1),$$ deriving 1/PRHT$(X_2)$ = $u_{20}, u_{21}, \dots, u_{2\,n-1}$ by calculating $((\sum_{j=0}^{n-1} u_{2j} \cdot v^j)$ · $(\sum_{j=0}^{n-1} a_{2j} \cdot v^j)\,) \bmod \sum_{j=0}^{n} C_j \cdot v^j = 1$ in terms of n unknown coefficients $u_{2j}$, (j = 0, ...,n - 1), thereby determining

$$\sum_{j=0}^{n-1} g_{2j}( u_{20}, u_{21}, \dots, u_{2\,n-1},\ a_{10}, a_{21}, \dots, a_{2\,n-1},\ c_{10}, c_{21}, \dots, c_{2\,n-1,}) \ \cdot v^j,$$

wherein $g_{2j}(\ )$ is a linear combination of a plurality of n unknowns $u_{2j}$, and solving n derived equations $g_{20}(\ )$ =1, and $g_{2j}(\ )$ = 0 for j=1,...,n-1 for all $u_{2j}$ j=0,...,n-1, and

$$\mathrm{PRHT}\,(\,X_1)\,/\,\mathrm{PRHT}\,(\,X_2) = \mathrm{PRHT}\,(\,X_1)\,\cdot\,(\,1/\mathrm{PRHT}(\,X_2)\,) =$$

$$((\textstyle\sum_{j=0}^{n-1} a_{1j} \cdot v^j) \cdot (\textstyle\sum_{j=0}^{n-1} u_{2j} \cdot v^j)\,)\bmod \textstyle\sum_{j=0}^{n} C_j \cdot v^j.$$

Still further in accordance with an embodiment of the present invention at least one of the randomized inputs comprises a cryptographic key.

Additionally in accordance with an embodiment of the present invention the cryptographic key comprises an AES key.

Moreover in accordance with an embodiment of the present invention the at least one of the randomized inputs comprises a mod N-number polynomial coefficient.

Further in accordance with an embodiment of the present invention the mod N-number polynomial coefficient is used for a Private Function Key Generation.

Still further in accordance with an embodiment of the present invention the mod N-number polynomial coefficient is used for a private hash-based message authentication code.

Moreover in accordance with an embodiment of the present invention the mod N-number polynomial coefficient is used for generating an OSS signature.

Further in accordance with an embodiment of the present invention input includes a plain text, the output includes a cipher text, and all computations are performed modulo N over a ring $Z_N$, where N is a product of two prime numbers, and matrix S includes symmetric encryption key, wherein the encryption functions are denoted as MEnc and PEnc correspond to MRHT and PRHT, respectively.

Additionally in accordance with an embodiment of the present invention the encryption of the plain text includes a successive application of a mix of encryption functions PEnc = PRHT($X_i$) and MEnc = MRHT($X_i$), wherein

$$\mathrm{MEnc}(\mathrm{PEnc}(X_i)) = (\,M\mathrm{Enc}(\boldsymbol{a_{i0}}),\ \mathrm{MEnc}(\boldsymbol{a_{i1}}),\ldots,\boldsymbol{M\mathrm{Enc}(a_{i\,n-1})}) =$$

$$=(\begin{pmatrix} a_{11} & \cdots & a_{1n} \\ \vdots & \ddots & \vdots \\ a_{n1} & \cdots & a_{nn} \end{pmatrix}_{i0},\begin{pmatrix} a_{11} & \cdots & a_{1n} \\ \vdots & \ddots & \vdots \\ a_{n1} & \cdots & a_{nn} \end{pmatrix}_{i1},\ldots.,\begin{pmatrix} a_{11} & \cdots & a_{1n} \\ \vdots & \ddots & \vdots \\ a_{n1} & \cdots & a_{nn} \end{pmatrix}_{i\,n-1}),$$

and

$$\mathrm{PEnc}(\mathrm{MEnc}(X_i)) = \mathrm{PEnc}\,(\begin{pmatrix} a_{11} & \cdots & a_{1n} \\ \vdots & \ddots & \vdots \\ a_{n1} & \cdots & a_{nn} \end{pmatrix})$$

where

$$PEnc(a_{ij}) = (a_0, a_1, \ldots, a_{n-1})_{ij}.$$

Moreover in accordance with an embodiment of the present invention the received output includes a cipher text denoted C, the cipher text C being produced according to the method described hereinabove, and the derandomized input includes a plain text, and all computations are performed modulo N over a ring $Z_N$, where N is a product of two prime numbers, and matrix S includes symmetric encryption key.

Further in accordance with an embodiment of the present invention for addition of a pair of cipher text outputs Ci and Cj, Ci and Cj comprising cipher texts produced according to the method described herein above, the method comprising adding Ci and Cj as described above wherein all computations are performed modulo N over a ring $Z_N$, where N is a product of two prime numbers, and matrix S comprises a symmetric encryption key.

Still further in accordance with an embodiment of the present invention for multiplication of a pair of cipher text outputs Ci and Cj, Ci and Cj comprising cipher texts produced according to the method described herein above, the method including multiplying Ci and Cj as described above, wherein all computations are performed modulo N over a ring $Z_N$, where N is a product of two prime numbers, and matrix S includes a symmetric encryption key.

Additionally in accordance with an embodiment of the present invention for division of a pair of cipher texts outputs Ci and Cj, Ci and Cj comprising cipher texts produced according to the method described herein above, the method including dividing Ci and Cj as described above wherein all computations are performed modulo N over a ring $Z_N$, where N is a product of two prime numbers, and matrix S includes the symmetric encryption key.

Moreover in accordance with an embodiment of the present invention for verifying that a returned result of a calculation performed by a third party is valid, the result being performed by the method of any of the above claims, the result being denoted $R^*_M$ for a result returned using an MRHT or MEnc function denoted as M, and the result being denoted $R^*_P$ for a result returned using a PRHT or PEnc function denoted as P, the result including a result of a homomorphic calculation denoted $f$ performed on $A_1, A_2, \dots, A_k$ wherein $A_i$ is equal to one of $M(X_i)$ and $P(X_i)$, $f(A_1, A_2, \dots, A_k)$ is equal to one of M $(f(X_1, X_2, \dots, X_k)) = f(M(X_1), M(X_2), \dots, M(Xk))$ and $P(f(X_1, X_2, \dots, X_k)) = f(P(X_1), P(X_2), \dots, P(X_k))$ the method including receiving the result of $f(A_1, A_2, \dots, A_k)$ in the one of the forms $M(f(X_1, X_2, \dots, X_K)) =$

$$S \begin{pmatrix} f(\ X_1, X_2, \dots, X_K).. & 0.. & 0 \\ \cdot & \cdot & \cdot \\ 0.. & f(\ Y_{m1}, Y_{m2}, \dots, Y_{mk}).. & 0 \\ \cdot & \cdot & \cdot \\ 0.. & 0.. & f(Y_{n-1,1}, Y_{n-1,2}, \dots, Y_{n-1,k}) \end{pmatrix} S^{-1}$$

$= R^*_M$, and $f(A_1, A_2, \dots, A_k)$ in the form of $a^*_0, a^*_1 \dots, a^*_{n-1}, = R^*_P$, in the case where the result is in the form of $R^*_M$ computing $f(Y_{m1}, Y_{m2}, \dots, Y_{mk})$, denoted as Q, for any m, m=1,2,...,n-1 where $Y_{mj}$ includes the $m^{th}$ random value used in one of encrypting, and randomizing $X_j$, performing one of decrypting, and derandomizing $R^*_M$ thereby determining $f(Y_{m1}, Y_{m2}, \dots, Y_{mk})$, denoted as E from the resulting matrix diagonal of m+1 row, and deeming the result of the computation of f(Xi) valid if E equals to Q, and in the case where the result is in the form of $R^*_P$ computing $f(Y_{m1}, Y_{m2}, \dots, Y_{mk})$, denoted as Q, for any m , m=1,2,...,n-1 where $Y_{mj}$ includes the $m^{th}$ random value used in one of encrypting, and randomizing $X_j$, performing one of decrypting, and derandomizing $R^*_P$, thereby determining

$\sum_{j=0}^{n-1} a^*_j \cdot v_{m+1}{}^j = f(R_{m1}, R_{m2}, \dots, R_{mk})$, denoted as E, and deeming the result of the computation of $f(X_1, X_2, \dots, X_K)$ valid if E equals Q.

## BRIEF DESCRIPTION OF THE DRAWINGS

The present invention will be understood and appreciated more fully from the following detailed description, taken in conjunction with the drawings in which:

Fig. 1 is a simplified depiction of a low security high performance device interacting with a high security low performance device constructed and operative in accordance with an embodiment of the present invention;
Fig. 2 is a depiction of an embodiment of the system of Fig. 1 where a private algorithm and a public input are used; and
Figs. 3A - 3E are data flow diagrams depicting methods for the various embodiments of the system of Fig. 1.

The present invention will be understood and appreciated more fully from the following detailed description, taken in conjunction with the Appendices in which:

Appendix A is a paper published at eprint.iacr.org/2012/637.pdf, entitled Efficient Methods for Practical Fully-Homomorphic Symmetric-key Encryption, Randomization, and Verification, by the inventors of the invention described herein, and which provides a mathematical approach, including proofs, to the method and security described herein.

## DETAILED DESCRIPTION OF AN EMBODIMENT

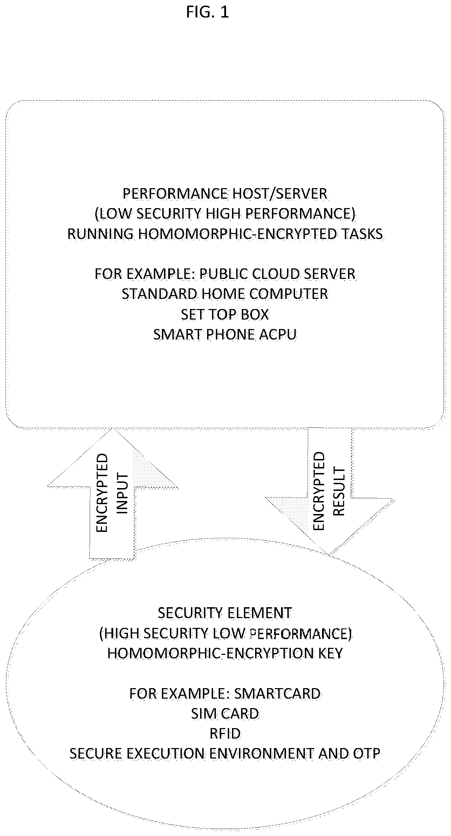

Reference is made to Fig. 1, which is a simplified depiction of a low security high performance device interacting with a high security low performance device constructed and operative in accordance with an embodiment of the present invention.

As noted above, the present provides several embodiments of non-deterministic fully homomorphic methods for:

Practical (highly efficient) fully homomorphic:

    A. Symmetric randomization of any data in a commutative ring, CR;
    B. Symmetric Encryption of special data, (mod-N in $Z_N$); and
    C. Coupling of computations

The present application describes the following embodiments of the present invention:

Randomization of any data

In this case the data and operations are over CR. The application of the method to the data results in Randomized and Homomorphic Transformation (RHT) of the data. The result can be an input to a polynomial function consisting of additions and multiplications, e.g., AES algorithms that run within a silicon chip. Application of RHT to the secret AES key protects against Side Channel Attacks (e.g., Differential Power Attack) aimed at revealing the clear AES-key.

Efficient Homomorphic encryption of mod-N numbers in $Z_N$

Secure use in open untrusted platforms of both:

    secrets (symmetric keys); and
    a family of private algorithms.

Examples are a keyed-hash (where the key is secret), and a Private-Function for Key-Generation (PFKG) whose input is public (e.g., a broadcast ECM (entitlement control message) is processed by a secret PFKG running in the STB; or a comparable component in the smart card). The private function can be any polynomial with secret coefficients (and a0=0).

Most of the security workload will be carried out by a low-security host while the homomorphic-encryption key is kept by a Low-performance High-security component.

Enhanced protection for certain algorithms, e.g., securing OSS (public key) signature from Pollard attacks.

Coupling of computations

Verification of computational integrity is provided by utilizing inseparable coupling, i.e., entanglement, of parallel, multiple independent computations, thereby providing protection against fault attacks.

## I. **Definitions**

N is a number which is a product of two primes P and Q; (for security reasons P and Q are presumed secret); it is assumed that factoring N into primes is a computationally difficult problem.

The message X to be encrypted consists of a sequence of k modulo N numbers $X_1$ , $X_2$, ... $X_k$ in $Z_N$.

$Z_N$ is the ring of residues modulo N.

CR is a commutative ring.

$M_{nXn}$ ($Z_N$) is the ring of nXn matrices over $Z_N$.

$$P(v) = \prod_{i=1}^{n}(v - v_i) = \sum_{j=0}^{n} C_j \cdot v^j \quad (C_n = 1)$$

over $Z_N$ where $Z_N[v]/P(v)$ is the polynomial ring mod P(v).

In general, the method uses one $X_i$ per method application to allow for computation of (arbitrary) multivariate input in functions whose operations are addition, multiplication and division. However, if, for example, there are two known multivariate functions with two distinct sets of inputs - ($X_1$, $X_2$, ...,$X_h$) and ($X_{h+1}$, $X_{h+2}$, ...,$X_L$), then no pair of variables in each of the input sets shall be encrypted (or randomized) jointly, i.e., with a single application of the method. In general, the methods discussed herein are discussed under the presumption of one variable.

Additionally, it is appreciated that the method described herein may be run on dedicated software, dedicated hardware, non-dedicated hardware, or some combination thereof. For example, and without limiting the generality of the foregoing, steps which are described herein as "receiving an input" may be operative to run in software which is running on appropriate hardware. Alternatively, the step of receiving an input may be running in a dedicated circuit of a specialized chip. Further alternatively, there may be a hardware based processor which can, for certain operations be utilized to run the steps of "receiving an input". The same would be true of the other steps described in the various methods and procedures described herein.

## II. **Fully Homomorphic Randomization of Arbitrary Data**

The randomization of arbitrary data over CR is presumed to take place in a secure environment as it is not considered a strong encryption. One of its purposes is to thwart side-channel attacks on algorithm execution to get information on sensitive data such as symmetric cipher keys, e.g., an AES encryption key. Such attacks presume that the secret data, e.g., the key, is static over repeated runs of the AES algorithm to cumulatively glean information of the key and the attack also assumes that the attacker knows the inputs processed by the algorithm (or, alternatively, the outputs produced as the outcome of the algorithm). However, in this non-deterministic approach the randomized-key changes per cipher run thereby foiling such attack. (The inputs to the algorithm are randomized and therefore operations are carried over randomized values. The algorithm manipulates only randomized data and randomized keys, the data manipulated by the algorithm is not exposed outside the boundaries of the secure environment. Data which is exposed outside of the secure environment is data which has already been derandomized according to the methods disclosed herein.)

By way of example, randomization may be useful to thwart side channel attacks, for example, and without limiting the generality of the foregoing, differential power analysis (DPA) attacks. DPA is a concrete example of a side channel attack. DPA requires interaction between unknown key-bits and known data-bits. The attacker chooses and inputs the data bits into the cipher, and learns about their interaction with the key-bits by measuring the electrical current that the enciphering device consumes. Then by using statistical methods, the attacker can retrieve the key-bits previously unknown to him.

Randomization may also be useful against fault attacks. Fault attacks rely on the attacker's ability to induce a fault into the cryptographic computation. Then the attacker observes the results of the faulty computation, compares it to the results of non-faulty computations and attempts to deduce the value of unknown key-bits.

Randomized and homomorphic transformation (RHT) - is a transformation T (and its inverse $T^{-1}$) which allows simple operations (e.g., addition, multiplication) on transformed data. The transformation is randomized since it takes an input value, appends to it random data, and then applies the transformation to it. The transformation is referred to as 'homomorphic' because it allows operations in the transformed domain (although the operations themselves are also transformed). Consider an input value X, then T(X, r) randomizes X with r, and transforms it. RHT should satisfy:

$$X + Y = T^{-1} \left( T(X,r1) + T(Y,r2) \right)$$

and

$$X * Y = T^{-1} \left( T(X,r1) * T(Y,r2) \right).$$

In an embodiment of the present invention for countering side channel attacks by using the randomization property of RHT, the homomorphic property provides for secure and efficient protection as there is no need to successively remove errors due to computation with randomized data.

Additionally RHT computes two or more values in a single inseparable step (i.e. any impact on one of the values will perforce impact the second value).

Furthermore, fault attacks may be countered using the computational coupling of RHT:

RHT can be done for a homomorphic evaluation of a function requiring a secure environment for its execution; and RHT can be applied for a homomorphic algorithm that requires no secure execution. The main application is for the data to be randomized, i.e., statistically 'flattened'.

Therefore, for all computations are over CR, the method of fully homomorphic randomization of arbitrary data comprises:

receiving an input denoted X comprising a sequence of k input elements $X_1, X_2, X_3, ..., X_i, ..., X_k$ in CR and then performing one of the following:

MATRIX METHOD

The most generalized statement of the matrix method is:

An input, denoted INP, is received. INP comprises a sequence of k input elements in CR.

A secret nxn matrix is selected in CR, the matrix hereinafter being denoted S, wherein S is utilized as a symmetric randomizing key. S comprises an invertible matrix over CR. $S^{-1}$ is determined.

For each set i of m distinct input elements wherein 0<m<k+1 and m<n selected from INP that are to be jointly randomized, and denoted hereinafter as $X_{i1}$ $X_{i2}$, ...,$X_{im}$, wherein $X_{i1}$ $X_{i2}$, ...,$X_{im}$ comprise any subset of input elements $X_1, X_2, X_3, ...,X_i,..., X_k$. For ease of discussion, the input elements discussed hereinafter are denoted as $X_1, X_2, X_3, ...,X_m$.

Additionally, n-m (n minus m) random numbers $Y_1, Y_2, ... Y_{n-m}$, are selected in CR for each input set of i of m distinct elements, where the input elements $X_1, X_2, ...,X_m$ and random numbers $Y_1, Y_2, ... Y_{n-m}$ are placed in order on the diagonal of a nxn diagonal matrix:

$$
\begin{pmatrix}
X_1 & 0 & & & \cdots\cdots & \cdots & & 0 \\
0 & X_2 & 0 & & & \cdots & & \vdots \\
\vdots & 0 & \ddots & 0 & & \cdots & & \\
& & \ddots & X_m & & 0 & \cdot\cdot & \\
& & & 0 & Y_1 & \ddots & \cdot\cdot & 0 \\
& \vdots & & \vdots & 0 & Y_2 & 0 & \\
& & & & \vdots & \ddots & \ddots & 0 \\
0 & 0 & & \cdots & & & 0 & Y_{n-m}
\end{pmatrix}
$$

Random output $A_{im}$ is determined for the m input elements in set i denoted as $\{X_{im}\}= X_1, X_2, ...,X_m$ , by utilizing a matrix-based randomizing and homomorphic transformation function hereinafter denoted MRHT, wherein:

$$
MRHT(\{X_{im}\}) = A_{im} =
$$

$$
S
\begin{pmatrix}
X_1 & 0 & & & \cdots\cdots & \cdots & & 0 \\
0 & X_2 & 0 & & & \cdots & & \vdots \\
\vdots & 0 & \ddots & 0 & & \cdots & & \\
& & \ddots & X_m & & 0 & \cdot\cdot & \\
& & & 0 & Y_1 & \ddots & \cdot\cdot & 0 \\
& \vdots & & \vdots & 0 & Y_2 & 0 & \\
& & & & \vdots & \ddots & \ddots & 0 \\
0 & 0 & & \cdots & & & 0 & Y_{n-m}
\end{pmatrix}
S^{-1} =
\begin{pmatrix}
a_{11} & \cdots & a_{1n} \\
\vdots & \ddots & \vdots \\
a_{n1} & \cdots & a_{nn}
\end{pmatrix}
$$

thereby producing a random output $A_{im}$ corresponding to the i set of m input elements $\{X_{im}\} =X_1, X_2, ...,X_m$.

Those skilled in the art will appreciate that trivial variations of the matrix (denoted M):

$$
M =
\begin{pmatrix}
X_1 & 0 & & & \cdots\cdots & \cdots & & 0 \\
0 & X_2 & 0 & & & \cdots & & \vdots \\
\vdots & 0 & \ddots & 0 & & \cdots & & \\
& & \ddots & X_m & & 0 & \cdot\cdot & \\
& & & 0 & Y_1 & \ddots & \cdot\cdot & 0 \\
& \vdots & & \vdots & 0 & Y_2 & 0 & \\
& & & & \vdots & \ddots & \ddots & 0 \\
0 & 0 & & \cdots & & & 0 & Y_{n-m}
\end{pmatrix}
$$

such as:

dispersing constants among the values on the diagonal; and
changing the order (i.e. intermixing the $X_i$s and the $Y_i$s), will not change the basic method as defined herein. By way of example, and without limiting the generality of the foregoing, the following may all be exemplary trivial variations of the matrix:

The diagonal is: $X_1, X_2, ... X_m, 0, Y_1, Y_2, ... Y_m$.
The diagonal is: $X_1, 0, X_2, 0, ... X_m, 0, Y_1, 0, Y_2, 0, ... Y_m, 0$.
The diagonal is: $X_1, Y_1, X_2, Y_2, ... X_m, Y_m$.

Additionally, adding rows and columns with zeros around the matrix diagonal, i.e.:

$$\begin{pmatrix} X_1 & 0 & & & \cdots\cdots & \cdots & & 0 \\ 0 & X_2 & 0 & & & \cdots & & \vdots \\ \vdots & 0 & \ddots & 0 & & \cdots & & \\ & & \ddots & X_m & & 0 & .. & \\ & & & 0 & Y_1 & \ddots & .. & 0 \\ \vdots & & \vdots & & 0 & \ddots & 0 & \\ & & & \vdots & \ddots & Y_{n-m} & 0 & \\ 0 & 0 & & \cdots & & & 0 & 0 \end{pmatrix}$$

would also be a trivial variation which will not change the basic method as defined herein.
A less generalized statement of the matrix method is:

for each input element $X_i$, selecting n-1 random numbers $Y_1, Y_2, ... Y_{n-1}$ , in CR, where the input element $X_i$ and random numbers $Y_1, Y_2, ... Y_{n-1}$ are placed in order on the diagonal of a nxn diagonal matrix;
a secret nxn matrix in CR is randomly chosen, the secret nxn matrix hereinafter denoted as S, S being utilized as a symmetric randomizing key, wherein S comprises an invertible matrix over CR;
determining $S^{-1}$; and
a random output $A_i$ is determined for input element $X_i$ by utilizing a matrix-based randomizing and homomorphic transformation function, method hereinafter denoted MRHT, wherein:

$$MRHT(X_i) = A_i = S \begin{pmatrix} X_i.. & 0.. & & 0 \\ . & . & & . \\ 0.. & Y_l.. & & 0 \\ . & . & & . \\ 0.. & 0.. & & Y_{n-1} \end{pmatrix} S^{-1} = \begin{pmatrix} a_{11} & \cdots & a_{1n} \\ \vdots & \ddots & \vdots \\ a_{n1} & \cdots & a_{nn} \end{pmatrix}$$

thereby producing a random output $A_i$ corresponding to input element $X_i$.

It is appreciated that the above method may be generalized. Instead of selecting n-1 random numbers $Y_1, Y_2, ... Y_{n-1}$ , in CR for an input element $X_i$, for a set of m (where $1 \leq m \leq k$; and m < n) input elements, n - m random numbers $Y_1, Y_2, ... Y_{n-m}$ are selected.

POLYNOMIAL METHOD

The most generalized statement of the polynomial method is:

n random numbers in CR are selected, the n random numbers hereinafter denoted as $v_1, v_2,... ,v_n$;

a public polynomial $P(v) = \prod_{i=1}^{n}(v - v_i) = \sum_{j=0}^{n} C_j \cdot v^j$ ($C_n$=1) is determined;
for each set i of m distinct input elements wherein 0<m<k+1 and m<n selected from INP that are to be jointly randomized, and denoted hereinafter as $X_{i1}$ $X_{i2}$, ...,$X_{im}$, wherein $X_{i1}$, $X_{i2}$, ...,$X_{im}$ comprise any subset of input elements $X_1$,$X_2$, $X_3$, ...,$X_i$,..., $X_k$. For ease of discussion, the input elements discussed hereinafter are denoted as $X_1$,$X_2$, $X_3$, ...,$X_m$;

a polynomial-based randomizing and homomorphic transformation function hereinafter denoted PRHT ($X_1$,$X_2$, $X_3$, ...,$X_m$) is selected, comprising any function in variable v of the form $\sum_{j=0}^{n-1} a_{ij} \cdot v^j$ which satisfies the equation

$$\sum_{j=0}^{n-1} a_{ij} \cdot v_1{}^j = X_1 \,, \sum_{j=0}^{n-1} a_{ij} \cdot v_2{}^j = X_2 \,, ..... , \sum_{j=0}^{n-1} a_{ij} \cdot v_m{}^j = X_m;$$

n-m (n minus m) random values are chosen in CR, for $a_{i,m}$, $a_{i,m+1}$ ... , $a_{i,n-1}$, that would yield a solution for the above equations for $a_{i,0}$, $a_{i,1}$ ..., $a_{i,m-1}$; and then one of the following is performed:

a random output $A_{im}$ corresponding to input elements $X_1$, $X_2$,... ,$X_m$ is produced wherein $A_{im}$ comprises comprising the set ($a_{i0}$, $a_{i1}$, ..., $a_{i\,n-1}$) and public set of coefficients ($C_0$, $C_1$, ..., $C_{n-1}$, $C_n$) of P(v), wherein the set of coefficients ($C_0$, $C_1$, ..., $C_{n-1}$, $C_n$) are required for arithmetic performing operations with input elements; and for the given input elements $X_1$ , $X_2$ , ...., $X_m$, n-m (n minus m) random values $R_1$, ..., $R_{n-m}$ are selected in CR that would solve the following n simultaneous equations:

$$\sum_{j=0}^{n-1} a_{ij} \cdot v_1{}^j = X_1 \,, \qquad \sum_{j=0}^{n-1} a_{ij} \cdot v_2{}^j = X_2 \,, \quad {}_{,....,} \qquad \sum_{j=0}^{n-1} a_{ij} \cdot v_m{}^j = X_m \,,$$

$$\sum_{j=0}^{n-1} a_{ij} \cdot v_{m+1}{}^j = R_1 \quad , \; \sum_{j=0}^{n-1} a_{ij} \cdot v_{m+2}{}^j = R_2 \,, \quad {}_{...,} \quad \sum_{j=0}^{n-1} a_{ij} \cdot v_n{}^j = R_{n-m} \;_{for}$$

unknowns $a_{i0}$, $a_{i1}$, ... , $a_{i\,n-1}$, thereby producing, for $X_1$ , $X_2$,... $X_m$ a random text comprising the set ($a_{i0}$, $a_{i1}$, ..., $a_{i\,n-1}$) and public set ($C_0$, $C_1$, ..., $C_{n-1}$, $C_n$) of P(v).

A less generalized statement of the polynomial method is:

n random numbers in CR are selected, the n random numbers hereinafter denoted as $v_1$, $v_2$,... ,$v_n$;

a public polynomial $P(v) = \prod_{i=1}^{n}(v - v_i) = \sum_{j=0}^{n} C_j \cdot v^j$ ($C_n$=1) is determined;

a polynomial-based randomizing and homomorphic transformation function hereinafter denoted PRHT ($X_i$) is selected, comprising any function in variable v of the form $\sum_{j=0}^{n-1} a_{ij} \cdot v^j$ which satisfies the equation $\sum_{j=0}^{n-1} a_{ij} \cdot v_1{}^j = X_i;$

n-1 random values in CR are chosen, for $a_{i1}$, $a_{i2}$ ...,$a_{in-1}$, of $X_i$ thereby determining $a_{i0} = X_i - \sum_{j=1}^{n-1} a_{ij} \cdot v_1{}^j;$ and

a randomized output corresponding to input element $X_i$ is produced, the random output comprising the set ($a_{i0}$, $a_{i1}$, ... , $a_{i\,n-1}$) and public set of coefficients ($C_0$, $C_1$, ..., $C_{n-1}$, $C_n$) of P(v), wherein the set of coefficients ($C_0$, $C_1$, ..., $C_{n-1}$, $C_n$) are required for arithmetic performing operations with the input element $X_i$;

or, alternatively,

selecting n-1 random values $R_{i1}$, ..., $R_{i\,n-1}$ in CR for the given $X_i$ and solving n simultaneous equations:

$$\sum_{j=0}^{n-1} a_{ij} \cdot v_1{}^j = X_i \quad , \; \sum_{j=0}^{n-1} a_{ij} \cdot v_2{}^j = R_{i1} \,,...., \; \sum_{j=0}^{n-1} a_{ij} \cdot$$

$v_n{}^j = R_{i\,n-1}$ for unknowns $a_{i0}$, $a_{i1}$, ... , $a_{i\,n-1}$, thereby producing, as above, for $X_i$ a randomized text comprising the set ($a_{i0}$, $a_{i1}$, ... , $a_{i\,n-1}$) and public set ($C_0$, $C_1$, ..., $C_{n-1}$, $C_n$) of P(v).

By way of example, the input X is transformed into a 2x2 matrix M[x] as follows (S is a random, invertible matrix):

$$M[X] = S \begin{pmatrix} X & 0 \\ 0 & Y \end{pmatrix} S^{-1}$$

where the element Y ($\neq$ 0) can be selected at random or selected to be a predefined value. Elements are added by matrix addition and multiplied by matrix multiplication. Note that popular cryptographic primitives such as the AES cipher can be easily expressed and calculated over the transformed elements described above, for example, and without limiting the generality of the foregoing, take the CR to be $F_{256}$ the extension field of degree eight over the field with two elements $F_2$ and express the AES operations as an algebraic operation over $F_{256}$. Note, however, that the actual, final result of the AES cipher must be extracted from the transformed elements (i.e., the matrices). This is done by decrypting the resulting matrix (i.e., multiplying M[x] by $S^{-1}$ from the left and by S from the right), and taking the upper left value as the actual resulting AES cipher text.

Countering DPA: When using a randomized transformation (i.e., Y is selected at random) for a cipher such as AES, the randomization is applied to both inputs - the key elements and the text elements. Since the attacker does not know the exact value of his transformed data elements (as they were randomized under the scheme), DPA can no longer work.

Countering fault attacks: The scheme has the property that it turns every operation on elements into an extended inseparable calculation over 2x2 matrices. Therefore by inserting specific pre-defined values for Y, one can verify that a computation like the AES cipher was carried out correctly without faults. This is done, e.g., by applying the matrix method with the preset Y, and then comparing the results in position Y to the expected result.

It is appreciated that the randomization of the input X comprises a successive application of a mix of functions $\mathrm{PRHT}(X_i)$ and $\mathrm{MRHT}(X_i)$, wherein: the randomization of the input X comprises a successive application of a mix of functions $\mathrm{PRHT}(X_i)$ and $\mathrm{MRHT}(X_i)$, wherein:

$$\mathrm{MRHT}(\mathrm{PRHT}(X_i)) = ( MRHT(\boldsymbol{a_{i0}}), \ \mathrm{MRHT}(\boldsymbol{a_{i1}}), \dots, \boldsymbol{M}\mathrm{RHT}(\boldsymbol{a_{i\,n-1}})) =$$

$$= \left( \begin{pmatrix} a_{11} & \cdots & a_{1n} \\ \vdots & \ddots & \vdots \\ a_{n1} & \cdots & a_{nn} \end{pmatrix}_{\boldsymbol{i0}}, \begin{pmatrix} a_{11} & \cdots & a_{1n} \\ \vdots & \ddots & \vdots \\ a_{n1} & \cdots & a_{nn} \end{pmatrix}_{\boldsymbol{i1}}, \dots, \begin{pmatrix} a_{11} & \cdots & a_{1n} \\ \vdots & \ddots & \vdots \\ a_{n1} & \cdots & a_{nn} \end{pmatrix}_{\boldsymbol{i\,n-1}} \right);$$

and $\mathrm{PRHT}(\mathrm{MRHT}(X_i)) = \mathrm{PRHT} \left( \begin{pmatrix} a_{11} & \cdots & a_{1n} \\ \vdots & \ddots & \vdots \\ a_{n1} & \cdots & a_{nn} \end{pmatrix} \right)$ where $\mathrm{PRHT}(a_{pj}) = (a_{i0}, a_{i1}, \dots, a_{i\,n-1})_{pj}$, therefore (bearing in mind that the index i of $X_i$ and in $a_{i0}, a_{i1}, \dots, a_{i\,n-1}$ should not be confused with the index i in $a_{ij}$):

$$\mathbf{PRHT}(\mathrm{MRHT}(X_i)) = \begin{pmatrix} (a_{i0}, a_{i1}, \dots, a_{i\,n-1})_{11} & \cdots & (a_{i0}, a_{i1}, \dots, a_{i\,n-1})_{1n} \\ \vdots & \ddots & \vdots \\ (a_{i0}, a_{i1}, \dots, a_{i\,n-1})_{n1} & \cdots & (a_{i0}, a_{i1}, \dots, a_{i\,n-1})_{nn} \end{pmatrix}.$$

**Derandomizing The Randomized Input**

One of the following is performed:

MATRIX METHOD

To derandomize a randomized input produced according to the most generalized matrix method of randomization given above:

an output comprising a randomized set of inputs, $\{X_{im}\} = X_1, X_2, \dots, X_m$, is received, the input being an nxn diagonal matrix denoted hereinafter as $A_{im}$, over CR, where:

$$A_{im} = MRHT(X_{im}) = S \begin{pmatrix} X_1 & 0 & & & \cdots\cdots & \cdots & & 0 \\ 0 & X_2 & 0 & & & & \cdots & \vdots \\ \vdots & 0 & \ddots & 0 & & \cdots & & \\ & & \ddots & X_m & & 0 & \ddots & \\ & & & 0 & Y_1 & \ddots & \ddots & 0 \\ \vdots & & \vdots & & 0 & Y_2 & 0 & \\ & & & & \vdots & \ddots & \ddots & 0 \\ 0 & 0 & & \cdots & & & 0 & Y_{n-m} \end{pmatrix} S^{-1}$$

$$= \begin{pmatrix} a_{11} & \cdots & a_{1n} \\ \vdots & \ddots & \vdots \\ a_{n1} & \cdots & a_{nn} \end{pmatrix}$$

$$S^{-1} = \begin{pmatrix} s'_{11} & \cdots & s'_{1n} \\ \vdots & \ddots & \vdots \\ s'_{n1} & \cdots & s'_{nn} \end{pmatrix}$$

S is used determine                    S and determining $X_{im}$

Then, the following is performed:

$$S^{-1} \cdot A_i \cdot S = \begin{pmatrix} X_1 & 0 & & & \cdots\cdots & \cdots & & 0 \\ 0 & X_2 & 0 & & & & \cdots & \vdots \\ \vdots & 0 & \ddots & 0 & & \cdots & & \\ & & \ddots & X_m & & 0 & \ddots & \\ & & & 0 & Y_1 & \ddots & \ddots & 0 \\ \vdots & & \vdots & & 0 & Y_2 & 0 & \\ & & & & \vdots & \ddots & \ddots & 0 \\ 0 & 0 & & \cdots & & & 0 & Y_{n-m} \end{pmatrix}$$

where $X_1, X_2,\dots ,X_m$ is in the upper left element of the matrix,
**[0080]**  Equivalently the following formula can be used for more efficient computation to determine

$$X_i = (1/s'_{i1}) \cdot \sum_{j=1}^{n} a_{j1} \cdot s'_{ij} \text{ for i=1,\dots m.}$$

To derandomize a randomized input produced according to the less generalized statement of the matrix method given above:

An output comprising a randomized $X_i$, and the input being an nxn diagonal matrix denoted hereinafter as $A_i$, over $Z_N$, where:

$$A_i = MRHT(X_i) = S \begin{pmatrix} X_i.. & 0.. & 0 \\ . & . & . \\ 0.. & Y_l.. & 0 \\ . & . & . \\ 0.. & 0.. & Y_{n-1} \end{pmatrix} S^{-1} = \begin{pmatrix} a_{11} & \cdots & a_{1n} \\ \vdots & \ddots & \vdots \\ a_{n1} & \cdots & a_{nn} \end{pmatrix}$$

$$S^{-1} = \begin{pmatrix} s'_{11} & \cdots & s'_{1n} \\ \vdots & \ddots & \vdots \\ s'_{n1} & \cdots & s'_{nn} \end{pmatrix}$$

S is used to determine

Xi is determined by performing one of:

$$S^{-1} \cdot A_i \cdot S = \begin{pmatrix} X_{i}.. & 0.. & 0 \\ . & . & . \\ 0.. & Y_{l}.. & 0 \\ . & . & . \\ 0.. & 0.. & Y_{n-1} \end{pmatrix}$$

where $X_i$ is the upper left element of the matrix, thereby determining $X_i = a_{11} + (1/s'_{11}) \cdot \sum_{j=2}^{n} a_{j1} \cdot s'_{1j}$; and

$$X_i = (1/s'_{11}) \cdot \sum_{j=1}^{n} a_{j1} \cdot s'_{1j}.$$

POLYNOMIAL METHOD

To derandomize a randomized input produced according to the most generalized polynomial method of randomization given above:

The randomized output for $\{X_i\}$ is received as $(a_{i0}, a_{i1} ..., a_{in-1})$ and $v_1 ... v_m$, are used to determine the derandomized input $\sum_{j=0}^{n-1} a_{ij} \cdot v_1^{j} = X_1$, $\sum_{j=0}^{n-1} a_{ij} \cdot v_2^{j} = X_2$, ...., $\sum_{j=0}^{n-1} a_{ij} \cdot v_m^{j} = X_m$.

To derandomize a randomized input produced according to the less generalized statement of the polynomial method given above:

The randomized output for $X_i$ is received as $(a_{i0}, a_{i1}, ... ,a_{i\,n-1})$ and $v_1$, is used to determine the derandomized input $X_i = \sum_{j=0}^{n-1} a_{ij} \cdot v_1^{j}.$

**Arithmetic Property of Fully Homomorphic Operations**

Because the above methods are fully homomorphic, both additive and multiplicative properties are satisfied.

Additive homomorphism:

$$(1)\ \mathrm{RHT}^{-1}(\mathrm{RHT}(x) + \mathrm{RHT}(y)) = \mathrm{RHT}^{-1}(\mathrm{RHT}(x + y)) = x + y$$

Multiplicative homomorphism:

$$(2)\ \mathrm{RHT}^{-1}(\mathrm{RHT}(x) \cdot \mathrm{RHT}(y)) = \mathrm{RHT}^{-1}(\mathrm{RHT}(x \cdot y)) = x \cdot y$$

In addition, the methods above are homomorphic for a division operation:

$$(3) \; \mathrm{RHT}^{-1}(\mathrm{RHT(x) / RHT(y))} = \mathrm{RHT}^{-1}(\mathrm{RHT(x / y))} = x / y$$

Addition and multiplication of randomized values are defined by the addition and multiplication, respectively, of the corresponding matrices and polynomials.

MATRIX METHOD

Addition and multiplication of randomized values are defined by the addition and multiplication, respectively, of the corresponding A matrices.
for $X_i$ comprising MRHT $(X_i)$ = $A_i$:

$$\mathrm{MRHT}\,(\,X_1\,) + \mathrm{MRHT}\,(\,X_2\,) = A_1 + A_2;$$

and

$$\mathrm{MRHT}\,(\,X_1\,) \cdot \mathrm{MRHT}\,(\,X_2\,) = A_1 \cdot A_2.$$

For division, if $X_2 \neq 0$ and $\mathrm{MRHT}^{-1}(\mathrm{MRHT}(X_2) \neq 0$, then $\mathrm{MRHT}(X_1/X_2)$ is calculated by $\mathrm{MRHT}\,(X_1) \cdot (\mathrm{MRHT}(X_2))^{-1}$ = $A_1 \cdot A_2^{-1}$

$$1/\,\mathrm{MRHT}\,(\,X_2\,) = A_2^{-1}$$

and

$$\mathrm{MRHT}\,(\,X_1\,) / \mathrm{MRHT}\,(\,X_2\,) = A_1 \cdot A_2^{-1}$$

POLYNOMIAL METHOD

Addition and multiplication of randomized values are defined by the addition and multiplication, respectively, of the corresponding linear functions in $Z_N[v]/P(v)$.
Given $\mathrm{PRHT}(X_1)$ = $(m_1 ; d_1)$, $\mathrm{PRHT}(X_2)$ = $(m_2 ; d_2)$ and $P(v) = v^2 + bv + c$, then for:

Addition: $\mathrm{PRHT}(X_1) + \mathrm{PRHT}(X_2) = (m_1 + m_2 ; d_1 + d_2)$; and
Multiplication: $\mathrm{PRHT}(X_1) \cdot \mathrm{PRHT}(X_2) = (\,(m_1 \cdot d_2 + m_2 \cdot (d_1 - b \cdot m_1)\,) ; (d_1 \cdot d_2 - c \cdot m_1 \cdot m_2)\,)$

$$\text{Note, } (\mathrm{PRHT}(X_1))^2 = (\,m_1 \cdot (2d_1 - b \cdot m_1); (d_1 + \sqrt{c} \cdot m_1) \cdot (d_1 - \sqrt{c} \cdot m_1))$$

$$\mathrm{PRHT}\;(X_1)\; =\; a_{10}, a_{11}, \ldots, a_{1\,n-1}\; \text{ and }\; \mathrm{PRHT}\;(X_2)\; =$$

$$a_{20}, a_{21}, \ldots, a_{2\,n-1} \text{ and } C_0, C_1, \ldots, C_{n-1}, C_n \; of \; P(v) = \sum_{j=0}^{n} C_j \cdot v^j \; (C_n = 1);$$

and

$$\mathrm{PRHT}\,(\,X_1\,) + \mathrm{PRHT}\,(\,X_2\,) = a_{10} + a_{20}, \; a_{11} + a_{21}, \ldots, a_{1\,n-1} +$$

$$a_{2\,n-1}$$

For division, let D= $(m_2)^2 \cdot c - d_2 \cdot (m_2 \cdot b + d_2)$

$$\mathrm{PRHT}(X_1)/\mathrm{PRHT}(X_2) = ((\ m_1 \cdot (d_2 - m_2 \cdot b) - m_2 \cdot (d_1 - b \cdot m_1)\ )/D\ ;\ ($$
$$d_1 \cdot (d_2 - m_2 \cdot b) + c \cdot m_1 \cdot m_2\ )/D\ )$$

Therefore, for PRHT $(X_1) = a_{10}, a_{11}, \ldots, a_{1\,n-1}$ and PRHT $(X_2) = a_{20}, a_{21}, \ldots, a_{2\,n-1}$ and $C_0, C_1, \ldots, C_{n-1}, C_n$ of $P(v) = \sum_{j=0}^{n} C_j \cdot v^j$ ($C_n$=1), can be determined 1/PRHT($X_2$) = $u_{20}, u_{21}, \ldots, u_{2\,n-1}$ by calculating $((\sum_{j=0}^{n-1} u_{2j} \cdot v^j) \cdot (\sum_{j=0}^{n-1} a_{2j} \cdot v^j\ )\ ) \bmod \sum_{j=0}^{n} C_j \cdot v^j = 1$ in terms of n unknown coefficients $u_{2j}$, ($j = 0, \ldots, n-1$), thereby determining

$$\sum_{j=0}^{n-1} g_{2j}(\ u_{20}, u_{21}, \ldots, u_{2\,n-1},\quad a_{10}, a_{21}, \ldots, a_{2\,n-1,}\ c_{10}, c_{21}, \ldots, c_{2\,n-1,})\ \cdot v^j)$$

wherein $g_{2j}(\ )$ is a linear combination of a plurality of n unknowns $u_{2j}$; and

solve the system of n derived equations $g_{20}(\ ) = 1$, and $g_{2j}(\ ) = 0$ for j=1,..,n-1 for all $u_{2j}$ j=0,...,n-1; and

$$\mathrm{PRHT}\ (X_1)\ /\ \mathrm{PRHT}\ (X_2)\ =\ \mathrm{PRHT}\ (X_1) \cdot (\ 1/$$
$$\mathrm{PRHT}(X_2)) =$$
$$((\sum_{j=0}^{n-1} a_{1j} \cdot v^j) \cdot (\sum_{j=0}^{n-1} u_{2j} \cdot v^j\ )\ ) \bmod \sum_{j=0}^{n} C_j \cdot v^j.$$

### III. Fully Homomorphic Encryption of mod-N Numbers

**[0095]** The plain text X is a sequence of k modulo N elements $X_1, X_2, \ldots X_k$.

Both the matrix-based method and polynomial-based method are equivalent in their utility but some implementation and performance differences exist.

Only one modular multiplication is required for encryption and decryption of the polynomial method where encryption using the matrix method requires more multiplications.

It is appreciated that the method of encryption is a special case of the fully homomorphic randomization of arbitrary data method described above. In the encryption of a mod-N number, the input comprises a plain text, the output comprises a cipher text, and all computations are performed modulo N over a ring $Z_N$, where N is a product of two prime numbers, and matrix S comprises a symmetric encryption key. Encryption functions MEnc (Matrix method Encryption) and PEnc (Polynomial method Encryption) correspond to MRHT and PRHT, respectively. It is appreciated that N need not necessarily be a product of two prime numbers as discussed above, and any N may be used. For security reasons, however, it is preferably that N be a product of two prime numbers (as noted above). Alternatively, P and Q may be any numbers, provided that P and Q are approximately as large as the square root of N, and thus, security considerations will be satisfied.

MATRIX METHOD

By way of example, consider a case where the nxn matrix is a 2x2 matrix where one input element $X_i$ is the plaintext and one corresponding random value $Y_i$ is selected, and a secret randomly chosen 2X2 matrix denoted S over $Z_N$ is selected to be the symmetric encryption key. S is selected to be an invertible matrix over $Z_N$, that is $Det(S) \neq 0$ $S^{-1}$ is then determined

The encryption of X is defined over its components $X_i$ as follows:

$$Enc(X) = (Enc(X_1),...,Enc(X_k)).$$

Encryption of Xi is defined as follows:

$$A_i = Enc(X_i) = S\begin{pmatrix} X_i & 0 \\ 0 & Y_i \end{pmatrix}S^{-1},$$

where all operations are mod N.

The encryption function yields $A_i$, the cipher text for input element $X_i$ ; $A_i$ is a 2X2 matrix over $Z_N$.

POLYNOMIAL METHOD

By way of example, consider a case where the polynomial is a quadratic equation. Two mod N secret random numbers, v1 and v2 are selected. The public polynomial P(v) = (v-v1) · (v-v2) mod N = $v^2$+b·v + c is computed. Encryption of $X_i$ Enc (Xi), is any linear function in variable v of the form $m_i.v + d_i$ satisfying $m_i·v_1 + d_i = X_i$.

A number mod N random for the $m_i$ value is selected. The linear equation $m_i·v_1 + d_i = X_i$ for $d_i = X_i - m_i·v_1$ is solved. It is appreciated that all calculations are mod N. The cipher text consists of the pair ($m_i$ , $d_i$) and b and c, the coefficients of P(v).

Alternatively, a random $Y_i$ is selected for a given $X_i$. The following simultaneous equations are solved for unknowns $m_i$ and $d_i$:

$$m_i \cdot v_1 + d_i = X_i \quad ;$$

and

$$m_i \cdot v_2 + d_i = Y_i$$

The result: $m_i = (X_i - Y_i) / (v1 - v2)$, and $d_i = X_i - m_i·v_1 = (Y_i·V_1 - X_i·v_2)/(v_1 - v_2)$ is the plain text.

It is appreciated that the alternative is computationally heavier than the first alternative embodiment, and is useful when Yi is needed independent-of and well-ahead of Xi.

It is appreciated that the methods described above for combining the matrix and polynomial randomization methods above are applicable to the encryption method herein, as it was noted, the method of encryption is a special case of the fully homomorphic randomization of arbitrary data method.

**Decryption**

The derandomization method detailed above is performed, however, the received output comprises a cipher text denoted C, the cipher text C being produced according to the encryption method above, and the derandomized input comprises a plain text, and all computations are performed modulo N over a ring $Z_N$, where N is a product of two prime numbers, and matrix S comprises the symmetric encryption key. Only one modular multiplication is required.

MATRIX METHOD

To decrypt the encryption using the exemplary 2x2 matrix above where the cipher text A is 2x2 diagonal matrix over $Z_N$, let the vector (1, e) be an eigenvector of the matrix:

$$A = S\begin{pmatrix} X & 0 \\ 0 & Y \end{pmatrix}S^{-1}$$

satisfying: (1, e)A=(X, e·X).

Decrypt A as follows:

$$X = A_{1,1} + e \cdot A_{2,1} \ (\mathrm{Mod}\ N)$$

where e = $(-S_{12}/S_{22})$ mod N, and $A_{ij}$ and $S_{ij}$ are the ij elements of matrix *S* and *A*, respectively.

POLYNOMIAL METHOD

The cipher text of Xi is the pair ($m_i$, $d_i$) (representing the linear function $m_i v + d_i$). The decryption of the cipher text is as follows: $m_i \cdot v_1 + d_i = X_i$.

It is appreciated that because the above encryption methods are fully homomorphic, the additive, multiplicative, and divisive properties described above are satisfied.

**Security In Open Untrusted Platforms**

For remote computing in an untrusted platform three cases defining the secrets in a model of an input and function (algorithm) are considered:

a. *Only the input is private (not the algorithm)* - The algorithm is characterized as a public polynomial whose input is homomorphically-encrypted data as in a keyed-hash where only the key is secret. In general the computed polynomial may have a multivariate input.

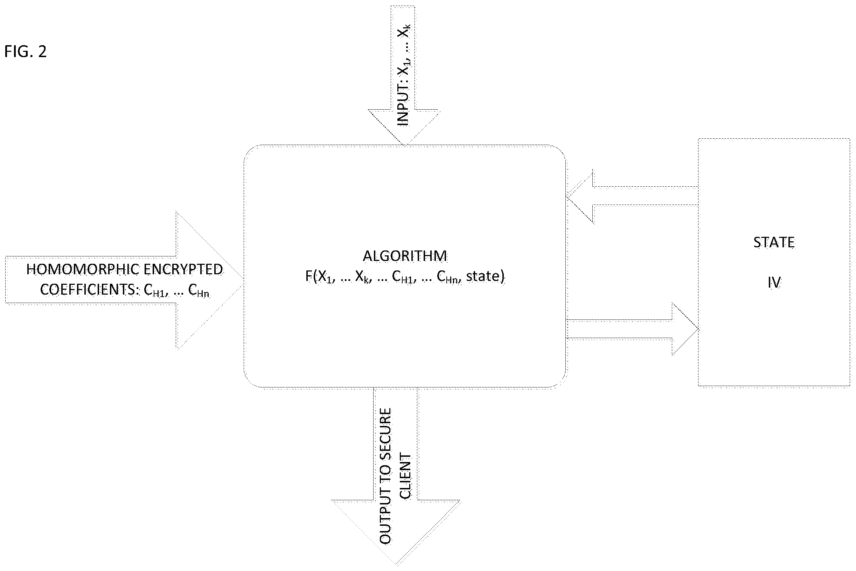

b. *Only the algorithm is private (not the input)* - The algorithm is characterized by a polynomial with some of the polynomial's coefficients are mod N-numbers secrets and the input is public. An example as mentioned above could be a PFKG (Private Function Key Generation) whose input is a public ECM used in broadcast CA systems. Yet another similar example is a private HMAC (hash-based message authentication code) depicted in Fig. 2, which is a depiction of an embodiment of the system of Fig. 1 where a private algorithm and a public input are used, a polynomial with mod N homomorphic-encrypted coefficients. The HMAC securely runs on an open machine; the last step in its process is delivered to the secure client for verification.

c. Both the algorithm and input are private - Neither the algorithm nor its input are known to the processing entity. (Note that both the algorithm and its input must be encrypted with the same homomorphic-encryption key known by the entity that is authorized to know the input and the algorithm).

Such untrusted platform could be a public (open) cloud server, a set top box host, a mobile phone ACPU (application central processing unit), etc.; the decryption of the result is done by the secure client, e.g., smart card, SIM, RFID, or secure execution environment with secure OTP (one-time programmable memory) of a low performance device.

**Enhanced Protection For Certain Algorithms** - **Securing OSS Signature against Pollard Attacks**

The Original OSS (Ong, Schnorr, Shamir) scheme is a signature scheme based on a modular equation with two variables.

The following two variables modular equation is given: $X^2 - \mu Y^2 = M$ (mod N) wherein the public key consists of ($\mu$, N)

The private key $\varepsilon$ is the square root $\mu$ modulo N $\varepsilon^2 = \mu$ (mod N).

A signature of a message is a pair (X,Y) satisfying the above equation where M is the hash of the message.

One who knows $\varepsilon$ can find a solution for the equation.

A random value r modulo N is selected, which defines X and Y as follows:

$$X = \frac{1}{2}\left(r + \frac{M}{r}\right) \quad ; \quad Y = \frac{1}{2\varepsilon}\left(r - \frac{M}{r}\right).$$

The OSS scheme is considered very efficient for the signer and the verifier.

OSS Signing requires 3 modular multiplications and one modular division, and verification requires 3 modular multiplications.

OSS Signing was, however, broken by Pollard, who presented an algorithm for finding solutions for the equation without having to know the factorization of N or the value of $\varepsilon$.

A modification of the original OSS scheme based on the above modulo-N Homomorphic Encryption scheme is herein described.

Consider two modular equations:

$$X_1{}^2 - \mu_1 Y_1{}^2 = M_1 \pmod{N} \text{ and } X_2{}^2 - \mu_2 Y_2{}^2 = M_2 \pmod{N}$$

The values $\mu_1, \mu_2$ are secret. A random invertible 2X2 matrix S and define $U = S \begin{pmatrix} \mu_1 & 0 \\ 0 & \mu_2 \end{pmatrix} S^{-1}$ is selected to be the public key.

The private key is the matrix S and values $\varepsilon_1$, $\varepsilon_2$ the square roots of $\mu_1$, $\mu_2$ respectively.

To sign a message, the hash of the message is calculated and a matrix M in the dimension 2 subspace of matrices that commute with U is selected. M has the form $M = S \begin{pmatrix} M_1 & 0 \\ 0 & M_2 \end{pmatrix} S^{-1}.$ $M_1$ and $M_2$ are calculated (calculation of $M_1$ and $M_2$ require 2 modular multiplications) and two random modulo N numbers $r_1, r_2$ are selected. The values $X_1, X_2, Y_1, Y_2$ that solve the two modular equations with $M_1$ and $M_2$ are found and as in the original OSS.

The matrices A and B are defined:

$$A = S \begin{pmatrix} X_1 & 0 \\ 0 & X_2 \end{pmatrix} S^{-1}, \quad B = S \begin{pmatrix} Y_1 & 0 \\ 0 & Y_2 \end{pmatrix} S^{-1}.$$

The signature is the matrices pair (A, B). The matrices A and B commutes with U, The subspace of all matrices that commutes with U has dimension 2, only two parameters of A and two parameters of B are required for the signature (total of 4 modulo N numbers).

The verifier recovers the missing elements of A and B (each one of the missing parameters is a known linear combination of the two parameters in the signature). The verifier calculates the hash of the message and defines M and verifies that: $A^2 - U \cdot B^2 = M$.

A simplified version of the scheme is when $M_1 = M_2$. In this case there is no need to calculate the matrix M, the modulo N number M is defined to be the hash of the message, the matrices A and B are defined the same as before and the verification of the signature is done by checking the equality $A^2 - U \cdot B^2 = M \cdot I$

The Modified OSS scheme protects against Pollard attack as the attack cannot be launched against matrices.

Note that although the above was presented in terms of the Matrix-method, an equivalent protection against Pollard attack can be presented using the Polynomial-method.

## Low-Cost (Collaborative) Security Platforms

The logical components of a low cost collaborative security platform, $(LH)^2$, consisting of a low performance high security element and a low-security high performance host or server is depicted in Fig. 1. The idea is that a given security function or data can be performed under a homomorphic encryption in low (or no security) environment, e.g., public cloud server, while the homomorphic secret and its related light operation is performed in the low performance secure (low-cost) element.

An example is a PFKG private function for (content) key generation. The PFKG in its homomorphic-encrypted form runs in the host - low security STB (set top box) (and not in clear form in the SC (smart card) thus making the SC leaner) - with the broadcast ECM as its input. The output of the operation is the desired homomorphic-encrypted pre-hash content key. The SC receives the homomorphic-encrypted pre-hash content key and decrypts it to get the pre-hash content key. It then hashes it and sends it back to the host as the content key used in content decryption.

Thus the mechanism to generate the broadcast content key is protected from any attack on the host STB.

## Verification Of Computational Integrity

It is frequently necessary to verify that the party who performed a homomorphic computation on behalf of a secure client did in fact do the job correctly, i.e., the returned result is valid.

Denoting the received result to be verified as $R_M^*$ for a result returned using an MRHT or MEnc function hereinafter denoted as M, and the result being denoted $R_P^*$ for a result returned using a PRHT or PEnc function denoted as hereinafter P, then the result comprising a result of a homomorphic calculation denoted f performed on $A_1, A_2,... , A_k$ wherein $A_i$ is equal to one of $M(X_i)$ and $P(X_i)$; $f(A_1, A_2,... , A_k)$ is equal to one of: $M(f(X_1, X_2,... , X_k)) = f(M(X_1), M(X_2),... , M(Xk))$ and $P(f(X_1, X_2,... , X_k)) = f(P(X_1), P(X_2),..., P(X_k))$. The result of $f(A_1, A_2,... , A_k)$ is in one of two forms:

Either

$$M\big(f(X_1, X_2, ...., X_K)\big)$$

$$= S \begin{pmatrix} f(X_1, X_2, ...., X_K).. & 0.. & 0 \\ & . & . & . \\ 0.. & f(Y_{m1}, Y_{m2}, ...., Y_{mk}).. & 0 \\ & . & . & . \\ 0.. & 0.. & f(Y_{n-1,1}, Y_{n-1,2}, ...., Y_{n-1,k}) \end{pmatrix} S^{-1}$$

$$= R_M^*;$$

Or:

$f(A_1, A_2,... , A_k)$ in the form of $a^*{}_0, a^*{}_1 ..., a^*{}_{n-1}, = R_P^*.$

in the case where the result is in the form of $R_M^*$:

$f(Y_{m1}, Y_{m2}, ...., Y_{mk})$, hereinafter denoted Q, is computed for some value, m , m=1,2,...,n-1 where $Y_{mj}$ is the $m^{th}$ random value used in either randomizing or in encrypting $X_m$.

$R^*{}_M$ is then one of: decrypted; and derandomized using the decryption and derandomization techniques explained above, thereby determining $f(Y_{m1}, Y_{m2}, ...., Y_{mk})$, hereinafter denoted E, from the resulting matrix diagonal of the m+1 row of the matrix. E is then compared with Q. The result of the computation of f(Xi) is deemed valid if a match occurs.

Alternatively, in the case where the result is in the form of $R_P^*$:

$f(Y_{m1}, Y_{m2}, ... ., Y_{mk})$, hereinafter denoted Q, is computed for some value, m , m=1,2,...,n-1 where $Y_{mj}$ the $m^{th}$ random used in one of randomizing; and encrypting $X_m$.

$R^*{}_P$ is one of decrypted or derandomized, thereby determining:

$$\sum_{j=0}^{n-1} a_j^* \cdot v_{m+1}{}^j = f(R_{m1}, R_{m2},... , R_{mk}),$$

denoted as E.

E is then compared with Q. The result of the computation of f(Xi) is deemed valid if a match occurs.

MATRIX MODE EXAMPLE

Although, as has been noted, the Matrix-method and Polynomial-method are equivalent, for the sake of illustration consider the matrix $A = S \begin{pmatrix} X & 0 \\ 0 & Y \end{pmatrix} S^{-1}$ as the cipher text of X (it is appreciated that the cipher text may be generalized as an NxN matrix); A is used in homomorphic computation of a function f(A) = Enc(f(X)) = R*. The result R*

$$R = \begin{pmatrix} f(X) & 0 \\ 0 & f(Y) \end{pmatrix}$$

is returned to the secure client for decryption of the form

The secure client has pre-computed f(Y) and compares it with the f(Y) in R. A positive match ensures the client that f(X) is a valid result.

Those skilled in the art will appreciate that the above verification of computational integrity can be shown for the polynomial method as well.

Recently, Xiao published a paper entitled, An Efficient Homomorphic Encryption Protocol for Multi-User Systems, available at www.utdallas.edu/~ilyen/techrep/HPbound.pdf which proposes a solution for the homomorphic encryption problem. The inventors of the present invention are of the opinion that the above-mentioned paper presents a method based on 4x4 diagonal matrices where an arbitrary plaintext data and a nonce instantiate the diagonal; and the cipher text is represented through the application of a secret 4x4 matrix to the diagonal matrix.

The matrix-based method described herein (referred to as "MORE" in Appendix A) claims (see the proofs in the section entitled "Security" in Appendix A) that the use of diagonal commutative matrices over $Z_N$ is valid, i.e. secure, for homomorphic encryption for plaintext inputs $(x_1, x_2, ..., x_n)$ that are constrained, that is, selected uniformly and independently over $Z_N$; i.e., the $x_i$'s are randomly chosen in $Z_N$.

On the other hand, the reference mentioned above ("An Efficient Homomorphic Encryption Protocol for Multi-User Systems") presents a homomorphic encryption scheme for any (arbitrary) plaintext inputs, namely, the $(x_1, x_2, ..., x_n)$ are unconstrained both in size and statistical properties. The reference's claim for security of the scheme presented therein is incorrect.

It can be shown that:

for small-value plaintext inputs, (e.g., $x_i < 80$ bytes); or
for plaintext values that are not statistically independent (e.g., $x_1 = 3x_2 - 4(x_3)^2$),

the scheme presented in the "An Efficient ..." reference is not secure and can be broken despite the reference's claim to security strength of factoring. As such, the scheme presented in the "An Efficient ..." reference cannot be considered a valid encryption scheme as presented. Note that the attack described below works even when no known plaintext is available, and, more importantly, the attack will also work in the case of 4x4 scheme ("$E_4$") that is claimed to be secure in the known-plaintext model.

For the case of small-value plaintext inputs, (e.g., $x_i < 80$ bytes): the encryption scheme is not secure and can be broken in practice i.e. once a sequence of n small-value plain text values is encrypted using the scheme proposed it is possible to recover the secret plain text values.

Suppose there is a sequence of n cipher text messages with plain texts: $x_1, ... x_n$ each one of which satisfies $x_i < 2^{80.8}$ (i.e. $x_i < 80$ bytes). Take N with conventional size, e.g., N is an integer with a base 2 representation of 1024 bit long.

Using the notation of the "An Efficient ..." reference, the cipher text takes the form :

$$E(x_i) = k^{-1} \begin{pmatrix} x_i & 0 \\ 0 & R_i \end{pmatrix} k \ .$$

All matrices $E(x_i)$ reside in subspace of dimension 2, therefore there are two *mod N* numbers *a* and *b* such that for all $1 \le i \le n$ there are: $x_i = aE(x_i)_{1,1} + bE(x_i)_{1,2} \ mod \ N$.

Consider the following lattice *L* of dimension n+2 spanned by the vectors:

$$
\begin{aligned}
w_1 &= (\ \alpha\ , 0\ , E(x_1)_{1,1}, \quad ... \quad , E(x_n)_{1,1}) \\
w_2 &= (\ 0\ , \alpha\ , E(x_1)_{1,2}, \quad ... \quad , E(x_n)_{1,2}) \\
w_3 &= (0\ , 0, N, \quad , 0, ... 0, \quad , 0) \\
w_4 &= (\ 0\ , 0, 0, \quad , N, ..., 0, \quad , 0) \\
&\quad\quad\quad\quad .... \\
w_{n+2} &= (\ 0\ , 0\ , 0 \quad 0 ... 0 \quad N)
\end{aligned}
$$

For sufficiently large n (e.g. n>4) and a correct choice for $\alpha \sim 2^{8.80} / N$, since $x_i$ are small enough the vector $(a\alpha, b\alpha, x_1 ... x_n)$ is the nonzero vector in *L* having the smallest norm (length) and any other nonzero vector in the lattice has much larger norm. These are sufficient to ensure that the LLL algorithm will result in finding the smallest non-zero element in a lattice.

The representation of the vector $w_{min}$ as an integer combination of the lattice base elements $w_1 ..., w_i, ..., w_{n+2}$ is unique and has the form:

$$w_{min} = aw_1 + bw_2 + \sum_{i=3}^{n+2} c_i w_i$$

Once $w_{min}$ is recovered the coefficients $a$, $b$ are easily found using standard linear algebra and the required parameters are found.

As mentioned above, the relationship between the cipher text and the plain text is known: $x_i = aE(x_i)_{1,1} + bE(x_i)_{1,2}$ mod N and this enables an attacker to recover the plain text given the cipher text.

As a result the inventors of the present invention conclude that the proposed algorithm is not a secure encryption scheme for encrypting small plain text values.

For the case of plaintext values that are not statistically independent (e.g., $x_1 = 3x_2 - 4(x_3)^2$):

It can be shown that for plaintext values that are not statistically independent (e.g., $x_1 = 3x_2 - 4(x_3)^2$), the scheme is not secure and can be broken despite the authors' claim to security strength of factoring.

The notations $E(x_1)$, $E(x_2)$, $E(x_3)$ are used for encrypted values of the plaintexts $x_1$, $x_2$, $x_3$

$$E(x_i) = k^{-1} \begin{pmatrix} x_i & 0 \\ 0 & R_i \end{pmatrix} k$$

for $1 \leq i \leq 3$. Assume that $x_1$, $x_2$, $x_3$ satisfy an algebraic relation: $x_1 = 3x_2 - 4(x_3)^2$ or $x_1 + 4(x_3)^2 - 3x_2 = 0$ then, it can be shown how the plain text can be recovered.

Since the scheme is homomorphic there is the following matrix relation:

$$E(x_1) - 3E(x_2) + 2(E(x_3))^2 = E(0) \quad \text{or} \quad E(x_1) - 3E(x_2) +$$

$$2(E(x_3))^2 = k^{-1} \begin{pmatrix} 0 & 0 \\ 0 & R \end{pmatrix} k$$

The values $R_1$, $R_2$, $R_3$ are chosen randomly and therefore the value R is not equal 0 with very high probability.

Given that it is easy to find the subspace of all vectors mapped to (0,0) by the matrix $k^{-1} \begin{pmatrix} 0 & 0 \\ 0 & R \end{pmatrix} k$ using standard linear algebra techniques. Any non zero vector in this one dimensional subspace $v_1$ is good $E(x_1)v_1 = x_1 \cdot v_1$ ; $E(x_2)v_1 = x_2 \cdot v_1$ ;

$$E(x_3) \, v_1 = x_3 \cdot v_1$$

The alternative polynomial-based encryption method described herein provides great performance enhancement over the matrix method herein (from four large number multiplications to only one). Unlike the matrix method (where the algebraic operations of addition and multiplication are standard matrix operations), the polynomial performs the algebraic operations of addition and multiplication over a ring of polynomials modulo some special polynomial of degree 2 or higher.

Moreover:

a. the efficiency of the computation for arbitrary function of cipher texts (with additions and multiplications) is preserved (capped) by calculating the intermediate results modulo some special polynomial of degree 2 or above; and
b. the efficiency of multiplication of cipher texts is improved over the matrix method.

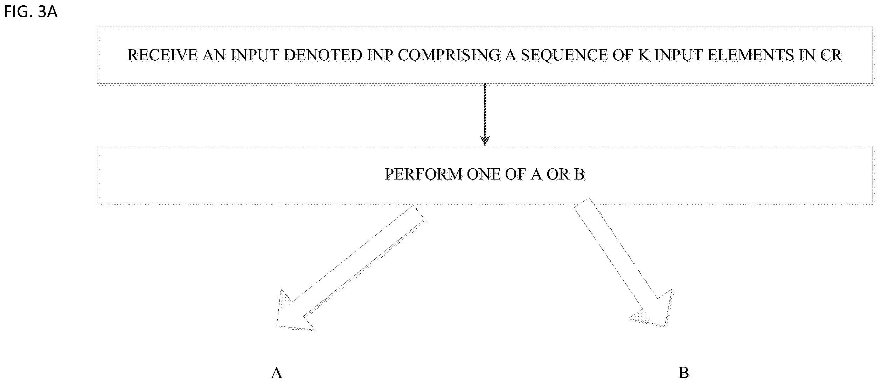

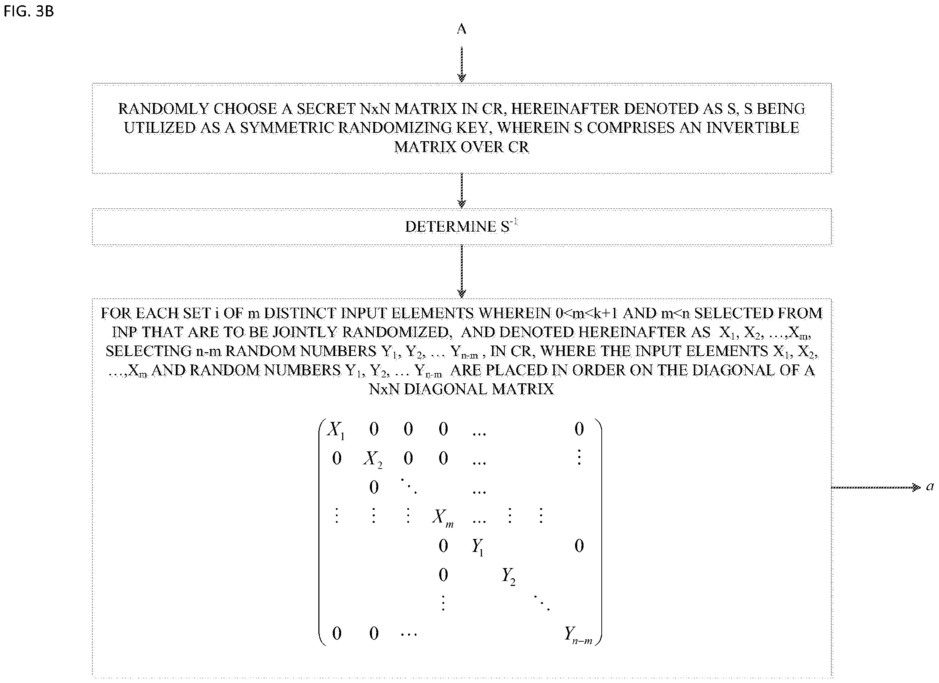

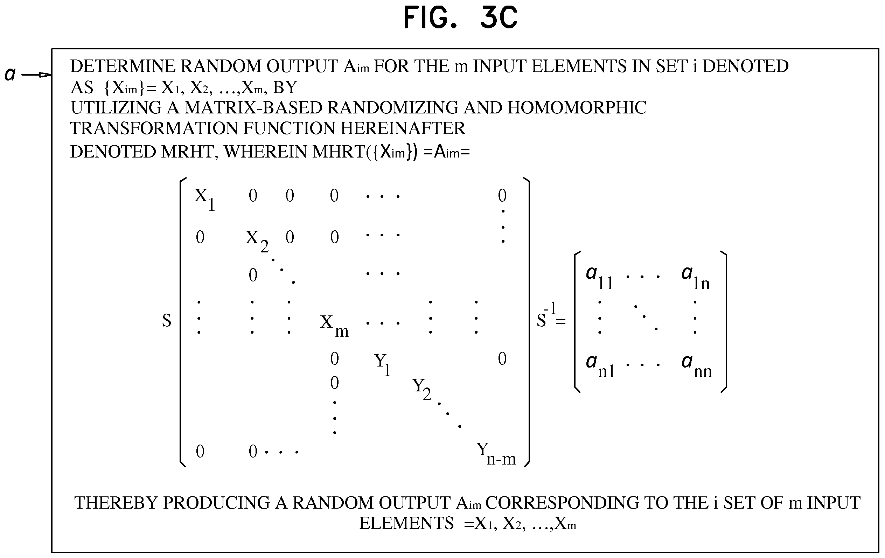

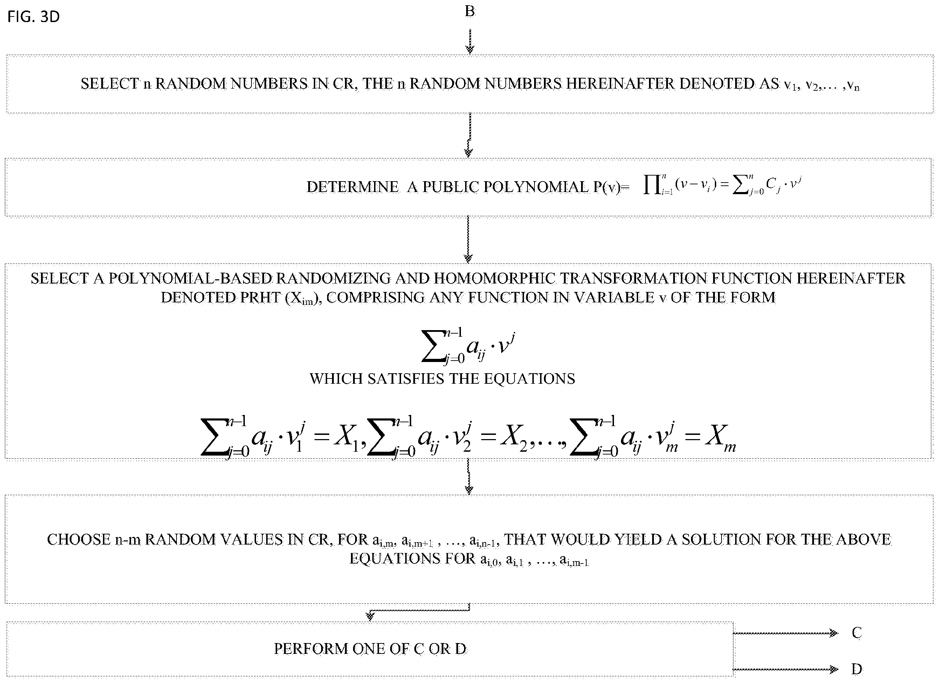

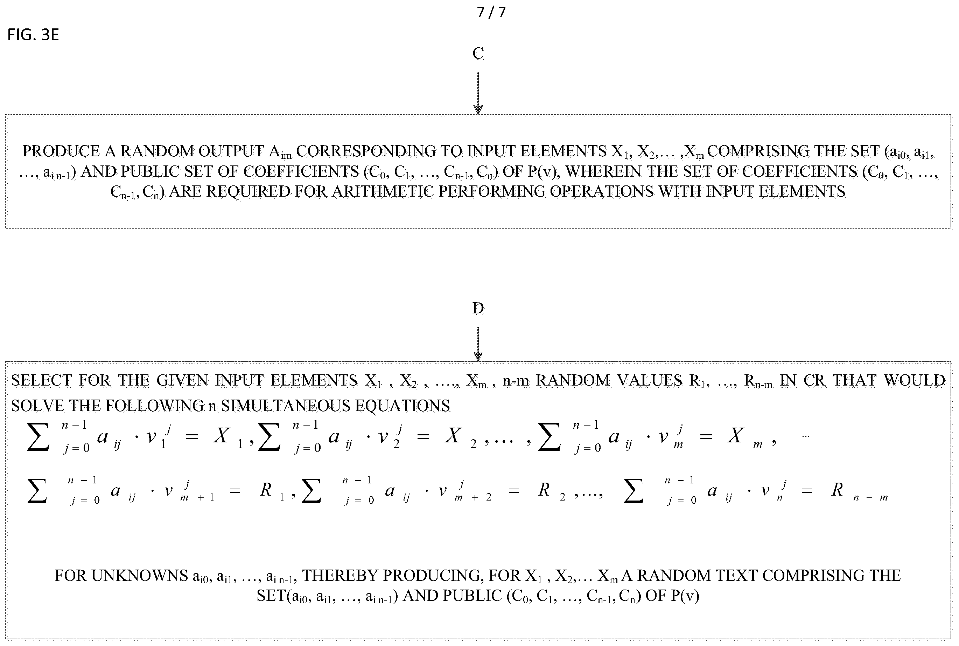

Reference is now made to Figs. 3A - 3E, which are flowchart diagrams depicting methods for the various embodiments of the system of Fig. 1. Figs. 3A - 3E are believed to be self-explanatory in light of the above discussion.

It is appreciated that software components of the present invention may, if desired, be implemented in ROM (read only memory) form. The software components may, generally, be implemented in hardware, if desired, using conventional techniques. It is further appreciated that the software components may be instantiated, for example: as a computer program product; on a tangible medium; or as a signal interpretable by an appropriate computer.

It is appreciated that various features of the invention which are, for clarity, described in the contexts of separate embodiments may also be provided in combination in a single embodiment. Conversely, various features of the invention which are, for brevity, described in the context of a single embodiment may also be provided separately or in any suitable subcombination.

It will be appreciated by persons skilled in the art that the present invention is not limited by what has been particularly shown and described hereinabove. Rather the scope of the invention is defined by the appended claims and equivalents thereof:

APPENDIX A

**Efficient Methods for Practical Fully-Homomorphic Symmetric-key Encryption, Randomization, and Verification**

Aviad Kipnis;

Eli Hibshoosh

Abstract

We present high performance non-deterministic fully-homomorphic methods for practical randomization of data (over commutative ring), and symmetric-key encryption of random mod-N data over ring $Z_N$ well suited for crypto applications. These methods secure, for example, the multivariate input or the coefficients of a polynomial function running in an open untrusted environment. We show that random plaintext is the sufficient condition for proof of security for the homomorphic encryption. The efficient nature of the methods - one large-numbers multiplication per encryption and six for the product of two encrypted values - motivates and enables the use of low cost collaborative security platforms for crypto applications such as keyed-hash or private key derivation algorithms. Such a platform is comprised of a low-cost and low performance security element supported by an untrusted high performance server running the homomorphic algorithms. The methods employed may also provide enhanced protection for some existing crypto algorithms against certain attacks. Specifically, it is shown how to secure OSS public-key signature against Pollard attack. Further, we demonstrate how the homomorphic randomization of data can offer protection for an AES-key against side-channel attacks. Finally, the methods provide both fault detection and verification of computed-data integrity.

**1. Introduction**

We present non-deterministic, highly-efficient methods that provide a **F**ully-homomorphic **S**ymmetric-key **E**ncryption and **R**andomization **F**unction (FSERF). The methods are invariant under encryption or randomization. For each of the two (isomorphic) methods we define two domains; one domain for secure encryption and the other for randomization. For the symmetric-key encryption the plain text is an element of $Z_N$, and all computations are done modulo N; N being a product of two (large) primes. For security reasons the plaintext and random values used in the (non-deterministic) encryption operation are large random numbers (e.g., 1k bits or higher). For randomization where there is no security constraint the input data and random values used are in some commutative ring (CR). Throughout the paper, we focus on the methods' internal operation with the underlying understanding that use of different domains, CR or $Z_N$, will randomize or encrypt the input data, respectively. Another useful inherent property of the methods are coupled calculations where one calculation can attest to the validity of another and thus verify the integrity of a computed function with encrypted inputs. Fault detection is yet another use of the above.

We present several applications where the utility of FSERF is evident. In particular, FSERF drives down the cost of a Low-cost Collaborative Security (LOCOS) system. In various real world applications we face the following problem: there is a strong machine that processes the data but this machine is usually not secure, on the other hand the security module in the system is computationally weak and can't process large amount of data fast enough. Such platform is depicted below

Low-cost Collaborative Security (LOCOS) System

To provide a quick and intuitive grasp we present the methods and their properties in their simplest manifestation - a single plaintext element and a single random per method application; (a more generalized description of the methods is given in the Appendix A). In subsequent sections we also address related work, sample applications, and performance.

## 2. Related Work

The problem of homomorphic encryption (privacy) was introduced by Rivest, et al [5]. The problem of fully homomorphic encryption (FHE) supporting both addition and multiplication with an unlimited number of operations had essentially remained open (only partial solutions had been known) until Gentry's work in 2009. Gentry in 2009 [3] showed the first fully-homomorphic encryption scheme based on ideal lattices. Gentry developed a two steps approach. In the first step he presented a "Somewhat Homomorphic encryption scheme" - an encryption scheme that satisfies the homomorphism requirement. However, algebraic operation on encrypted data accumulates errors; thus decryption of the encrypted data remains valid only if limited number of algebraic operations on the encrypted data were performed. In the second step Gentry developed a general "bootstrap" method that cleans the accumulated errors. A combination of these two steps enables a construction of Fully Homomorphic Encryption scheme (FHE). Few other Homomorphic Encryption Scheme were proposed following Gentry's success - in 2011 Brakersky and Vikuntanathan published an FHE scheme based on the Learning With Errors (LWE) problem, [2]. The computational complexity of the above schemes motivated research aimed at Improving their efficiency, e.g., [4]. An approach to demonstrate efficient homomorphic encryption with practical application to real-world problems is described in [1]. The approach is based on 'Somewhat'-homomorphic encryption supporting a **limited** number of homomorphic operations. The practical results in [1] are based on the use of the somewhat-homomorphic scheme proposed in [2]. This approach first set out to satisfy the requirement for efficiency (practicality), and then found the solution in the 'Somewhat'-homomorphic.

In this paper we present fully homomorphic encryption (FHE) methods which are practical albeit mainly applicable to cryptographic and security algorithms. The schemes are based on non-deterministic linear transformations. In general, linear schemes are inherently ill-suited, for encryption. However, the linear transformations presented in this paper enable homomorphic computation which is efficient. To provide the necessary security it is sufficient to constrain the plaintext such that it contains only random large-numbers in $Z_N$. This renders the scheme suitable for the domain of some security applications.

## 3. The Methods: Practical FSERFs Simplified (single input)

Each of the isomorphic methods presented is an efficient non-deterministic Fully-homomorphic Symmetric Encryption and Randomization Function (FSERF). The input or message, IN, is comprised of k elements in a commutative ring (CR) or in ring $Z_N$. Randomization is defined over a general commutative ring (CR), e.g., $F_{256}$, R (real numbers), or sub ring of commutative matrices. Encryption is defined over the ring $Z_N$ (all operations are mod N, where N is a product of two (large secret) primes). The non-deterministic method operates on an input and a random parameter (in $Z_N$ or CR); the random parameter changes per each execution of the method. For encryption both the plaintext input and the random parameter associated with it are random large-numbers in $Z_N$.

Two fundamental isomorphic methods are defined below; each randomizes or encrypts a single input element

$X_i$. The basic (isomorphic) methods are a matrix-based method, MORE (Matrix Operation for Randomization or Encryption), and a polynomial-based method, PORE (Polynomial Operation for Randomization or Encryption). Additionally, 'compound' methods can be constructed by successively applying the basic methods, (see Appendix).

**To simplify the description in this section we shall assume that the input is to be encrypted.**

**3.1 The matrix method, MORE.**

**Symmetric-Key Generation**

Alice randomly selects a secret 2x2 invertible matrix, S, in $Z_N$ to be the symmetric key for encryption.

**Encryption**

For each plaintext input element $X_i$ Alice selects a random large-number $Y_i$, in $Z_N$.
$X_i$ and $Y_i$ are placed in order on the diagonal of a 2x2 diagonal matrix. We denote MORE's output matrix as Ai and define the encryption of $X_i$ as:

$$ MORE(X_i) = A_i = S \begin{pmatrix} X_i & 0 \\ 0 & Y_i \end{pmatrix} S^{-1} = \begin{pmatrix} a_{11} & a_{12} \\ a_{21} & a_{22} \end{pmatrix} $$

The cipher text of $X_i$ can be regarded as the four values given in matrix Ai. However an alternative economical representation is possible. For a given S, MORE's matrix space is defined by two large numbers, and the cipher text of a Xi is defined by any pair of large numbers in $A_i$ except for $a_{12}$, $a_{21}$.

**Decryption**

One who knows S can decrypt the cipher text matrix A and recover a plaintext X. He eliminates S and $S^{-1}$ by simple matrix multiplication, $X = (S^{-1} AS)_{11}$.

Alternatively, let the vector (1, e) be an eigenvector of the matrix $A = S \begin{pmatrix} X & 0 \\ 0 & Y \end{pmatrix} S^{-1}$ satisfying: (1, e)A=(X, e·X)
The decryption of A is defined as follows:

$X = a_{11} + e \cdot a_{21}$ (Mod N) where $e = (-S_{12}/S_{22})$ mod N, and $S_{ij}$, $a_{ij}$ a are the ij elements of matrices S and A, respectively.

**Computation of multivariate function of encrypted values**

We define below the operations of addition, multiplication and division of encrypted values.
We let A1 and A2 be the encrypted values of $X_1$ and $X_2$, respectively.
The Ai's comprise the input of a function in which they are added, multiplied, or divided. We thus have for:

Addition

$$ MORE(X_1) + MORE(X_2) = A_1 + A_2 ; $$

and

Multiplication

$$\text{MORE } (X_1) \cdot \text{MORE } (X_2) = A_1 \cdot A_2 \ ;$$

and

Division (for Det MORE(X2) $\neq$ 0)

$$1/ \text{MORE } (X_2) = A_2^{-1} \text{ and MORE } (X_1) / \text{MORE } (X_2)= A_1 \cdot A_2^{-1};$$

It can be easily shown that under the above definitions MORE is fully homomorphic.

**3.2 The polynomial method, PORE.**

Again, the simplest yet useful case to consider is a single variable encryption with the minimum degree of the public polynomial.

**Symmetric-Key Generation**

Alice selects two (mod N) secret random large-numbers, $v_1$ and $v_2$, for the symmetric-key. Alice computes the public polynomial PP(v) = (v-$v_1$) $\cdot$ (v-$v_2$) modN = $v^2$+b$\cdot$v + c

**Encryption**

Encryption of plain text $X_i$, Enc (Xi), is **any** linear function in variable v of the form $a_i \cdot v + d_i$ satisfying $a_i \cdot v_1 + d_i = X_i$.
Let the pair ($a_i$, $d_i$) define Enc (Xi).
Alice selects a large-number mod N random $R_i$, for $a_i$ and solves the linear equation $R_i \cdot v_1 + d_i = X_i$ for $d_i$; thus $d_i = X_i - R_i \cdot v_1$.

The **cipher text of Xi, consists of the pair ($a_i$, $d_i$).**

Alternatively, Alice can pick a random large-number mod N, $R_i$, for the given $X_i$ and solve the simultaneous equations below for the unknowns $a_i$ and $d_i$:

$$\text{a.} \quad a_i \cdot v_1 + \ d_i = X_i \ ,$$

and

$$\text{b.} \quad a_i \cdot v_2 + \ d_i = R_i$$

resulting in:

$$a_i = (X_i - R_i) / (v1 - v2), \text{ and } d_i = X_i \ - a_i \cdot v_1 = (R_i \cdot v_1 - X_i \cdot v_2)/(v_1 - v_2).$$

This alternative, (computationally heavier), is useful in certain applications of verification.

**Decryption**

Given that an encrypted variable, (or a computed function of encrypted variables) is represented by a pair (a,d), anyone who knows the secret roots can decrypt by simply computing $a \cdot v_1 + d$.

**Computation of multivariate function**

For Bob to compute a function with the encrypted Xi, the public coefficients, b and c, (defined above under key generation) are needed; note that b and c do not change for encryption of different variables; they are given once only (per some predefined period) by Alice to Bob. We also note that only one large-number multiplication is needed for encryption.

When computing multivariate functions with the encrypted variables we need to consider the addition, multiplication and division of two variables. Addition and multiplication of encrypted values are defined by the addition and multiplication, respectively, of the corresponding linear functions in $Z_N[v]/PP(v)$

Given $PORE(X_1) = (a_1, d_1)$, $PORE(X_2) = (a_2, d_2)$ and $PP(v) = v^2 + bv + c$, addition, multiplication and division are performed as below.

**Addition**

$$PORE(X_1) + PORE(X_2) = (a_1 + a_2 ,\ d_1 + d_2),$$

**Multiplication:**

$$PORE(X_1) \cdot PORE(X_2) = (\ (a_1 + d_1) \cdot (a_2 + d_2) - a_1 \cdot a_2 \cdot (1 + b) - d_1 \cdot d_2 ,\ (d_1 \cdot d_2 - a_1 \cdot a_2 \cdot c)\ )$$

This particular form aims at minimizing the number of multiplications of large numbers, i.e. five.

Note, for squaring a variable, $(PORE(X_1))^2 = (\ a_1 \cdot (2d_1 - b \cdot a_1) ,\ (d_1 + \sqrt{c} \cdot a_1) \cdot (d_1 - \sqrt{c} \cdot a_1)\ )$

**Division:**

$$Let\ \ D = d_2 \cdot (a_2 \cdot b - d_2) - (c \cdot a_2) \cdot a_2$$

$$PORE(X_1)/PORE(X_2) = (\ (a_2 \cdot d_1 - a_1 \cdot d_2)\ /D ,\ (\ d_1 \cdot (\ a_2 \cdot b - d_2) - (c \cdot a_2) \cdot a_1)/D\ )$$

It can be shown easily that, under the above definitions, the PORE scheme is fully homomorphic.

**3.3 MORE and PORE are isomorphic**

Given the above definitions of MORE and PORE where operations under MORE are over the commutative ring C1 = {SMS$^{-1}$ | M a diagonal matrix comprised of X and Y}, and operations under PORE are in the commutative ring C2 = $Z_N[v]$ mod PP(v), it can be shown that:

    1. The mapping T: C1→C2 defined by T(SMS$^{-1}$) = av +d where av$_1$+d=X and av$_2$ + d =Y,

    is an isomorphism, and

    2. For a given element in C1 finding its isomorphic image by someone who knows PP(v) is as difficult as factoring N.

**3.4 Verification**

The methods provide a mechanism to verify that a returned result of a calculation performed by a third party on encrypted multivariate input is valid. We designate the returned result as $R_M^*$ where MORE is used. The result is a homomorphic calculation denoted $f$ performed on $A_1, A_2, ..., A_k$ wherein $A_i$ is equal to one of MORE($X_i$); $f(A_1, A_2, ..., A_k)$ is

equal to MORE ($f(X_1,X_2,...,X_k)$)= $f$(MORE ($X_1$), MORE ($X_2$),...,MORE ($X_k$)).

The verifier receives the result of $f(A_1,A_2,...,A_k)$ in the form:

$$\mathrm{MORE}\big(f(X_1,X_2,\ldots.,X_K)\big) = S\begin{pmatrix} f(X_1,X_2,\ldots.,X_K) & 0 \\ 0 & f(Y_1,Y_2,\ldots.,Y_K) \end{pmatrix} S^{-1} = R_M^*$$

It decrypts the result to yield $f(X_1,X_2,\ldots.,X_K)$ and $f(Y_1,Y_2,\ldots.,Y_K)$

The verifier has precomputed $f(Y_1,Y_2,\ldots.,Y_K)$. This may be done well before computing the encrypted input. The verifier compares the decrypted value $f(Y_1,Y_2,\ldots.,Y_K)$ with the precomputed one, and deems the result of the computation of $f(X_1,X_2,...,X_k)$ verified if a match occurs.

## 4. Applications

In this section applications are proposed that exploit the inherent properties of the methods.

### 4.1 Securing for LOCOS and untrusted open cloud

For remote computing in an untrusted platform we consider three cases that define the secrets in a model of an **input** and **function** (algorithm):

a) **Only the input is secret** (not the algorithm).
The algorithm is characterized as a secret polynomial whose input is homomorphically-encrypted data as in a keyed-hash where the only the key is secret. In general, the computed polynomial may have a multivariate input.
b) **Only the algorithm is secret** (not the input).
The algorithm is characterized by a polynomial some of whose coefficients are secret large-numbers (mod N) and the input is public. An example is a Secret Function for Key Generation (SFKG) whose input is a public ECM (used in broadcast CA systems). Yet another similar example is a secret HMAC function depicted below. The HMAC runs securely on an open machine; the last step in its process is delivered to the secure client for verification.

c) **Both the algorithm and input are secret.**
Both the algorithm and its input are secret - not known to the processing entity. (note that both the algorithm and its input must be encrypted with the same homomorphic-encryption key.)
Such an untrusted platform could be a public (open) cloud server, an STB host, a mobile phone ACPU, etc.; the decryption of the result is done by the secure client, e.g., smart card, SIM, RFID, or secure execution environment with secure OTP of a low performance device.

**4.2 Securing OSS Public Signature against Pollard Attack, HoMOSS (HomoMorphic OSS).**

The OSS public signature scheme described in [6] is very efficient both for signing and verifying; signing and verifying requires few modular multiplications.

Below we summarize its highlights.

A signature of a message is a pair (X,Y) satisfying the quadratic bivariate modular (QBM) equation $X^2 + \mu Y^2 = M$ (mod N), where M is the hash of the message.

The public key is the pair $(\mu, N)$, and the private key is $\varepsilon$, where $\varepsilon^2 = -\mu$ (mod N).

The signer calculates M and uses the private key $\varepsilon$ to find a solution, (X,Y), for the above QBM equation as follows: he selects a random value r modulo N and computes X and Y

$$X = \frac{1}{2}(r + \frac{M}{r}) \quad ; \quad Y = \frac{1}{2\varepsilon}(r - \frac{M}{r}) \; .$$

It is easily seen that X and Y solve the above QBM equation.

The problem of finding a solution for a QBM equation was thought to be hard, and it was therefore assumed that it is hard for an attacker who has no knowledge of $\varepsilon$ to forge a signature.

The OSS signature scheme was broken by Pollard and Schnorr [9]. They presented an algorithm for finding a solution of the bivariate quadratic equation of the form $X^2 + \mu Y^2 = M \bmod N$ where the factorization of N or the square root of $\mu \bmod N$ are not known.

We present a modification of the original OSS scheme to protect against the Pollard Schnorr attack.

**HoMOSS** - **Homomorphic-Modified OSS**

For U a 2x2 matrix over $Z_N$ we define a commutative ring of 2x2 matrices over $Z_N$, $C_U = \{B \mid BU = UB \mid B \in M_{2 \times 2}(Z_N)\}$, the subring of 2x2 matrices over $Z_N$ that commute with U.

It can be verified that $C_U$ is a module with dimension 2 over $Z_N$, and can be represented with two parameters $t_1, t_2$: $C_U = \{t_1 U + t_2 I \mid t_1, t_2 \in Z_N\}$.

The homomorphic non-deterministic encryption is induced by a one-way mapping: $Z_N \oplus Z_N \rightarrow C_U$.

The HoMOSS scheme presented in this section is based on equations of commutative matrices that are obtained from the consideration of two coupled OSS (QBM) equations' private keys.

We choose to illustrate HoMOSS by the use of the MORE method.

The Public key is a 2x2 matrix U over $Z_N$. The characteristic polynomial of U should not be a square of a linear polynomial and its root resides in $Z_N$.

The Private key is a matrix S, and the values $\varepsilon_1, \varepsilon_2$ (square roots of $\mu_1, \mu_2$, respectively), satisfying

$$U = S \begin{pmatrix} \mu_1 & 0 \\ 0 & \mu_2 \end{pmatrix} S^{-1}$$

**Signing a message:**

1. The message is hashed to produce two $Z_N$ parameters: $t_1, t_2$.

2. A matrix M in $C_U$ is calculated: $M = t_1 U + t_2 I$.

$$M = S \begin{pmatrix} M_1 & 0 \\ 0 & M_2 \end{pmatrix} S^{-1},$$

3. The matrix M has a representation the signer calculates $M_1 M_2$ from M.

4. The signer knows $\varepsilon_1, \varepsilon_2$ the square roots of $\mu_1, \mu_2$, respectively. He calculates a solution $X_1, Y_1$ of the equation $X_1^2 - \mu_1 Y_1^2 = M_1$ (mod N) and a solution $X_2, Y_2$ of the equation $X_2^2 - \mu_2 Y_2^2 = M_2$ (mod N) as in the original OSS scheme.

5. The signer computes the following two matrices in $C_U$:

$$A = S\begin{pmatrix} X_1 & 0 \\ 0 & X_2 \end{pmatrix} S^{-1}, \quad B = S\begin{pmatrix} Y_1 & 0 \\ 0 & Y_2 \end{pmatrix} S^{-1}.$$

6. Each of the matrices A and B in $C_U$ can be represented with two modulo N parameters.

Thus the signature is comprised of four modulo N numbers ($a_{11}, a_{12}, b_{11}, b_{12}$; from the first row of A and B, respectively).

**Verifying a signature:**

The verifier receives the message and signature - 4 modulo N numbers, ($a_{11}, a_{12}, b_{11}, b_{12}$).

1. The verifier recovers the missing elements of A and B (each is a known linear combination of two elements of the signature).

2. The verifier calculates the hash of the message and produces the $Z_N$ elements: $t_1, t_2$

3. The verifier calculates matrix M in $C_U$ : $M = t_1 U + t_2 I$. And,

4. Verifies that the matrix equation: $A^2 + U \cdot B^2 = M$ holds to accept the signature as valid.

**Homomorphic Modified OSS - simplified version**

A simplified version of the scheme is presented

**Signing a message:**

1. The message is hashed to produce a number m in $Z_N$.

2. The signer knows $\varepsilon_1, \varepsilon_2$ the square roots of $\mu_1, \mu_2$, he calculates a solution $X_1, Y_1$ of the equation $X_1^2 - \mu_1 Y_1^2 = m$ (mod N) and a solution $X_2, Y_2$ of the equation $X_2^2 - \mu_2 Y_2^2 = m$ (mod N) as in the original OSS scheme.

3. The signer computes the following two matrices in $C_U$ :

$$A = S\begin{pmatrix} X_1 & 0 \\ 0 & X_2 \end{pmatrix} S^{-1}, \quad B = S\begin{pmatrix} Y_1 & 0 \\ 0 & Y_2 \end{pmatrix} S^{-1}.$$

4. Each of the matrices A and B in $C_U$ can be represented using two modulo N parameters.

Thus the signature is comprised of four modulo N numbers ($a_{11}, a_{12}, b_{11}, b_{12}$; from the first row of A and B, respectively).

**Verifying a signature:**

The verifier receives the message and signature (4 modulo N numbers).

1. The verifier recovers the missing elements of A and B (each is a known linear combination of two elements of the signature).

2. The verifier calculates the hash of the message and produces the number m. And

3. Verifies that the matrix equation: $A^2 + U \cdot B^2 = m \cdot I$ holds to accept the signature. It can be readily shown that a valid signature will satisfy the above matrix equation.

### HoMOSS Resistance against Pollard and Schnorr attack

The Pollard and Schnorr attack [9] is predicated on the fact that the OSS QBM equation over $Z_N$ can be viewed as a particular multiplicative norm in $Z_N$, $Z_L$ or Z (L being a prime). The particular multiplicative norm enables Pollard to start by finding a solution over $Z_L$ and then define a recursive process to yield a solution of the OSS QBM over Z that is transformable to $Z_N$.

The proposed protection of the OSS scheme stems from the use of matrices in the commutative ring $C_U$ instead of elements in $Z_N$. We presume that it is hard to find a norm over matrices that can be utilized in Pollard's attack.

### 4.3 Practical Fully Homomorphic Randomization of Arbitrary Data

The randomization of arbitrary data is presumed to take place in a secure environment; otherwise one could deduce the randomization key from given randomized arbitrary data. A potential application is to protect against side-channel attacks on algorithm execution aimed at getting the algorithm's sensitive data. Side-channel attacks are mounted on secure execution environment (e.g., secure smart cards) where leakage information (e.g., timing or power consumption), is gathered to glean secret information. For example, in the AES key attack, the attacker runs the algorithm repeatedly with varying plaintexts but with the same AES key while gathering the side-channel information in order to reveal the AES key. However, in this non-deterministic approach, the randomized key and plaintext change per cipher run thereby foiling such attack, (see Figure XX below). Note, AES inherently lends itself to an efficient representation as a sequence of algebraic operations over the $F_{256}$ that can be efficiently run.

**Secure Element Without Randomization**

S    F(S, Xi)=OUTPUT i

Xi

Output-i

Repeat for different Xi and analyze the data (e.g. DPA) or other behavior of Output-i to deduce bits of secret(s) S

**Secure Element With Randomization**

S    $PORE(S,Ri) = S^{*}i$

Xi    $PORE(Xi,R'i) = X^{*}i$

$F(S^{*}i, X^{*}i)=OUTPUT^{*}i$

Output-i

Randomization (of inputs S and Xi) prevents such attack as every run of F presents different OUTPUT*i corresponding to randomized inputs. The Homomorphic property allows F to be computed from beginning to end without correction for the randomization effect per step.

The randomization can provide protection against fault attacks. An induced fault is detectable since the computations' validity can be verified; see Appendix for discussion on verification.

### 5. Performance and Throughput

Referring to section 3.2 (PORE) we see that the cost of a single input encryption / decryption (or randomization) is one multiplication of large numbers. The throughput is two large numbers in the steady state (two additional PPV coefficients are passed only once as the PPV does not change per encryption). For the result of a single homomorphic computation only two large numbers are returned.

Cost of calculating a product of two distinct variables is five multiplications of large numbers. Cost of squaring a variable is four multiplication, and computing $x^{2n}$ results in 4n multiplications.

Division can be done in ten multiplications plus one division.

## 6. Security

The **fully**-homomorphic (symmetric) encryption schemes presented in this paper are essentially secret linear transformations that are utilized to construct a non-deterministic encryption schemes. In general, secret linear schemes are inherently ill-suited for cryptographic applications as the secret transformation is easily recovered using linear algebra techniques once sufficient number of plain text and cipher text pairs are known. Thus such transformations are not used for traditional data encryption where it is usually assumed the adversary knows the plain text. However, the specific linear transformations presented in this paper are deemed secure under specific conditions, and has benefits for practical (efficient) homomorphic computation. The proposed linear transformations provide sound security in various applications under two conditions: 1. the plaintext is not known and 2. The plain text can be regarded as "random data".

In this section we claim that the homomorphic encryption scheme, MORE, as presented in section 3.1, ensures high degree of security under the assumption that the plaintext is comprised of unknown random large-numbers in $Z_N$.

**Theorem:** One who knows the encrypted values of random plain text values $X_1...X_k$ in $Z_N$, and is capable of calculating any one of the plain text values (inputs) can factor N. **Proof:** without loss of generality we show that if an adversary can calculate the first input, $X_1$, he can factor N. We first prove the theorem for k=1, we denote by $A_1$ the encrypted value of $X_1$: $A_1 = Enc(X_1)$

**Lemma 1:** An adversary who gets $A_1$ does not get more information about $X_1$ than an adversary who only knows the characteristic polynomial of $A_1$.

**Proof:** The process encrypting $X_1$ requires an independent selection of a random secret value $Y_1$ in $Z_N$ and a secret random invertible matrix S over $Z_N$. We show below (a) that the distribution of the encrypted matrix $A_1$ is indistinguishable from the uniform distribution over all matrices whose characteristic polynomial is given by $f(x)= (x - X1)(x - Y1)$. We then show (b) that one who knows $f(x)$ is capable of uniformly selecting a matrix among all matrices with characteristic polynomial equals to $f(x)$. As a result we conclude that when one is given $A_1$ the information one gets about $X_1$ is the same information provided by knowledge of the characteristic polynomial of $A_1$.

a. The distribution of $A_1$ is indistinguishable from uniform distribution over all matrices whose characteristic polynomial is $f(x)$, $f(x) = (x - X_1)(x - Y_1)$. A matrix B having $f(x)$ as a characteristic polynomial has the following representation

$$B = T \begin{pmatrix} X_1 & 0 \\ 0 & Y_1 \end{pmatrix} T^{-1}$$

for some regular matrix $T \in GL_{2x2}(Z_N)$. We denote by $S_{f(x)}$ the set of all 2x2 matrices over $Z_N$ having $f(x)$ as a characteristic polynomial. One can define a partitioning of the regular 2x2 matrices over $Z_N$ ($GL_{2x2}(Z_N)$). For any matrix $B \in S_{f(x)}$ we define the set of regular matrices $S_B$ to be: $S_B = \{S | S \in$

$$GL_{2x2}(Z_N) \; ; \; S \begin{pmatrix} X_1 & 0 \\ 0 & Y_1 \end{pmatrix} S^{-1} = B\}.$$

We show that the size of $S_B$ is independent of $B$, $X_1$, $Y_1$ as long as the inequalities $X_1 \neq Y_1$, $X_1 \neq 0$, $Y_1 \neq 0$ mod P and Q are satisfied*. Let $T_1$, $T_2$ be matrices in $S_B$ iff

$$T_1 \begin{pmatrix} X_1 & 0 \\ 0 & Y_1 \end{pmatrix} T_1^{-1} = B \; ; \; T_2 \begin{pmatrix} X_1 & 0 \\ 0 & Y_1 \end{pmatrix} T_2^{-1} = B \rightarrow T_1 \begin{pmatrix} X_1 & 0 \\ 0 & Y_1 \end{pmatrix} T_1^{-1} = T_2 \begin{pmatrix} X_1 & 0 \\ 0 & Y_1 \end{pmatrix} T_2^{-1}$$ iff

$$\begin{pmatrix} X_1 & 0 \\ 0 & Y_1 \end{pmatrix} T_1^{-1} \cdot T_2 = T_1^{-1} \cdot T_2 \begin{pmatrix} X_1 & 0 \\ 0 & Y_1 \end{pmatrix}$$ i.e., $E \triangleq T_1^{-1} T_2$ commutes with $\begin{pmatrix} X_1 & 0 \\ 0 & Y_1 \end{pmatrix}$. We conclude that

any matrix $T_2$ in $S_B$ can be represented as $T_2 = T_1 \cdot E$ for some invertible matrix E that commutes with $\begin{pmatrix} X_1 & 0 \\ 0 & Y_1 \end{pmatrix}$.

A matrix $\begin{pmatrix} a & b \\ c & d \end{pmatrix}$ commutes with $\begin{pmatrix} X_1 & 0 \\ 0 & Y_1 \end{pmatrix}$ iff $b \cdot X_1 = b \cdot Y_1$ mod N and $c \cdot X_1 = c \cdot Y_1$ mod N; since $X_1 \neq Y_1$ both

mod P and mod Q, we get $c = 0$ mod N and $d = 0$ mod N, and E has the form $\begin{pmatrix} a & 0 \\ 0 & d \end{pmatrix}$ $a, d \in Z_N$. E is an invertible matrix, i.e., $(a, N) = 1$ and $(d, N) = 1$. There are $\Phi(N)^2 = (P - 1)^2(Q - 1)^2$ such matrices. QED

*We note that the events: $(X_1, N) \neq 1$, $(X_1 - Y_1, N) \neq 1$ or $(Y_1, N) \neq 1$, are of negligible probability.

b. One who knows the characteristic polynomial of $A_1$, $f(x)$, is capable of selecting a uniformly distributed matrix among all matrices with characteristic polynomial $f(x)$. Let $f(x) = x^2 + a \cdot x + b$, we define the matrix $B = \begin{pmatrix} 0 & 1 \\ -b & -a \end{pmatrix}$ with characteristic polynomial $f(x)$. For $X_1 \neq Y_1$ mod P and Q, there is an invertible 2x2 matrix $U$ over $Z_N$ such that $B = U \begin{pmatrix} X_1 & 0 \\ 0 & Y_1 \end{pmatrix} U^{-1}$. We select a random invertible 2x2 matrix $R$ over $Z_N$, and define $D = RBR^{-1}$; $D \in S_{f(x)}$. We claim that $D$ is uniformly distributed among all matrices with characteristic polynomial $f(x)$. Above it is shown that for $X_1 \neq Y_1$, $X_1 \neq 0$, $Y_1 \neq 0$ mod P and Q the number of matrices $T$ generating the same matrix $T \begin{pmatrix} X_1 & 0 \\ 0 & Y_1 \end{pmatrix} T^{-1}$ is constant. Since $D = RU \begin{pmatrix} X_1 & 0 \\ 0 & Y_1 \end{pmatrix} (RU)^{-1}$ and $RU$ is a uniformly distributed regular random matrix, we conclude that the matrix $D$ is distributed uniformly among the matrices in $S_{f(x)}$. QED

We conclude the proof of the theorem for k=1, by observing that if one is capable of finding the plain text $X_1$ from its encrypted value, $A_1$, then he is capable of finding a root of a random quadratic polynomial modulo N, $f(x)$; this problem is known to be as hard as factoring N.

The general case: One who gets the encrypted values of random plain text values $X_1...X_k$ in $Z_N$, and is capable of calculating the plain text value $X_1$ can factor N.

**Lemma 2:** The information about $X_1$ provided by the encrypted values: $A_1 = Enc(X_1)$, $A_2 = Enc(X_2)$, ..., $A_k = Enc(X_k)$, is the same as the information that $A_1$ provides about $X_1$.

**Proof:** The proof of the lemma has two steps. In step a. we show that the matrices $A_2$, $A_3$, ... $A_k$ are randomly selected matrices from the set of all matrices that commute with $A_1$; denoted as $C_{A1}$. In step b. we show that one who gets $A_1$ can randomly select k-1 matrices of $C_{A1}$.

As a result of these steps we conclude that one who knows the sequence of matrices $A_1, A_2, ... A_k$ doesn't get more information about $X_1$ than one who only sees $A_1$. Given above proof the special case k=1 we can state that finding $X_1$ is as hard as factoring N.

a. Define the set of all matrices that commute with $A_1$:

$$C_{A1} = \{B | BA = AB ; B \in M_{2x2}(Z_N)\}.$$

We have $A_1 = S \begin{pmatrix} X_1 & 0 \\ 0 & Y_1 \end{pmatrix} S^{-1}$, for B that commutes with $A_1$ we have

$B \cdot S \begin{pmatrix} X_1 & 0 \\ 0 & Y_1 \end{pmatrix} S^{-1} = S \begin{pmatrix} X_1 & 0 \\ 0 & Y_1 \end{pmatrix} S^{-1} \cdot B \rightarrow S^{-1} BS \begin{pmatrix} X_1 & 0 \\ 0 & Y_1 \end{pmatrix} = \begin{pmatrix} X_1 & 0 \\ 0 & Y_1 \end{pmatrix} S^{-1} BS$, i.e., $\begin{pmatrix} X_1 & 0 \\ 0 & Y_1 \end{pmatrix}$

commutes with $S^{-1}BS$. We showed in above lemma 1 that such matrices are of the form $\begin{pmatrix} a & 0 \\ 0 & d \end{pmatrix}$ for $a, d \in Z_N$

where, $X_1 \neq Y_1$ mod P and Q . Therefore, $B = S \begin{pmatrix} a & 0 \\ 0 & d \end{pmatrix} S^{-1}$, i.e., $C_{A1}$ is a 2 dimensional sub-module of the $Z_N$

module of the 2x2 matrices over $Z_N$. The matrices $A_i$ for $2 \leq i \leq k$ have the form $S \begin{pmatrix} X_i & 0 \\ 0 & Y_i \end{pmatrix} S^{-1}$ for $X_i, Y_i$ random elements in $Z_N$. We therefore conclude that one can regard $A_2, ..., A_k$ as an independent random elements of $C_{A1}$.

b. We show that one who knows $A_1$ can select random elements from $C_{A1}$ by using a different representation of $C_{A1}$. Let $H_{A1} = \{a \cdot A_1 + b \cdot I | a, b \in Z_N\}$; it is easily verified that matrices of the form $aA_1 + bI$ commute with $A_1$ and also form a sub module of dimension 2 of the $Z_N$ module of the 2x2 matrices over $Z_N$. Therefore, $H_{A1} = C_{A1}$. One randomly selects parameters $a_i, b_i$ in $Z_N$ to yield a random choice of matrix $B_i$ in $C_{A1}$: $B_i = a_i \cdot A_1 + b_i \cdot I$.

Q.E.D.

A similar proof exists for a non-trivial rational function of the inputs.

## 7. Conclusion

Fully homomorphic efficient methods were presented for domain-specific applications. For symmetric key FHE the applications domain is security algorithms whose input is random large-numbers in $Z_N$. For randomization the input data is arbitrary elements of a commutative ring without any constraints of size. Fault detection capability is inherent allowing for verification of computed data. The cost of computation of encrypted data is reflected in the cost of product of two variables - five modular large-number multiplications. Encryption or decryption requires only one modular large-number multiplication. In addition, the methods employ operations in an algebraic domain of rings of commutative matrices which are likely new to cryptographic applications. We hope that this can be used to augment security in some algorithms as has been presented above for OSS, and to improve protection against some side-channel attacks.

A challenging area for search is finding new algorithms that will allow us to relax the current constraints of encryption for the proposed methods, e.g., large random values in ZN, such that arbitrary data can be efficiently encrypted for FHE application or for Somewhat homomorphic applications. Further investigation may shed light on our presumption that it is hard to find a norm over matrices that can be utilized in Pollard's attack.

## 8. Appendix: The Methods - Practical FSERFs - Generalized

Each of the isomorphic methods presented is an efficient non-deterministic Fully-homomorphic Symmetric Encryption and Randomization Function (FSERF). The input, IN, of the functions is comprised of k input elements in a commutative ring (CR) or in ring $Z_N$. Randomization is defined over a commutative ring (CR), and encryption is over ring $Z_N$ (all operations are mod N, where N is a product of two (secret) primes). Use of large random numbers mod N for the input IN and for the random parameters employed in the methods will provide a sufficient condition for security of the encryption, (see section 6).

Two fundamental isomorphic methods are defined below; each randomizes or encrypts a set i of any m distinct input elements of IN (where $0<m<k+1$ and $m<n$) denoted as input $X_{im}$ (= $(X_1, X_2, ...,X_m)$). The basic methods are a matrix-based method, MORE (Matrix Operation for Randomization or Encryption), and a polynomial-based method, PORE (Polynomial Operation for Randomization or Encryption). Additionally, a 'compound' method can be constructed by successively applying the basic methods.

Frequently, m equals 1; a method uses one input element (m=1, $X_{i1} =X_j$ (j=(1..k)) per method application to allow for computation of (arbitrary) multivariate input in functions whose operations are addition, multiplication and division. However, if, for example, there are two known multivariate functions with two distinct sets of inputs, e.g., $(X_1, X_2, ...,X_L)$ and $(X_{L+1}, X_{L+2}, ...,X_s)$, respectively, then no pair of variables in each of the input sets should be jointly encrypted (or randomized), i.e., with a single application of the method.

A compound method can be constructed by the successive application of the fundamental MORE and PORE.

### 8.1 The matrix method, MORE.

A randomly chosen secret nxn invertible matrix, S, in CR (or $Z_N$), is used as a symmetric key for randomization (or encryption). For each set $X_{im}$ of m distinct input elements selected from IN and denoted as $X_1, X_2, ...,X_m$ that are to be jointly randomized (or encrypted) we select n-m random numbers $Y_1, Y_2, ... Y_{n-m}$, where the input elements in $X_{im}$ and $Y_1, Y_2, ... Y_{n-m}$ are placed in order on the diagonal of a nxn diagonal matrix. We denote MORE's output matrix as Aim and define it as:

$$MORE(X_{im}) = A_{im} = S \begin{pmatrix} X_1 & 0 & & & \cdots\cdots & \cdots & & 0 \\ 0 & X_2 & 0 & & & \cdots & & \vdots \\ \vdots & 0 & \ddots & 0 & & \cdots & & \\ & & \ddots & X_m & & 0 & .. & \\ & & & 0 & Y_1 & \ddots & .. & 0 \\ \vdots & & \vdots & & 0 & Y_2 & 0 & \\ & & & & \vdots & \ddots & \ddots & 0 \\ 0 & 0 & & \cdots & & & 0 & Y_{n-m} \end{pmatrix} S^{-1} = \begin{pmatrix} a_{11} & \cdots & a_{1n} \\ \vdots & \ddots & \vdots \\ a_{n1} & \cdots & a_{nn} \end{pmatrix}$$

Where, $A_{im}$ is the randomized value or cipher text for plaintext $X_1, X_2, ...,X_m$, depending on the use of CR, or $Z_N$ (modulo N), respectively.

We note, again, that no pair of input variables represented by $X_1, X_2, ...,$ or $X_m$ is used in a single multivariate-input function, i.e., each of the encrypted (or randomized) elements (variables) must be used by a distinct function.

## 8.2 The Polynomial method, PORE.

PORE is a polynomial-based method where $PORE(X_{im}) = A_{im} = (a_{i0}, a_{i1},..., a_{in-1})$ in CR or $Z_N$.

We select n random numbers, $v_1$, $v_2,...,v_n$, in CR or $Z_N$, to define a public polynomial PP(v)= $\prod_{i=1}^{n}(v - v_i) = \sum_{j=0}^{n} C_j \cdot v^j$ ($C_n$=1). We let $P(v)$ be any function in variable v of the form $\sum_{j=0}^{n-1} a_{ij} \cdot v^j$ which satisfies the equations: $\sum_{j=0}^{n-1} a_{ij} \cdot v_1^j = X_1$ , $\sum_{j=0}^{n-1} a_{ij} \cdot v_2^j = X_2$ , $_{,\,....\,,}$ $\sum_{j=0}^{n-1} a_{ij} \cdot v_m^j = X_m$.

To define $PORE(\ )$ for a particular $X_{im}$ we assign n-m chosen random values in CR or $Z_N$, to $a_{i,m}$, $a_{i,m+1}$ ..., $a_{i,n-1}$, that would yield a solution for the unknown coefficients $a_{i,0}$, $a_{i,1}$ ..., $a_{i,m-1}$ in the above equations; (else, absent a solution, a new set of n-m random values is selected in another attempt to solve the above equations for the unknown coefficients). Or, alternatively, we select n-m random values $R_1$, ..., $R_{n-m}$ in CR or $Z_N$ that would solve the following n simultaneous equations: $\sum_{j=0}^{n-1} a_{ij} \cdot v_1^j = X_1$ , $\sum_{j=0}^{n-1} a_{ij} \cdot v_2^j = X_2$ , $_{....\ ,}$ $\sum_{j=0}^{n-1} a_{ij} \cdot v_m^j = X_m$ , $\sum_{j=0}^{n-1} a_{ij} \cdot v_{m+1}^j = R_1$ , $_{,}\sum_{j=0}^{n-1} a_{ij} \cdot v_{m+2}^j = R_2$ , $_{....,}\sum_{j=0}^{n-1} a_{ij} \cdot v_n^j = R_{n-m}$ for unknowns $a_{i0}$, $a_{i1}$, ..., $a_{in-1}$, thereby producing, as above, for $X_1$, $X_2$,... $X_m$ a random text comprising the set ($a_{i0}$, $a_{i1}$, ..., $a_{in-1}$) and public ($C_0$, $C_1$, ..., $C_{n-1}$, $C_n$) of PP(v).

This produces the joint randomization (or encryption) output, $A_{im}$, for plaintext $X_1$, $X_2$,... ,$X_m$, in the form of the set ($a_{i0}$, $a_{i1}$, ..., $a_{in-1}$) and a public set of coefficients ($C_0$, $C_1$, ..., $C_{n-1}$, $C_n$) of P(v). Note, that the set of coefficients ($C_0$, $C_1$, ..., $C_{n-1}$, $C_n$) is required for performing arithmetic operations with randomized (or encrypted) elements.

## 8.3 Compound Methods

We note that other methods can result from the successive application of a mix of functions PORE($X_i$) and MORE($X_i$), as in:

$$\text{MORE}(\text{PORE}(X_i)) = ( MORE(\boldsymbol{a_{i0}}), \text{MORE}(\boldsymbol{a_{i1}}), ..., MORE(\boldsymbol{a_{i\,n-1}})) =$$

$$\left( \begin{pmatrix} a_{11} & \cdots & a_{1n} \\ \vdots & \ddots & \vdots \\ a_{n1} & \cdots & a_{nn} \end{pmatrix}_{i0} , \begin{pmatrix} a_{11} & \cdots & a_{1n} \\ \vdots & \ddots & \vdots \\ a_{n1} & \cdots & a_{nn} \end{pmatrix}_{i1} , ...., \begin{pmatrix} a_{11} & \cdots & a_{1n} \\ \vdots & \ddots & \vdots \\ a_{n1} & \cdots & a_{nn} \end{pmatrix}_{i\,n-1} \right);$$

and conversely

$$\text{PORE}(\text{MORE}(X_i)) = \text{PORE} \left( \begin{pmatrix} a_{11} & \cdots & a_{1n} \\ \vdots & \ddots & \vdots \\ a_{n1} & \cdots & a_{nn} \end{pmatrix} \right) \text{ where PORE}(a_{mj}) = (a_0, a_1, ..., a_{n-1})_{mj},$$

therefore

$$\text{PORE}(\text{MORE}(X_i)) = \begin{pmatrix} (a_0, a_1, ..., a_{n-1})_{11} & \cdots & (a_{i0}, a_{i1}, ..., a_{i\,n-1})_{1n} \\ \vdots & \ddots & \vdots \\ (a_0, a_1, ..., a_{n-1})_{n1} & \cdots & (a_0, a_1, ..., a_{n-1})_{nn} \end{pmatrix}.$$

## 8.4 Homomorphic operations for multivariate functions

It can be readily shown that the methods above are fully homomorphic (addition and multiplication) and, moreover, are homomorphic for division.

We define below the operation of addition, multiplication and division of encrypted (or randomized) values subject to the above constraints of CR and $Z_N$, respectively.

We let A1 and A2 be the encrypted (or randomized) values of $X_1$ and $X_2$, respectively, under MORE or PORE, s.t. MORE($X_i$) = $A_i$ matrix, and PORE($X_i$) = $A_i$ = $a_{i0}$, $a_{i1}$, ... , $a_{in-1}$ under $C_0$, $C_1$, ..., $C_{n-1}$, $C_n$ of

$P(v) = \sum_{j=0}^{n} C_j \cdot v^j$ (C$_n$=1).

The Ai's comprise the input of a homomorphic function in which they are added, multiplied, or divided. We thus have for:

Addition

$$\text{MORE} ( X_1 ) + \text{MORE} ( X_2 ) = A_1 + A_2 ;$$

and

$$\text{PORE} ( X_1 ) + \text{PORE} ( X_2 ) = a_{10} + a_{20} , \; a_{11} + a_{21} , \ldots , a_{1\,n-1} + a_{2\,n-1}$$

Multiplication

$$\text{MORE} ( X_1 ) \cdot \text{MORE} ( X_2 ) = A_1 \cdot A_2 \; ;$$

and

$$\text{PORE} ( X_1 ) \cdot \text{PORE} ( X_2 ) = r_0, r_1, \ldots, r_{n-1},$$

the coefficients of the resulting n-1 order polynomial r(v), where

r(v)= $((\sum_{j=0}^{n-1} a_{1j} \cdot v^j) \cdot (\sum_{j=0}^{n-1} a_{2j} \cdot v^j) )\bmod \sum_{j=0}^{n} C_j \cdot v^j$.

Division

1/ MORE $( X_2 ) = A_2^{-1}$ and MORE $(X_1)$ / MORE $( X_2 )= A_1 \cdot A_2^{-1};$ and

$$\text{Let PORE} (X_1) = a_{10}, a_{11}, \ldots, a_{1\,n-1} \text{ and PORE} (X_2) = a_{20}, a_{21}, \ldots, a_{2\,n-1}$$

and

$$\text{let 1/PRHT}( X_2 ) = u_{20}, u_{21}, \ldots, u_{2\,n-1}$$

be derived by solving:

$$(\sum_{j=0}^{n-1} u_{2j} \cdot v^j) \cdot (\sum_{j=0}^{n-1} a_{2j} \cdot v^j) )\bmod \sum_{j=0}^{n} C_j \cdot v^j =1$$

in terms of n unknown coefficients $u_{2j}$,($j$ = 0,...,$n$-1), thereby determining

$$\sum_{j=0}^{n-1} g_{2j}( u_{20}, u_{21}, \ldots, u_{2\,n-1}, \quad a_{10}, a_{21}, \ldots, a_{2\,n-1}, c_{10}, c_{21}, \ldots, c_{2\,n-1,}) \cdot v^j)$$

where, $g_{2j}(\ )$ is a linear combination of the n unknowns $u_{2j}$; and
solving n derived equations $g_{20}(\ )=1$, and $g_{2j}(\ )=0$ for j=1,..,n-1 for all $u_{2j}$ j=0,...,n-1, for the n unknowns $u_{20}, u_{21}, ..., u_{2\ n-1}$; and thus

$$PORE\ (X_1)\ /\ PORE\ (X_2) = PRHT\ (X_1)\ \cdot\ (\ 1/PORE(X_2)\ ) =$$

$$((\textstyle\sum_{j=0}^{n-1} a_{1j} \cdot v^j) \cdot (\textstyle\sum_{j=0}^{n-1} u_{2j} \cdot v^j)\ )\bmod \textstyle\sum_{j=0}^{n} C_j \cdot v^j.$$

## 8.5 Decryption or Derandomization

Once a homomorphic function, f, is computed over the encrypted (or randomized) multivariate input, the returned result has to be decrypted (or derandomized). Let $A_i$ denote the encrypted or randomized $X_i$ input; we receive the result of such a function $f(A_1, A_2, ...,A_k)$ in one of the following forms:

$$f(A_1, A_2, ..., A_k) = \text{MORE}\big(f(X_1, X_2, ...., X_K)\big) =$$

$$S \begin{pmatrix} f(X_1, X_2, ...., X_K).. & 0.. & 0 \\ \cdot & \cdot & \cdot \\ 0.. & f(Y_{m1}, Y_{m2}, ...., Y_{mk}).. & 0 \\ \cdot & \cdot & \cdot \\ 0.. & 0.. & f(Y_{n-1,1}, Y_{n-1,2}, ...., Y_{n-1,k}) \end{pmatrix} S^{-1}$$

$$= \begin{pmatrix} a_{11} & \cdots & a_{1n} \\ \vdots & \ddots & \vdots \\ a_{n1} & \cdots & a_{nn} \end{pmatrix} = R_M^*;$$

Or,

$f(A_1, A_2, ..., A_k)$ is in the form of $a^*{}_0,\ a^*{}_1\ ...,a^*{}_{n-1} = R_P^*;$

In the case where the result is in the matrix form of $R_M^*$, the decryption yields:

$$f(X_1,\ X_2, ...,\ X_k) =\ S^{-1} R_M^* S\ ;$$

$$S^{-1}= \begin{pmatrix} s'_{11} & \cdots & s'_{1n} \\ \vdots & \ddots & \vdots \\ s'_{n1} & \cdots & s'_{nn} \end{pmatrix}$$

or, alternatively, using $S$ to determine

$$f(X_1,\ X_2, ...,\ X_k) = a_{11} + (1/s'_{11}) \cdot \textstyle\sum_{j=2}^{n} a_{j1} \cdot s'_{1j} = (1/s'_{11}) \cdot \textstyle\sum_{j=1}^{n} a_{j1} \cdot s'_{1j}$$

And for PORE() we use $R_P^*$ and $v_1$ to determine:

$$f(X_1,\ X_2, ...,\ X_k) =\ \textstyle\sum_{j=0}^{n-1} a_j^* \cdot v_1^j.$$

## 8.6 Verification of integrity of computations

The methods provide a mechanism to verify that a returned result of a calculation performed by a third party on encrypted multivariate input is valid. We designate the returned result as $R_M^*$ or $R_P^*$ depending upon whether MORE (denoted below as M) or PORE (denoted below as P) is used. The result is of a homomorphic calculation denoted $f$ performed on $A_1, A_2, ..., A_k$ wherein $A_i$ is equal to one of $M(X_i)$ and $P(X_i)$; $f(A_1, A_2, ..., A_k)$ is equal to either $M(f(X_1, X_2, ..., X_k)) = f(M(X_1), M(X_2), ..., M(X_k))$, or to $P(f(X_1, X_2, ..., X_k)) = f(P(X_1), P(X_2), ..., P(X_k))$.

The verifier receives the result of $f(A_1, A_2, ..., A_k)$ in one of the following forms:

$$M(f(X_1, X_2, ...., X_K)) =$$

$$S \begin{pmatrix} f(X_1, X_2, ...., X_K).. & 0.. & 0 \\ . & . & . \\ 0.. & f(Y_{m1}, Y_{m2}, ...., Y_{mk}).. & 0 \\ . & . & . \\ 0.. & 0.. & f(Y_{n-1,1}, Y_{n-1,2}, ...., Y_{n-1,k}) \end{pmatrix} S^{-1}$$

$$= R_M^*; \quad \text{and}$$

$f(A_1, A_2, ..., A_k)$ in the form of $a^*{}_0, a^*{}_1 ..., a^*{}_{n-1}, = R_P^*;$

Where the result is in the form of $R_M^*$:

The verifier has precomputed $f(Y_{m1}, Y_{m2}, ...., Y_{mk})$, for some m, in (1,2,...,n-1) where $Y_{mj}$ the $m^{th}$ random used in encrypting $X_j$. This may be done well before computing the encrypted input.

It then decrypts $R^*{}_M$ to determine $f(Y_{m1}, Y_{m2}, ...., Y_{mk})$, from the resulting matrix diagonal of the m+1 row. Finally it compares the decrypted $f(Y_{m1}, Y_{m2}, ...., Y_{mk})$ with the precomputed one, and deems the result of the computation of $f(Xi)$ verified if a match occurs.

Where the result is in the form of $R_P^*$:

The verifier has precomputed $f(R_{m1}, R_{m2}, ...., R_{mk})$, for some m, in 1,2,...,n-1 where $R_{mj}$ is the $m^{th}$ random used in encrypting $X_j$. This may be done well before computing the encrypted input.

It uses $(v_1, v_2, ...., v_n)$ and picks the same m in (1,..,n-1) as above to determine: $\sum_{j=0}^{n-1} a_j^* \cdot v_{m+1}{}^j = f(R_{m1}, R_{m2}, ..., R_{mk})$, and it compares the determined $f(R_{m1}, R_{m2}, ..., R_{mk})$ with the precomputed, and deems the result of the computation of $f(X_1, X_2, ...., X_K)$ verified if a match occurs.

**References**

1. Can Homomorphic Encryption be Practical? Kristin Lauter, Micahel Naehring, Vinod Vikuntanathan

2. Zvika Brakerski and Vinod Vaikuntanathan. Efficient fully homomorphic encryption from (standard) LWE. FOCS, 2011.

3. Craig Gentry. Fully homomorphic encryption using ideal lattices. In Michael Mitzenmacher, editor, STOC, pages 169-178. ACM, 2009

4. Implementing Gentry's fully-homomorphic encryption scheme, Gentry, S Halevi - Advances in Cryptology-EUROCRYPT 2011,

5. R. L. Rivest, L. Adleman, and M. L. Dertouzos. On data banks and privacy homomorphisms. In Foundations of Secure Computation, 1978

6. Ong, Schnorr, Shamir An Efficient signature based on quadratic equations, proceedings of the 16'th symposium on theory of computing pp.208-216 1984

7. Rivest, R.; A. Shamir; L. Adleman (1978). "A Method for Obtaining Digital Signatures and Public-Key Cryptosystems". Communications of the ACM 21 (2): 120-126 .

8. FIPS -186-3 The third and current revision to the official DSA specification.

9. J.Pollard & C.Schnorr "An efficient solution of the congruence x2 + ky2 = m modulo n "IEEE transactions on Information Theory, vol. IT-33 no.5., September 1987 pp 208-216

**Claims**

1. A fully homomorphic method for randomizing an input, wherein all computations are over a commutative ring hereinafter denoted as CR, the method comprising:

    receiving an input denoted INP comprising a sequence of k input elements in CR;
    performing either one of (a) or (b):

        (a) randomly choosing a secret nxn matrix in CR, hereinafter denoted as S, S being utilized as a symmetric randomizing key, wherein S comprises an invertible matrix over CR;
        determining $S^{-1}$;
        for each set i of m distinct input elements among k elements, wherein 0<m<k+1 and m<n selected from INP that are to be jointly randomized, and denoted hereinafter as $X_1$, $X_2$, ...,$X_m$, selecting n-m (n minus m) random numbers $Y_1$, $Y_2$, ... $Y_{n-m}$, in CR, where the input elements $X_1$, $X_2$, ...,$X_m$; at least one random number selected from among the set of random numbers $Y_1$, $Y_2$, ... $Y_{n-m}$; and, optionally, one or more constants are placed in a diagonal of an nxn diagonal matrix, denoted *M,* wherein, aside from the diagonal, matrix *M* is only populated by zeros; and
        determining random output $A_{im}$ for the m input elements in set i denoted as $\{X_{im}\}$= $X_1$, $X_2$, ...,$X_m$, by utilizing a matrix-based randomizing and homomorphic transformation function hereinafter denoted MRHT, wherein:

$$MRHT(\{X_{im}\}) = A_{im} = SM\,S^{-1} = \begin{pmatrix} a_{11} & \cdots & a_{1n} \\ \vdots & \ddots & \vdots \\ a_{n1} & \cdots & a_{nn} \end{pmatrix}$$

        thereby producing a random output $A_{im}$ corresponding to the set i of m input elements $\{X_{im}\}$ =$X_1$, $X_2$, ...,$X_m$; and
        (b) selecting n random numbers in CR, the n random numbers hereinafter denoted as $v_1$, $v_2$,... ,$v_n$;

        determining a public polynomial $P(v)= \prod_{i=1}^{n}(v - v_i) = \sum_{j=0}^{n} C_j \cdot v^j$ $(C_n=1)$; for each set i of m distinct input elements among k elements, wherein 0<m<k+1 and m<n selected from INP that are to be jointly randomized and denoted hereinafter as $X_1$, $X_2$, ..., $X_m$, selecting a polynomial-based randomizing and homomorphic transformation function hereinafter denoted PRHT ($X_{im}$), comprising any function in variable v of the form $\sum_{j=0}^{n-1} a_{ij} \cdot v^j$ which satisfies the equations:

$$\sum_{j=0}^{n-1} a_{ij} \cdot v_1{}^j = X_1 , \sum_{j=0}^{n-1} a_{ij} \cdot v_2{}^j = X_2 , .... , \sum_{j=0}^{n-1} a_{ij} \cdot v_m{}^j = X_m;$$

        choosing n-m random values in CR, for $a_{i,m}$, $a_{i,m+1}$ ..., $a_{i,n-1}$, that would yield a solution for the above equations for $a_{i,0}$, $a_{i,1}$ ..., $a_{i,m-1}$; and
        if (b) was performed, then performing either one of (c) or (d):
        (c) producing a random output $A_{im}$ corresponding to input elements $X_1$, $X_2$,... ,$X_m$ comprising the set ($a_{i0}$, $a_{i1}$, ..., $a_{i\,n-1}$) and public set of coefficients ($C_0$, $C_1$, ..., $C_{n-1}$, $C_n$) of P(v), wherein the public set of coefficients ($C_0$, $C_1$, ..., $C_{n-1}$, $C_n$) are required for arithmetic performing operations with input elements; and
        (d) selecting for the given input elements $X_1$, $X_2$, ...., $X_m$, n-m random values $R_1$, ..., $R_{n-m}$ in CR that would solve the following n simultaneous equations:

$$\sum_{j=0}^{n-1} a_{ij} \cdot v_1{}^j = X_1 , \qquad \sum_{j=0}^{n-1} a_{ij} \cdot v_2{}^j = X_2 , \qquad .... , \qquad \sum_{j=0}^{n-1} a_{ij} \cdot v_m{}^j = X_m ,$$

$$\sum_{j=0}^{n-1} a_{ij} \cdot v_{m+1}{}^{j} = R_1 \text{ ,} \qquad\qquad \sum_{j=0}^{n-1} a_{ij} \cdot v_{m+2}{}^{j} = R_2 \text{ ,}$$

...,

$$\sum_{j=0}^{n-1} a_{ij} \cdot v_{n}{}^{j} = R_{n\text{-}m}$$

for unknowns $a_{i0}$, $a_{i1}$, ..., $a_{i\,n\text{-}1}$, thereby producing, for $X_1$, $X_2$,... $X_m$ a random text comprising the set $(a_{i0}, a_{i1}, ..., a_{i\,n\text{-}1})$ and public set $(C_0, C_1, ..., C_{n\text{-}1}, C_n)$ of P(v).

2.  The method according to claim 1, wherein the randomization of the input INP comprises a successive application of a mix of functions PRHT($X_i$) and MRHT($X_i$), where Xi denotes a set of m distinct input elements of INP and wherein:

$$\text{MRHT(PRHT}(X_i)) =( \text{MRHT}(\boldsymbol{a_{i0}}), \text{MRHT}(\boldsymbol{a_{i1}}), ..., \boldsymbol{M}\text{RHT}(\boldsymbol{a_{i\,n-1}})) =$$

$$=\left(\begin{pmatrix} a_{11} & \cdots & a_{1n} \\ \vdots & \ddots & \vdots \\ a_{n1} & \cdots & a_{nn} \end{pmatrix}_{i0}, \begin{pmatrix} a_{11} & \cdots & a_{1n} \\ \vdots & \ddots & \vdots \\ a_{n1} & \cdots & a_{nn} \end{pmatrix}_{i1}, ....., \begin{pmatrix} a_{11} & \cdots & a_{1n} \\ \vdots & \ddots & \vdots \\ a_{n1} & \cdots & a_{nn} \end{pmatrix}_{i\,n-1}\right);$$

and

$$\text{PRHT(MRHT}(X_i))=\text{PRHT}\left(\begin{pmatrix} a_{11} & \cdots & a_{1n} \\ \vdots & \ddots & \vdots \\ a_{n1} & \cdots & a_{nn} \end{pmatrix}\right) \text{ where PRHT}(a_{mj}) =$$

$$(a_0, a_1, ..., a_{n-1})_{mj}, \text{ therefore}$$

$$\boldsymbol{P}\text{RHT(MRHT}(X_i))=\begin{pmatrix} (a_0, a_1, ..., a_{n-1})_{11} & \cdots & (a_0, a_1, ..., a_{n-1})_{1n} \\ \vdots & \ddots & \vdots \\ (a_0, a_1, ..., a_{n-1})_{n1} & \cdots & (a_0, a_1, ..., a_{n-1})_{nn} \end{pmatrix}.$$

3.  A method for derandomizing the randomized input of claim 1, the method comprising:

performing either one of (a) or (b):

(a) receiving an output comprising a randomized $X_{im}$ input being an nxn diagonal matrix denoted hereinafter as $A_{im}$, over CR , where:

$$A_{im} = MRHT(X_{im}) = S\,M\,S^{-1} = \begin{pmatrix} a_{11} & \cdots & a_{1n} \\ \vdots & \ddots & \vdots \\ a_{n1} & \cdots & a_{nn} \end{pmatrix}$$

using $S$ to determine $S^{-1} = \begin{pmatrix} s'_{11} & \cdots & s'_{1n} \\ \vdots & \ddots & \vdots \\ s'_{n1} & \cdots & s'_{nn} \end{pmatrix}$ and determining $X_{im}$ by performing one of:

$$S^{-1} \cdot A_{im} \cdot S = M$$

where $X_1$, $X_2$,... ,$X_m$ are the upper left elements of the resulting diagonal matrix above, alternatively:

$$X_i = (1/s'_{i1}) \cdot \sum_{j=1}^{n} a_{j1} \cdot s'_{ij} \text{ for i=1,...m;}$$

and

(b) receiving the randomized output for $X_{im}$ as $(\boldsymbol{a_{i0}}, \boldsymbol{a_{i1}}, ..., \boldsymbol{a_{i\,n-1}})$ and using $v_1, v_2, ..., v_m$ to determine the

derandomized input $\sum_{j=0}^{n-1} a_{ij} \cdot v_1{}^j = X_1 , \quad \sum_{j=0}^{n-1} a_{ij} \cdot v_2{}^j = X_2 , \quad ...., \quad \sum_{j=0}^{n-1} a_{ij} \cdot v_m{}^j = X_m.$

4. A method for addition of randomized $X_1$ and randomized $X_2$, $X_1$ and $X_2$ being randomized according to the fully homomorphic method for randomizing an input of claim 1, the method comprising:

for $X_i$ comprising MRHT $(X_i)$ = $A_i$:

receiving $A_1$ and $A_2$; and

$$\text{MRHT} (X_1) + \text{MRHT} (X_2) = A_1 + A_2;$$

and

for $X_i$ comprising PRHT $(X_i)$ = $a_{i0}, a_{i1}, ..., a_{i\,n-1}$:

receiving PRHT $(X_1)$ = $a_{10}, a_{11}, ..., a_{1\,n-1}$ and PRHT $(X_2)$ = $a_{20}, a_{21}, ..., a_{2\,n-1}$ and $C_0, C_1, ..., C_{n-1}, C_n$ *of*

$P(v) = \sum_{j=0}^{n} C_j \cdot v^j \ (C_n=1);$ and

$$\text{PRHT} \ (X_1) \ + \ \text{PRHT} \ (X_2) \ = \ a_{10} + a_{20}, a_{11} + a_{21}, ..., a_{1\,n-1} + a_{2\,n-1} \ .$$

5. A method for multiplication of randomized $X_1$ and randomized $X_2$, $X_1$ and $X_2$ being randomized according to the fully homomorphic method for randomizing an input of claim 1, the method comprising:

for $X_i$ comprising MRHT $(X_i)$ = $A_i$:

receiving $A_1$ and $A_2$; and

$$\text{MRHT} (X_1) \cdot \text{MRHT} (X_2) = A_1 \cdot A_2;$$

and

for $X_i$ comprising PRHT $(X_i)$ = $a_{i0}, a_{i1}, ..., a_{i\,n-1}$:

receiving PRHT $(X_1)$ = $a_{10}, a_{11}, ..., a_{1\,n-1}$ and PRHT $(X_2)$ = $a_{20}, a_{21}, ..., a_{2\,n-1}$ and $C_0, C_1, ..., C_{n-1}, C_n$ *of*

$P(v) = \sum_{j=0}^{n} C_j \cdot v^j \ (C_n=1);$ and

$$\text{PRHT} \ (X_1) \ \cdot \ \text{PRHT} \ (X_2) \ = \ r_{10}, r_{11}, ..., r_{1\,n-1},$$

the coefficients of the resulting n-1 order polynomial r(v), where $r(v) = ((\sum_{j=0}^{n-1} a_{1j} \cdot v^j) \cdot (\sum_{j=0}^{n-1} a_{2j} \cdot v^j) ) \bmod \sum_{j=0}^{n} C_j \cdot v^j.$

6. A method for dividing of randomized $X_1$ and randomized $X_2$, $X_1$ and $X_2$ being randomized according to the fully homomorphic method for randomizing an input of claim 1, the method comprising:

for $X_i$ comprising MRHT $(X_i) = A_i$:

receiving $A_1$ and $A_2$;

1/ MRHT $(X_2) = A_2^{-1}$ and

$$MRHT(X_1) / MRHT(X_2) = A_1 \cdot A_2^{-1}$$

for $X_i$ comprising PRHT $(X_i) = a_{i0}, a_{i1}, ..., a_{i\,n-1}$:

receiving PRHT $(X_1) = a_{10}, a_{11}, ..., a_{1\,n-1}$ and PRHT $(X_2) = a_{20}, a_{21}, ..., a_{2\,n-1}$ and $C_0, C_1, ..., C_{n-1}, C_n$ *of*

$$P(v) = \sum_{j=0}^{n} C_j \cdot v^j \quad (C_n=1);$$

deriving $1/\text{PRHT}(X_2)$ = $u_{20}$, $u_{21}$, ..., $u_{2\,n-1}$ by calculating

$$((\sum_{j=0}^{n-1} u_{2j} \cdot v^j) \cdot (\sum_{j=0}^{n-1} a_{2j} \cdot v^j)) \mod \sum_{j=0}^{n} C_j \cdot v^j = 1$$ in terms of n unknown coefficients $u_{2j}$, ($j = 0,...,n-1$), thereby determining

$$\sum_{j=0}^{n-1} g_{2j}(u_{20}, u_{21}, ..., u_{2\,n-1}, a_{10}, a_{21}, ..., a_{2\,n-1}, c_{10}, c_{21}, ..., c_{2\,n-1},) \cdot v^j),$$

wherein $g_{2j}(\ )$ is a linear combination of a plurality of n unknowns $u_{2j}$;
solving n derived equations $g_{20}(\ ) = 1$, and $g_{2j}(\ ) = 0$ for j=1,..,n-1 for all $u_{2j}$ j=0,...,n-1; and

$$PRHT(X_1) / PRHT(X_2) = PRHT(X_1) \cdot (1/PRHT(X_2)) =$$

$$((\sum_{j=0}^{n-1} a_{1j} \cdot v^j) \cdot (\sum_{j=0}^{n-1} u_{2j} \cdot v^j)) \mod \sum_{j=0}^{n} C_j \cdot v^j.$$

7. The method according to any of claims 1 - 6, wherein at least one of the randomized inputs comprises a cryptographic key.

8. The method according to claim 7, wherein the cryptographic key comprises an AES key.

9. The method according to any of claims 1 - 6, wherein the at least one of the randomized inputs comprises a mod N-number polynomial coefficient.

10. The method according to claim 9, wherein the mod N-number polynomial coefficient is used for a Private Function Key Generation.

11. The method according to claim 9, wherein the mod N-number polynomial coefficient is used for a private hash-based message authentication code.

12. The method according to claim 9, wherein the mod N-number polynomial coefficient is used for generating an OSS signature.

13. The method according to claim 1, wherein the input comprises a plain text, the output comprises a cipher text, and all computations are performed modulo N over a ring $Z_N$, where N is a product of two prime numbers, and matrix S comprises a symmetric encryption key, wherein the encryption functions are denoted as MEnc and PEnc correspond to MRHT and PRHT, respectively.

14. The method according to claim 13, wherein the encryption of the plain text comprises a successive application of a mix of encryption functions PEnc = PRHT($X_i$) and MEnc = MRHT($X_i$), wherein:

$$\mathrm{MEnc(PEnc(X_i))} = (\,MEnc(\boldsymbol{a_{i0}}),\ MEnc(\boldsymbol{a_{i1}}),\dots,MEnc(\boldsymbol{a_{i\,n-1}})) =$$

$$=\left(\begin{pmatrix} a_{11} & \cdots & a_{1n} \\ \vdots & \ddots & \vdots \\ a_{n1} & \cdots & a_{nn} \end{pmatrix}_{i0},\begin{pmatrix} a_{11} & \cdots & a_{1n} \\ \vdots & \ddots & \vdots \\ a_{n1} & \cdots & a_{nn} \end{pmatrix}_{i1},\dots\dots,\begin{pmatrix} a_{11} & \cdots & a_{1n} \\ \vdots & \ddots & \vdots \\ a_{n1} & \cdots & a_{nn} \end{pmatrix}_{i\,n-1}\right);$$

and

$$\mathrm{PEnc(MEnc(X_i))} = \mathrm{PEnc}\left(\begin{pmatrix} a_{11} & \cdots & a_{1n} \\ \vdots & \ddots & \vdots \\ a_{n1} & \cdots & a_{nn} \end{pmatrix}\right)$$

where

$$PEnc(\mathrm{a}_{ij}) = (a_0,a_1,\dots,a_{n-1})_{ij}.$$

15. The method according to claim 3, wherein the received output comprises a cipher text denoted C, the cipher text C being produced as an output from a plain text input and all computations are performed modulo N over a ring $Z_N$, where N is a product of two prime numbers, and matrix S comprises a symmetric encryption key, wherein the encryption functions are denoted as MEnc and PEnc correspond to MRHT and PRHT, respectively, and the randomized input comprises a plain text, and all computations are performed modulo N over a ring $Z_N$, where N is a product of two prime numbers, and matrix S comprises a symmetric encryption key.

16. A method for addition of a pair of cipher text outputs Ci and Cj , Ci and Cj being cipher texts produced as an output from a plain text input and all computations are performed modulo N over a ring $Z_N$, where N is a product of two prime numbers, and matrix S comprises a symmetric encryption key, wherein the encryption functions are denoted as MEnc and PEnc correspond to MRHT and PRHT, respectively, the method comprising adding Ci and Cj according to the method of claim 4 wherein all computations are performed modulo N over a ring $Z_N$, where N is a product of two prime numbers, and matrix S comprises a symmetric encryption key.

17. A method for multiplication of a pair of cipher text outputs Ci and Cj, Ci and Cj comprising cipher texts produced as an output from a plain text input and all computations are performed modulo N over a ring $Z_N$, where N is a product of two prime numbers, and matrix S comprises symmetric encryption key, wherein the encryption functions are denoted as MEnc and PEnc correspond to MRHT and PRHT, respectively, the method comprising multiplying Ci and Cj according to the method of claim 5, wherein all computations are performed modulo N over a ring $Z_N$, where N is a product of two prime numbers, and matrix S comprises a symmetric encryption key.

18. A method for division of a pair of cipher texts outputs Ci and Cj , Ci and Cj comprising cipher texts produced as an output from a plain text input and all computations are performed modulo N over a ring $Z_N$, where N is a product of two prime numbers, and matrix S comprises symmetric encryption key, wherein the encryption functions are denoted as MEnc and PEnc correspond to MRHT and PRHT, respectively, the method comprising dividing Ci and Cj according to the method of claim 6 wherein all computations are performed modulo N over a ring $Z_N$, where N is a product of two prime numbers, and matrix S comprises a symmetric encryption key.

19. A method for verifying that a returned result of a calculation performed by a third party is valid, the result being performed by the method of any of claims 1 - 18, the result being denoted $R_M^*$ for a result returned using an MRHT or MEnc function denoted as M, and the result being denoted $R_P^*$ for a result returned using a PRHT or PEnc function denoted as P, the result comprising a result of a homomorphic calculation denoted $f$ performed on $A_1,A_2,\dots,A_k$ wherein $A_i$ is equal to one of $M(X_i)$ and $P(X_i)$; $f(A_1,A_2,\dots,A_k)$ is equal to one of: M $(f(X_1,X_2,\dots,X_k))= f(M(X_1), M(X_2),\dots,M(X_k))$ and $P(f(X_1,X_2,\dots,X_k)) = f(P(X_1), P(X_2),\dots,P(X_k))$ the method comprising:

receiving the result of $f(A_1, A_2, \ldots, A_k)$ in the one of the forms:

$$M(f(X_1, X_2, \ldots, X_K)) =$$

$$S \begin{pmatrix} f(X_1, X_2, \ldots, X_K).. & 0.. & 0 \\ . & . & . \\ 0.. & f(Y_{m1}, Y_{m2}, \ldots, Y_{mk}).. & 0 \\ . & . & . \\ 0.. & 0.. & f(Y_{n-1,1}, Y_{n-1,2}, \ldots, Y_{n-1,k}) \end{pmatrix} S^{-1}$$

$$= R_M^*;$$

and

$f(A_1, A_2, \ldots, A_k)$ in the form of $a^*{}_0, a^*{}_1 \ldots, a^*{}_{n-1}, = R_P^*;$

in the case where the result is in the form of $R_M^*$:

computing $f(Y_{m1}, Y_{m2}, \ldots, Y_{mk})$, denoted as Q, for any m, m=1,2,...,n-1 where $Y_{mj}$ comprises the $m^{th}$ random value used in one of encrypting; and randomizing $X_j$;

performing one of decrypting; and derandomizing $R^*{}_M$ thereby determining $f(Y_{m1}, Y_{m2}, \ldots, Y_{mk})$, denoted as E from the resulting matrix diagonal of m+1 row; and

deeming the result of the computation of $f(Xi)$ valid if E equals to Q; and

in the case where the result is in the form of $R_P^*$:

computing $f(Y_{m1}, Y_{m2}, \ldots, Y_{mk})$, denoted as Q, for any m , m=1,2,...,n-1 where $Y_{mj}$ comprises the $m^{th}$ random value used in one of encrypting; and randomizing $X_j$;

performing one of decrypting; and derandomizing $R^*{}_P$, thereby determining:

$$\sum_{j=0}^{n-1} a_j^* \cdot v_{m+1}{}^j = f(R_{m1}, R_{m2}, \ldots, R_{mk}),$$

denoted as E; and

deeming the result of the computation of $f(X_1, X_2, \ldots, X_K)$ valid if E equals Q.

## Patentansprüche

1.  Ein vollständig homomorphes Verfahren zur Randomisierung einer Eingabe, wobei alle Berechungen über einen kummutativen Ring erfolgen, im Folgenden bezeichnet als CR, und wobei das Verfahren Folgendes umfasst:

    den Erhalt einer Eingabe, bezeichnet als INP, umfassend eine Abfolge von k Eingabeelementen im CR;
    die Durchführung von entweder (a) oder (b):

    (a) die beliebige Auswahl einer geheimen nxn-Matrix im CR, im Folgenden bezeichnet als S, wobei S als symmetrischer Randomisierschlüssel verwendet wird, wobei S eine umkehrbare Matrix über den CR umfasst;
    die Bestimmung von S$^{-1}$;
    für jeden Satz i von m verschiedenen Eingabeelementen unter k Elementen, wobei 0<m<k+1 und m<n aus den INP ausgewählt werden, die gemeinsam randomisiert werden sollen und im Folgenden bezeichnet werden als $X_1, X_2, \ldots X_m$, die Auswahl von n-m (n minus m) beliebigen Zahlen $Y_1, Y_2, \ldots Y_{n-m}$, im CR, wobei die Eingabeelemente $X_1, X_2, \ldots, X_m$ sind; mindestens eine beliebige Zahl, ausgewählt aus dem Satz beliebiger Zahlen $Y_1, Y_2, \ldots Y_{n-m}$; und optional werden eine oder mehrere Konstanten in eine Diagonale einer diagonalen nxn-Matrix platziert, bezeichnet als *M*, wobei, abgesehen von der Diagonalen, die Matrix *M* nur von Nullen besetzt ist; und
    die Bestimmung einer beliebigen Ausgabe $A_{im}$ für die m Eingabeelemente in Satz i, bezeichnet als $\{X_{im}\}= X_1, X_2, \ldots, X_m$, durch Nutzung einer matrixbasierten randomisierenden und homomorphen Transformationsfunktion, die im Folgenden als MRHT bezeichnet wird, wobei:

$$MRHT(\{X_{im}\}) = A_{im} = SM\,S^{-1} = \begin{pmatrix} a_{11} & \cdots & a_{1n} \\ \vdots & \ddots & \vdots \\ a_{n1} & \cdots & a_{nn} \end{pmatrix}$$

wodurch eine beliebige Ausgabe $A_{im}$ erzeugt wird, die dem Satz i von m Eingabeelementen $\{X_{im}\} = X_1$, $X_2, ..., X_m$ entspricht;

und

(b) die Wahl von n beliebigen Zahlen im CR, wobei die n beliebigen Zahlen im Folgenden bezeichnet werden als $v_1, v_2, ... , v_n$;

die Bestimmung eines öffentlichen Polynoms $P(v) = \prod_{i=1}^{n}(v - v_i) = \sum_{j=0}^{n} C_j \cdot v^j$

($C_n$=1); für jeden Satz i von m verschiedenen Eingabeelementen unter k Elementen, wobei 0<m<k+1 und m<n aus INP ausgewählt werden, die gemeinsam randomisiert werden sollen und im Folgenden als $X_1$, $X_2, ..., X_m$ bezeichnet werden, die Auswahl einer polynombasierten randomisierenden und homomorphen Transformationsfunktion, die im Folgenden als PRHT ($X_{im}$) bezeichnet wird und alle Funktionen in der Variablen v der Formel $\sum_{j=0}^{n-1} a_{ij} \cdot v^j$ umfasst, die die nachfolgenden Gleichungen erfüllen:

die Auswahl von n-m beliebigen Werten im CR, für $a_{i,m}$, $a_{i,m+1}$ ... , $a_{i,n}$-1, die zu einer Lösung für die oben stehenden Gleichungen bei $a_{i,0}$, $a_{i,1}$ ... , $a_{i,m-1}$ führen würden; und

wenn (b) durchgeführt wurde, die nachfolgende Durchführung von entweder (c) oder (d):

(c) Erstellung einer beliebigen Ausgabe $A_{im}$, die den Eingabeelementen $X_1, X_2,...,X_m$ entspricht, umfassend den Satz ($a_{i0}$, $a_{i1}$, ... , $a_{i\,n-1}$) und einen öffentlichen Satz Koeffizienten ($C_0, C_1, ..., C_{n-1}, C_n$) von P(v), wobei der öffentliche Satz Koeffizienten ($C_0, C_1, ..., C_{n-1}, C_n$) für die arithmetische Durchführung der Operationen mit Eingabeelementen notwendig ist; und

(d) für die gegebenen Eingabeelemente $X_1, X_2, ...., X_m$ die Auswahl von n-m beliebigen Werten $R_1, ..., R_{n-m}$ im CR, die die folgenden n simultanen Gleichungen lösen würden:

= $R_{n-m}$ für die Unbekannten $a_{i0}$, $a_{i1}$, ..., $a_{i\,n-1}$, dabei erstellend, für $X_1, X_2,... X_m$, einen beliebigen Text mit dem Satz ($a_{i0}$, $a_{i1}$,..., $a_{i\,n-1}$) und dem öffentlichen Satz ($C_0, C_1, ..., C_{n-1}, C_n$) von P(v).

2. Verfahren nach Anspruch 1, wobei die Randomisierung der Eingabe INP eine aufeinanderfolgende Anwendung einer Sammlung von Funktionen PRHT($X_i$) und MRHT($X_i$) umfasst, wobei Xi einen Satz von m verschiedenen Eingabeelementen von INP bezeichnet und wobei:

$$MRHT(PRHT(X_i)) = (\,MRHT(a_{i0}),\ MRHT(a_{i1}),\ ... ,\ MRHT(a_{i\,n-1})) =$$

und

$$PRHT(MRHT(Xi)) = PRHT \left( \begin{pmatrix} a_{11} & \cdots & a_{1n} \\ \vdots & \ddots & \vdots \\ a_{n1} & \cdots & a_{nn} \end{pmatrix} \right) \text{ wobei } PRHT(a_{mj}) =$$

$(a_0, a_1, ... , a_{n-1})_{mj}$, daher

$$PRHT(MRHT(X_i)) =$$

3. Verfahren zur Derandomisierung der randomisierten Eingabe nach Anspruch 1, wobei das Verfahren umfasst:

die Durchführung von entweder (a) oder (b):

(a) den Erhalt einer Ausgabe umfassend eine randomisierte $X_{im}$ Eingabe, die eine diagonale nxn-Matrix ist, im Folgenden bezeichnet als $A_{im}$ über CR, wobei

$$A_{im} = MRHT(X_{im}) = S\,MS^{-1} = \begin{pmatrix} a_{11} & \cdots & a_{1n} \\ \vdots & \ddots & \vdots \\ a_{n1} & \cdots & a_{nn} \end{pmatrix}$$

unter Verwendung von S zur Bestimmung von $S^{-1} = \begin{pmatrix} s'_{11} & \cdots & s'_{1n} \\ \vdots & \ddots & \vdots \\ s'_{n1} & \cdots & s'_{nn} \end{pmatrix}$ und Bestimmung von $X_{im}$ durch Ausführen eines der Folgenden:

$S\text{-}1 \cdot A_{im} \cdot S = M$ wobei $X_1, X_2,... ,X_m$ die Elemente oben links in der daraus resultierenden diagonalen Matrix oben sind,
alternativ

$$X_i = (1/s'_{i1}) \cdot \sum_{j=1}^{n} a_{j1} \cdot s'_{ij} \text{ für i=1,...m;}$$

und

(b) Erhalt der randomisierten Ausgabe für $X_{im}$ als $(a_{i0}, a_{i1}, ... , a_{i\,n-1})$ und Verwendung von $v_1, v_2, ..., v_m$ zur Bestimmung der derandomisierten Eingabe

4. Verfahren zur Addition von randomisierten $X_1$ und randomisierten $X_2$, $X_1$ und $X_2$,randomisiert entsprechend des vollständig homomorphen Verfahrens zur Randomisierung einer Eingabe nach Anspruch 1, wobei das Verfahren Folgendes umfasst:

für $X_i$ umfassend MRHT $(X_i)$ = $A_i$:

empfangend $A_1$ und $A_2$; und

$$\text{MRHT }(X_1) + \text{MRHT }(X_2) = A_1 + A_2;$$

und

für $X_i$ umfassend PRHT $(X_i)$ = $a_{i0}, a_{i1}, ... , a_{i\,n-1}$:

empfangend PRHT $(X_1)$ = $a_{10}, a_{11}, ..., a_{1\,n-1}$ und PRHT $(X_2)$ = $a_{20}, a_{21}, ... , a_{2\,n-1}$ und $C_0, C_1, ..., C_{n-1}, C_n$

von $P(v) = \sum_{j=0}^{n} C_j \cdot v^j$ $(C_n = 1);$ und

$$\text{PRHT }(X_1) + \text{PRHT }(X_2) = a_{10} + a_{20}, a_{11} + a_{21}, ... , a_{1\,n-1} + a_{2\,n-1}.$$

5. Verfahren zur Multiplikation von randomisierten $X_1$ und randomisierten $X_2$, $X_1$ und $X_2$ randomisiert entsprechend des vollständig homomorphen Verfahrens zur Randomisierung einer Eingabe nach Anspruch 1, wobei das Verfahren Folgendes umfasst:

für $X_i$ umfassend MRHT $(X_i)$ = $A_i$:

Empfangen von $A_1$ und $A_2$; und

$$MRHT\ (X_1)\quad MRHT\ (X_2) = A_1\quad A_2;$$

und

für $X_i$ umfassend PRHT $(X_i) = a_{i0}, a_{i1}, \ldots, a_{i\,n-1}$:

Empfangen von PRHT $(X_1) = a_{10}, a_{11}, \ldots, a_{1\,n-1}$ und PRHT $(X_2) = a_{20}, a_{21}, \ldots, a_{2\,n-1}$ und $C_0, C_1, \ldots, C_{n-1}$,

$C_n$ von $P(v) = \sum_{j=0}^{n} C_j \cdot v^j$ $(C_n = 1)$; und

$$PRHT\ (X_1) \cdot PRHT\ (X_2) = r_{10},\ r_{11},\ \ldots,\ r_{1\,n-1},$$

die Koeffizienten des daraus resultierenden n-1 Ordnungspolynoms r(v), wobei

$$r(v) = \left( \left( \sum_{j=0}^{n-1} a_{1j} \cdot v^j \right) \cdot \left( \sum_{j=0}^{n-1} a_{2j} \cdot v^j \right) \right) \bmod \sum_{j=0}^{n} C_j \cdot v^j.$$

6. Verfahren zur Division von randomisierten $X_1$ und randomisierten $X_2$, $X_1$ und $X_2$ randomisiert entsprechend des vollständig homomorphen Verfahrens zur Randomisierung einer Eingabe nach Anspruch 1, wobei das Verfahren Folgendes umfasst:

für $X_i$ umfassend MRHT $(X_i) = A_i$:

Empfangen von $A_1$ und $A_2$;

1/ MRHT $(X_2) = A_2^{-1}$ und

$$MRHT\ (X_1) / MRHT\ (X_2) = AA_1 \cdot A_2^{-1}$$

für $X_i$ umfassend PRHT $(X_i) = a_{i0}, a_{i1}, \ldots, a_{i\,n-1}$:

Empfangen von PRHT $(X_1) = a_{10}, a_{11}, \ldots, a_{1\,n-1}$ und PRHT $(X_2) = a_{20}, a_{21}, \ldots, a_{2\,n-1}$ und $C_0, C_1, \ldots, C_{n-1}, C_n$

von $P(v) = \sum_{j=0}^{n} C_j \cdot v^j$ $(C_n = 1)$;

Ableiten von 1/PRHT$(X_2) = u_{20}, u_{21}, \ldots, u_{2\,n-1}$ durch Berechnung von

in Bezug auf n unbekannte Koeffizienten $u_{2j}$, (j = 0, ..., n-1), und dadurch Bestimmen von

wobei es sich bei $g_{2j}($ $)$ um eine lineare Kombination einer Vielzahl von n unbekannten $u_{2j}$ handelt, Lösen von n abgeleiteten Gleichungen $g_{20}($ $) = 1$, und $g_{2j}($ $) = 0$ für j=1,..,n-1 für alle $u_{2j}$ j=0,...,n-1; und

$$PRHT\ (X_1) / PRHT\ (X_2) = PRHT\ (X_1)\ (1/PRHT(X_2)) =$$

7. Verfahren nach einem der Ansprüche 1-6, wobei mindestens eine der randomisierten Eingaben einen kryptographischen Schlüssel umfasst.

8. Verfahren nach Anspruch 7, wobei der kryptographische Schlüssel einen AES-Schlüssel umfasst.

9. Verfahren nach einem der Ansprüche 1-6, wobei die mindestens eine der randomisierten Eingaben einen mod N-Anzahl polynomen Koeffizienten umfasst.

10. Verfahren nach Anspruch 9, wobei der mod N-Anzahl polynome Koeffizient für eine private Funktionsschlüsselgenerierung verwendet wird.

**11.** Verfahren nach Anspruch 9, wobei der mod N-Anzahl polynome Koeffizient für einen privaten hash-basierten Benachrichtigungsauthentifizierungscode verwendet wird.

**12.** Verfahren nach Anspruch 9, wobei der mod N-Anzahl polynome Koeffizient für die Generierung einer OSS-Signatur verwendet wird.

**13.** Verfahren nach Anspruch 1, wobei die Eingabe einen Klartext umfasst, die Ausgabe einen verschlüsselten Text umfasst und alle Berechnungen Modulo N über einem Ring $Z_N$ durchgeführt werden, wobei N ein Produkt zweier Primzahlen ist, und die Matrix S einen symmetrischen Verschlüsselungsschlüssel enthält, wobei die Verschlüsselungsfunktionen als MEnc und PEnc bezeichnet werden und jeweils MRHT und PRHT entsprechen.

**14.** Verfahren nach Anspruch 13, wobei die Verschlüsselung des Klartexts eine aufeinanderfolgende Anwendung einer Anwendung einer Sammlung von Veschlüsselungsfunktionen PEnc = PRHT($X_i$) und MEnc = MRHT($X_i$) umfasst, wobei:

$$MEnc(PEnc(X_i)) = ( MEnc(a_{i0}), MEnc(a_{i1}), \ldots , MEnc(a_{i\ n-1})) =$$

$$= \left( \begin{pmatrix} a_{11} & \cdots & a_{1n} \\ \vdots & \ddots & \vdots \\ a_{n1} & \cdots & a_{nn} \end{pmatrix}_{i0} , \begin{pmatrix} a_{11} & \cdots & a_{1n} \\ \vdots & \ddots & \vdots \\ a_{n1} & \cdots & a_{nn} \end{pmatrix}_{i1} , \ldots, \begin{pmatrix} a_{11} & \cdots & a_{1n} \\ \vdots & \ddots & \vdots \\ a_{n1} & \cdots & a_{nn} \end{pmatrix}_{i\ n-1} \right);$$

und

$$PEnc(MEnc(X_i)) = PEnc \left( \begin{pmatrix} a_{11} & \cdots & a_{1n} \\ \vdots & \ddots & \vdots \\ a_{n1} & \cdots & a_{nn} \end{pmatrix} \right)$$

wobei

$$PEnc(a_{ij}) = (a_0, a_1, \ldots , a_{n-1})_{ij}.$$

**15.** Verfahren nach Anspruch 3, wobei die erhaltene Ausgabe einen verschlüsselten Text mit der Bezeichnung C enthält, wobei der verschlüsselte Text C als Ausgabe aufgrund einer Klartexteingabe erstellt wird und alle Berechnungen Modulo N über einem Ring $Z_N$ durchgeführt werden, wobei N ein Produkt zweier Primzahlen ist und die Matrix S einen symmetrischen Verschlüsselungsschlüssel enthält, wobei die Verschlüsselungsfunktionen als MEnc und PEnc bezeichnet werden und jeweils MRHT und PRHT entsprechen und die randomisierte Eingabe einen Klartext umfasst und alle Berechnungen Modulo N über einem Ring $Z_N$ erfolgen, wobei N ein Produkt zweier Primzahlen ist und die Matrix S einen symmetrischen Verschlüsselungsschlüssel umfasst.

**16.** Verfahren zur Addition eines Paars von verschlüsselten Textausgaben Ci und Cj, wobei Ci und Cj verschlüsselte Texte sind, die als Ausgabe aufgrund einer Klartexteingabe erstellt werden und alle Berechnungen Modulo N über einem Ring $Z_N$ durchgeführt werden, wobei N das Produkt zweier Primzahlen ist und die Matrix S einen symmetrischen Verschlüsselungsschlüssel enthält, wobei die Verschlüsselungsfunktionen als MEnc und PEnc bezeichnet werden und jeweils MRHT und PRHT entsprechen; wobei das Verfahren das Addieren von Ci und Cj entsprechend dem Verfahren nach Anspruch 4 umfasst, wobei alle Berechnungen Modulo N über einem Ring $Z_N$ erfolgen, wobei N ein Produkt zweier Primzahlen ist und die Matrix S einen symmetrischen Verschlüsselungsschlüssel umfasst.

**17.** Verfahren zur Multiplikation eines Paares von verschlüsselten Textausgaben Ci und Cj, wobei Ci und Cj verschlüsselte Texte umfassen, die als Ausgabe aufgrund einer Klartexteingabe erstellt werden und alle Berechnungen Modulo N über einem Ring $Z_N$ durchgeführt werden, wobei N ein Produkt zweier Primzahlen ist und die Matrix S einen symmetrischen Verschlüsselungsschlüssel enthält, wobei die Verschlüsselungsfunktionen als MEnc und PEnc bezeichnet werden und jeweils MRHT und PRHT entsprechen; wobei das Verfahren die Multiplizierung von Ci und Cj entsprechend des Verfahrens nach Anspruch 5 umfasst, wobei alle Berechnungen Modulo N über einem Ring $Z_N$ erfolgen, wobei N ein Produkt zweier Primzahlen ist und die Matrix S einen symmetrischen Verschlüsselungsschlüssel umfasst.

**18.** Verfahren zur Division eines Paars von verschlüsselten Textausgaben Ci und Cj, wobei Ci und Cj verschlüsselte Texte umfassen, die als Ausgabe aufgrund einer Klartexteingabe erstellt werden und alle Berechnungen Modulo N über einem Ring $Z_N$ durchgeführt werden, wobei N ein Produkt zweier Primzahlen ist und die Matrix S einen symmetrischen Verschlüsselungsschlüssel enthält, wobei die Verschlüsselungsfunktionen als MEnc und PEnc bezeichnet werden und jeweils MRHT und PRHT entsprechen, wobei das Verfahren die Division von Ci und Cj entsprechend dem Verfahren nach Anspruch 6 umfasst, wobei alle Berechnungen Modulo N über einem Ring $Z_N$ erfolgen, wobei N ein Produkt zweier Primzahlen ist und die Matrix S einen symmetrischen Verschlüsselungsschlüssel umfasst.

**19.** Verfahren zur Verifizierung, dass ein ausgegebenes Ergebnis einer Berechnung, die von einem Dritten durchgeführt wurde, gültig ist, wobei das Ergebnis mithilfe des Verfahrens nach einem der Ansprüche 1 - 18 durchgeführt wird und das Ergebnis als $R_M^*$ bezeichnet wird bei einem Ergebnis, das mit Hilfe einer MRHT- oder MEnc-Funktion mit der Bezeichnung M erzielt wird, und das Ergebnis als $R_P^*$ bezeichnet wird bei einem Ergebnis, das mit Hilfe einer PRHT- oder PEnc-Funktion mit der Bezeichnung P erzielt wird, wobei das Ergebnis ein Ergebnis einer homomorphen Berechnung mit der Bezeichnung f, die für $A_1, A_2, \ldots, A_k$ durchgeführt wurde, umfasst, wobei $A_i$ gleich einem von $M(X_i)$ und $P(X_i)$ ist; $f(A_1, A_2, \ldots, A_k)$ gleich ist einem der Folgenden: $M(f(X_1, X_2, \ldots, X_k)) = f(M(X_1), M(X_2), \ldots, M(X_k))$ und $P(f(X_1, X_2, \ldots, X_k)) = f(P(X_1), P(X_2), \ldots, P(X_k))$, und das Verfahren umfasst:

den Erhalt des Ergebnisses aus $f(A_1, A_2, \ldots, A_k)$ in einer der Formen:

$$M(f(X_1, X_2, \ldots, X_K)) =$$

$$S \begin{pmatrix} f(X_1, X_2, \ldots, X_K).. & 0.. & 0 \\ & \cdot & & \cdot & & \cdot \\ 0.. & f(Y_{m1}, Y_{m2}, \ldots, Y_{mk}).. & 0 \\ & \cdot & & \cdot & & \cdot \\ 0.. & 0.. & f(Y_{n-1,1}, Y_{n-1,2}, \ldots, Y_{n-1,k}) \end{pmatrix} S^{-1}$$

$$= R_M^*;$$

und

$f(A_1, A_2, \ldots, A_k)$ in der Form von $a^*_0, a^*_1 \ldots, a^*_{n-1}, = R_P^*;$

in dem Fall, in dem das Ergebnis in der Form von $R_M^*$ vorliegt:
Berechnung von $f(Y_{m1}, Y_{m2}, \ldots, Y_{mk})$, bezeichnet als Q, für jedes m, m=1,2,...,n-1 wobei $Y_{mj}$ den m-ten beliebigen Wert umfasst, der bei einer von der Verschlüsselung und der Randomisierung von $X_j$ verwendet wird; Durchführung einer von einer Dechiffrierung und einer Derandomisierung von $R^*_M$, wodurch $f(Y_{m1}, Y_{m2}, \ldots, Y_{mk})$ bestimmt wird, bezeichnet als E aus der resultierenden Matrixdiagonalen mit m+1 Reihe; und der Betrachtung des Ergebnisses der Berechnung von $f(X_i)$ als gültig, wenn E gleich Q ist; und

in dem Fall, in dem das Ergebnis in der Form von $R_P^*$ vorliegt:

Berechnung von $f(Y_{m1}, Y_{m2}, \ldots, Y_{mk})$, bezeichnet als Q, für jedes m, m=1,2,...,n-1, wobei $Y_{mj}$ den m-ten beliebigen Wert umfasst, der bei einer von der Verschlüsselung und der Randomisierung von $X_j$ verwendet wird; Durchführung einer von einer Dechiffrierung und einer Derandomisierung von $R^*_P$, wodurch Folgendes bestimmt wird:

$$\sum_{j=0}^{n-1} a_j^* \cdot v_{m+1}{}^j = f(R_{m1}, R_{m2}, \ldots, R_{mk}),$$

bezeichnet als E; und
Betrachtung des Ergebnisses der Berechnung von $f(X_1, X_2, \ldots, X_K)$ als gültig, wenn E gleich Q ist.

**Revendications**

1. Procédé complètement homomorphe pour randomiser une entrée, dans lequel tous les calculs sont mis en oeuvre sur un anneau commutatif, ci-après désigné par « CR », le procédé comprenant les étapes ci-dessous consistant à :

recevoir une entrée, ci-après désignée par « INP », comprenant une séquence de « k » éléments d'entrée, dans l'anneau CR ;
mettre en oeuvre l'une ou l'autre des étapes a) ou b) consistant à :

(a) sélectionner de manière aléatoire une matrice « nxn » secrète dans l'anneau CR, ci-après appelée matrice « S », la matrice S étant utilisée en tant que clé de randomisation symétrique, dans lequel S comprend une matrice inversible sur l'anneau CR;
déterminer $S^{-1}$ ;
pour chaque ensemble « i » de « m » éléments d'entrée distincts parmi « k » éléments, dans lequel $0 < m < k + 1$ et $m < n$, sélectionnés à partir de l'entrée INP, lesquels doivent être conjointement randomisés, et appelés ci-après $X_1, X_2, ..., X_m$, sélectionner « n - m » (n moins m) nombres aléatoires $Y_1, Y_2, ..., Y_{n-m}$, dans l'anneau CR, où les éléments d'entrée sont $X_1, X_2, ..., X_m$ ; au moins un nombre aléatoire sélectionné parmi l'ensemble de nombres aléatoires $Y_1, Y_2, ..., Y_{n-m}$ ; et, facultativement, une ou plusieurs constantes qui sont placées dans une diagonale d'une matrice diagonale « nxn », désignée par « *M* », dans lequel, à l'exception de la diagonale, la matrice *M* n'est remplie que par des zéros ; et
déterminer une sortie aléatoire $A_{im}$ pour les « m » éléments d'entrée de l'ensemble « i », appelés $\{X_{im}\} = X_1, X_2, ..., X_m$, en utilisant une fonction de transformation homomorphe et de randomisation matricielle, ci-après appelée fonction « MRHT », dans laquelle :

$$MRHT(\{X_{im}\}) = A_{im} = SMS^{-1} = \begin{pmatrix} a_{11} & \cdots & a_{1n} \\ \vdots & \ddots & \vdots \\ a_{n1} & \cdots & a_{nn} \end{pmatrix}$$

ce qui permet de produire par conséquent une sortie aléatoire $A_{im}$ correspondant à l'ensemble « i » de « m » éléments d'entrée $\{X_{im}\} = X_1, X_2, ..., X_m$ ;
et
(b) sélectionner « n » nombres aléatoires dans l'anneau CR, les « n » nombres aléatoires étant désignés ci-après par $v_1, v_2, ..., v_n$ ;

déterminer un polynôme public $P(v) = \Pi_{i=1}^{n}(v - v_i) = \sum_{j=0}^{n} C_j \cdot v^j$ $(C_n=1)$ ;
pour chaque ensemble « i » de « m » éléments d'entrée distincts parmi « k » éléments, dans lequel $0 < m < k + 1$ et $m < n$, sélectionnés à partir de l'entrée INP, lesquels doivent être conjointement randomisés, et sont appelés ci-après $X_1, X_2, ..., X_m$, sélectionner une fonction de transformation homomorphe et de randomisation polynomiale, ci-après appelée fonction « PRHT ($X_{im}$) », comprenant toute fonction dans la variable « v » de la forme $\sum_{j=0}^{n-1} a_{ij} \cdot v^j$ qui satisfait les équations ci-dessous :

$$\sum_{j=0}^{n-1} a_{ij} \cdot v_1^j = X_1, \sum_{j=0}^{n-1} a_{ij} \cdot v_2^j = X_2, ..., \sum_{j=0}^{n-1} a_{ij} \cdot v_m^j = X_m;$$

choisir « n - m » valeurs aléatoires dans l'anneau CR, pour $a_{i,m}, a_{i,m+1}, ..., a_{i,n-1}$, qui produiraient une solution pour les équations ci-dessus pour $a_{i,0}, a_{i,1}, ..., a_{i,m-1}$ ; et
si l'étape (b) a été mise en oeuvre, mettre ensuite en oeuvre l'une des étapes (c) ou (d) ci-dessous consistant à :
(c) produire une sortie aléatoire $A_{im}$ correspondant aux éléments d'entrée $X_1, X_2, ..., X_m$ comprenant l'ensemble $(a_{i0}, a_{i1}, ..., a_{i\,n-1})$ et l'ensemble public de coefficients $(C_0, C_1, ..., C_{n-1}, C_n)$ de P(v), dans lequel l'ensemble public de coefficients $(C_0, C_1, ..., C_{n-1}, C_n)$ est requis pour mettre en oeuvre des opérations arithmétiques avec des éléments d'entrée ; et
(d) sélectionner, pour les éléments d'entrée donnés $X_1, X_2, X_m$, « n - m » valeurs aléatoires $R_1, ..., R_{n-m}$, dans l'anneau CR, qui résoudraient les « n » équations simultanées suivantes :

$$\sum_{j=0}^{n-1} a_{ij} \cdot v_1{}^j = X_1 \, , \sum_{j=0}^{n-1} a_{ij} \cdot v_2{}^j = X_2 \, , \dots , \sum_{j=0}^{n-1} a_{ij} \cdot v_m{}^j = X_m \, . \sum_{j=0}^{n-1} a_{ij} \cdot v_{m+1}{}^j =$$

$$R_1 \quad , \quad \sum_{j=0}^{n-1} a_{ij} \cdot v_{m+2}{}^j \ = \ R_2 \, , \dots , \ \sum_{j=0}^{n-1} a_{ij} \cdot v_n{}^j \ = \ R_{n-m}$$

pour les inconnues $a_{i,0}$, $a_{i,1}$, ..., $a_{i\,n-1}$, ce qui permet de produire par conséquent, pour $X_1$, $X_2$, ..., $X_m$, un texte aléatoire comprenant l'ensemble ($a_{i0}$, $a_{i1}$, ..., $a_{i\,n-1}$) et l'ensemble public ($C_0$, $C_1$, ..., $C_{n-1}$, $C_n$) de P(v).

2. Procédé selon la revendication 1, dans lequel la randomisation de l'entrée INP comprend une application successive d'un mélange de fonctions PRHT($X_i$) et MRHT($X_i$), où $X_i$ représente un ensemble de « m » éléments d'entrée distincts de l'entrée INP, et dans lequel :

$$\mathrm{MRHT}(\mathrm{PRHT}(X_i)) = ( \ MRHT(\boldsymbol{a_{i0}}), \ MRHT(\boldsymbol{a_{i1}}), \dots, \boldsymbol{MRHT(a_{i\,n-1})}) =$$

$$= ( \begin{pmatrix} a_{11} & \cdots & a_{1n} \\ \vdots & \ddots & \vdots \\ a_{n1} & \cdots & a_{nn} \end{pmatrix}_{i0} , \begin{pmatrix} a_{11} & \cdots & a_{1n} \\ \vdots & \ddots & \vdots \\ a_{n1} & \cdots & a_{nn} \end{pmatrix}_{i1} , \dots , \begin{pmatrix} a_{11} & \cdots & a_{1n} \\ \vdots & \ddots & \vdots \\ a_{n1} & \cdots & a_{nn} \end{pmatrix}_{i\,n-1} );$$

et

$$\mathrm{PRHT}(\mathrm{MRHT}(X_i)) = \mathrm{PRHT} \left( \begin{pmatrix} a_{11} & \cdots & a_{1n} \\ \vdots & \ddots & \vdots \\ a_{n1} & \cdots & a_{nn} \end{pmatrix} \right) \quad \text{où} \quad \mathrm{PRHT}(a_{mj}) =$$

$$(a_0, a_1, \dots, a_{n-1})_{mj},$$

par conséquent

$$\mathbf{PRHT}(\mathrm{MRHT}(X_i)) = \begin{pmatrix} (a_0, a_1, \dots, a_{n-1})_{11} & \cdots & (a_0, a_1, \dots, a_{n-1})_{1n} \\ \vdots & \ddots & \vdots \\ (a_0, a_1, \dots, a_{n-1})_{n1} & \cdots & (a_0, a_1, \dots, a_{n-1})_{nn} \end{pmatrix}.$$

3. Procédé pour dé-randomiser l'entrée randomisée de la revendication 1, le procédé comprenant l'étape consistant à :

mettre en oeuvre l'une ou l'autre de l'étape a) ou de l'étape b) :

(a) recevoir une sortie comprenant une entrée $X_{im}$ randomisée qui est une matrice diagonale « nxn » appelée ci-après $A_{im}$, sur l'anneau CR, où :

$$A_{im} = MRHT(X_{im}) = S\,M\,S^{-1} = \begin{pmatrix} a_{11} & \cdots & a_{1n} \\ \vdots & \ddots & \vdots \\ a_{n1} & \cdots & a_{nn} \end{pmatrix}$$

en utilisant $S$ pour déterminer $S^{-1}$ = et déterminer $X_{im}$ en mettant en oeuvre l'un des opérations ci-dessous :

$S^{-1} \cdot A_{im} \cdot S = M$ où $X_1$, $X_2$, ..., $X_m$ sont les éléments situés en haut à gauche de la matrice diagonale résultante ci-dessus,
alternativement :

$$X_i = (1/s'_{i1}) \cdot \sum_{j=1}^{n} a_{j1} \cdot s'_{ij} \text{ pour } i = 1, ..., m \text{ ;}$$

et

(b) recevoir la sortie randomisée pour $X_{im}$, en tant que *($a_{i0}$, $a_{i1}$, ..., $a_{in-1}$)* et utiliser $v_1$, $v_2$, ..., $v_m$ pour déterminer l'entrée dé-randomisée $\sum_{j=0}^{n-1} a_{ij} \cdot v_1{}^j = X_1$, $\sum_{j=0}^{n-1} a_{ij} \cdot v_2{}^j = X_2$, ...., $\sum_{j=0}^{n-1} a_{ij} \cdot v_m{}^j = X_m$.

4. Procédé d'addition de l'élément $X_1$ randomisé et de l'élément $X_2$ randomisé, $X_1$ et $X_2$ étant randomisés selon le procédé entièrement homomorphe pour randomiser une entrée selon la revendication 1, le procédé comprenant les étapes ci-dessous consistant à :

pour $X_i$ comprenant MRHT ($X_i$) = $A_i$ ;
recevoir $A_1$ et $A_2$ ; et

$$\text{MRHT } (X_1) + \text{MRHT } (X_2) = A_1 + A_2 \text{ ;}$$

et
pour $X_i$ comprenant PRHT ($X_i$) = $a_{i0}$, $a_{i1}$, ..., $a_{in-1}$ :

recevoir PRHT ($X_1$) = $a_{10}$, $a_{11}$, ..., $a1_{n-1}$ et PRHT ($X_2$) = $a_{20}$, $a_{21}$, ..., $a_{2\,n-1}$ et $C_0$, C1..., $C_{n-1}$, $C_n$ de $P(v) = \sum_{j=0}^{n} C_j \cdot v^j \ (C_n=1)$ ; et

$$\text{PRHT } (X_1) + \text{PRHT } (X_2) = a_{10} + a_{20}, a_{11} + a_{21}, ..., a_{1n-1} + a_{2n-1}.$$

5. Procédé de multiplication de l'élément $X_1$ randomisé et de l'élément $X_2$ randomisé, $X_1$ et $X_2$ étant randomisés selon le procédé entièrement homomorphe pour randomiser une entrée de la revendication 1, le procédé comprenant les étapes ci-dessous consistant à :

pour $X_i$ comprenant MRHT ($X_i$) = $A_i$ :

recevoir $A_1$ et $A_2$ ; et

$$\text{MRHT } (X_1) \bullet \text{MRHT } (X_2) = A_1 \bullet A_2 \text{ ;}$$

et
pour $X_i$ comprenant PRHT ($X_i$) = $a_{i0}$, $a_{i1}$, ..., $a_{i\,n-1}$ ;
recevoir PRHT ($X_1$) = $a_{10}$, $a_{11}$, ..., $a_{1\,n-1}$ et PRHT ($X_2$) = $a_{20}$, $a_{21}$, ..., $a_{2\,n-1}$, et $C_0$, $C_1$, ..., $C_{n-1}$, $C_n$ de $P(v) = \sum_{j=0}^{n} C_j \cdot v^j \ (C_n=1)$ ; et

$$\text{PRHT } (X_1) \bullet \text{PRHT } (X_2) = r_{10}, r_{11}, ..., r_{1\,n-1},$$

les coefficients du polynôme d'ordre « n-1 » résultant r(v), où $r(v) = ((\sum_{j=0}^{n-1} a_{1j} \cdot v^j) \ \cdot (\sum_{j=0}^{n-1} a_{2j} \cdot v^j) ) \bmod \sum_{j=0}^{n} C_j \cdot v^j$.

6. Procédé pour diviser l'élément $X_1$ randomisé et l'élément $X_2$ randomisé, $X_1$ et $X_2$ étant randomisés selon le procédé entièrement homomorphe pour randomiser une entrée selon la revendication 1, le procédé comprenant les étapes ci-dessous consistant à :

pour $X_i$ comprenant MRHT $(X_i)$ = $A_i$ :

recevoir $A_i$ et $A_2$ ;

1 / MRHT $(X_2)$ = $A_2^{-1}$ et

$$\text{MRHT } (X_1) \text{ / MRHT } (X_2) = A_1 \bullet A_2^{-1}$$

pour $X_i$ comprenant PRHT $(X_i)$ = $a_{i0}, a_{i1}, ..., a_{i\,n-1}$ :

recevoir PRHT $(X_1)$ = $a_{10}, a_{11}, ..., a_{1\,n-1}$ et PRHT $(X_2)$ = $a_{20}, a_{21}, ..., a_{2\,n-1}$ et $C_0, C_1, ..., C_{n-1}, C_n$ de

$$P(v) = \sum_{j=0}^{n} C_j \cdot v^j \ (C_n = 1) \ ;$$

dériver     1/PRHT     $(X_2)$     =     $u_{20}$,     $u_{21}, ...,$     $u_{2\,n-1}$     en     calculant

$((\sum_{j=0}^{n-1} u_{2j} \cdot v^j) \cdot (\sum_{j=0}^{n-1} a_{2j} \cdot v^j)) \mathrm{mod} \ \sum_{j=0}^{n} C_j \cdot v^j = 1$ en termes de « n » coefficients inconnus $u_{2j}$, (j = 0, ..., n - 1), ce qui permet de déterminer par conséquent

$$\sum_{j=0}^{n-1} g_{2j}(u_{20}, u_{21}, ..., u_{2\,n-1}, \ a_{10}, a_{21}, ..., a_{2\,n-1}, \ c_{10}, c_{21}, ..., c_{2\,n-1},) \cdot v^j),$$

dans lequel $g_{2j}(\ )$ est une combinaison linéaire d'une pluralité de « n » inconnues $u_{2j}$ ;
résoudre « n » équations dérivées $g_{20}(\ )$ = 1, et $g_{2j}(\ )$ = 0 pour $j$ = 1, ..., n - 1 pour tous $u_{2j}\,j$ = 0, ..., n - 1 ; et

$$\text{PRHT } (X_1) \text{ / PRHT } (X_2) = \text{PRHT } (X_1) \bullet (1/\text{PRHT } (X_2)) =$$

$$((\sum_{j=0}^{n-1} a_{1j} \cdot v^j) \cdot (\sum_{j=0}^{n-1} u_{2j} \cdot v^j)) \mathrm{mod} \sum_{j=0}^{n} C_j \cdot v^j.$$

7. Procédé selon l'une quelconque des revendications 1 à 6, dans lequel au moins l'une des entrées randomisées comprend une clé de chiffrement.

8. Procédé selon la revendication 7, dans lequel la clé de chiffrement comprend une clé AES.

9. Procédé selon l'une quelconque des revendications 1 à 6, dans lequel ladite au moins une des entrées randomisées comprend un coefficient polynomial de nombre modulo N.

10. Procédé selon la revendication 9, dans lequel le coefficient polynomial de nombre modulo N est utilisé pour une génération de clé de fonction privée.

11. Procédé selon la revendication 9, dans lequel le coefficient polynomial de nombre modulo N est utilisé pour un code d'authentification de message à base de hachage privé.

12. Procédé selon la revendication 9, dans lequel le coefficient polynomial de nombre modulo N est utilisé pour générer une signature OSS.

13. Procédé selon la revendication 1, dans lequel l'entrée comprend un texte en cl-air, la sortie comprend un texte chiffré, et tous les calculs sont mis en oeuvre par une opération modulo N sur un anneau $Z_N$, où « N » est un produit de deux nombres premiers, et la matrice S comprend une clé de chiffrement symétrique, dans lequel les fonctions de chiffrement, désignées par MEnc et PEnc, correspondent respectivement aux fonctions MRHT et PRHT.

14. Procédé selon la revendication 13, dans lequel le chiffrement du texte en clair comprend une application successive d'un mélange de fonctions de chiffrement PEnc = PRHT $(X_i)$ et MEnc = MRHT $(X_i)$, dans lequel :

$$MEnc(PEnc(X_i)) = ( \; MEnc(a_{i0}), \; MEnc(a_{i1}), ..., MEnc(a_{i\,n-1})) =$$

$$= \left( \begin{pmatrix} a_{11} & \cdots & a_{1n} \\ \vdots & \ddots & \vdots \\ a_{n1} & \cdots & a_{nn} \end{pmatrix}_{i0} , \begin{pmatrix} a_{11} & \cdots & a_{1n} \\ \vdots & \ddots & \vdots \\ a_{n1} & \cdots & a_{nn} \end{pmatrix}_{i1} , ..., \begin{pmatrix} a_{11} & \cdots & a_{1n} \\ \vdots & \ddots & \vdots \\ a_{n1} & \cdots & a_{nn} \end{pmatrix}_{i\,n-1} \right);$$

et

$$PEnc(MEnc(X_i)) = PEnc \left( \begin{pmatrix} a_{11} & \cdots & a_{1n} \\ \vdots & \ddots & \vdots \\ a_{n1} & \cdots & a_{nn} \end{pmatrix} \right)_i$$

où

$$PEnc(a_{ij}) = (a_0, a_1, ..., a_{n-1})_{ij}$$

15. Procédé selon la revendication 3, dans lequel la sortie reçue comprend un texte chiffré désigné par « C », le texte chiffré C étant produit en tant que sortie à partir d'une entrée de texte en clair, et tous les calculs sont mis en oeuvre par une opération modulo N sur un anneau $Z_N$, où « N » est un produit de deux nombres premiers, et la matrice S comprend une clé de chiffrement symétrique, dans lequel les fonctions de chiffrement sont désignées par MEnc et PEnc et correspondent respectivement aux fonctions MRHT et PRHT, et l'entrée randomisée comprend un texte en clair, et tous les calculs sont mis en oeuvre par une opération modulo N sur un anneau $Z_N$, où « N » est un produit de deux nombres premiers, et la matrice S comprend une clé de chiffrement symétrique.

16. Procédé d'addition d'une paire de sorties de texte chiffré $C_i$ et $C_j$, $C_i$ et $C_j$ étant des textes chiffrés produits en tant que sortie à partir d'une entrée de texte en clair, et dans lequel tous les calculs sont mis en oeuvre par une opération modulo N sur un anneau $Z_N$, dans lequel « N » est un produit de deux nombres premiers, et la matrice S comprend une clé de chiffrement symétrique, dans lequel les fonctions de chiffrement sont désignées par MEnc et PEnc et correspondent respectivement aux fonctions MRHT et PRHT, le procédé comprenant l'addition de $C_i$ et $C_j$ selon le procédé de la revendication 4, dans lequel tous les calculs sont mis en oeuvre par une opération modulo N sur un anneau $Z_N$, dans lequel « N » est un produit de deux nombres premiers, et la matrice S comprend une clé de chiffrement symétrique.

17. Procédé de multiplication d'une paire de sorties de texte chiffré $C_i$ et $C_j$, $C_i$ et $C_j$ comprenant des textes chiffrés produits en tant que sortie à partir d'une entrée de texte en clair, et dans lequel tous les calculs sont mis en oeuvre par une opération modulo N sur un anneau $Z_N$, dans lequel « N » est un produit de deux nombres premiers, et la matrice S comprend une clé de chiffrement symétrique, dans lequel les fonctions de chiffrement sont désignées par MEnc et PEnc et correspondent respectivement aux fonctions MRHT et PRHT, le procédé comprenant la multiplication de $C_i$ et $C_j$ selon le procédé de la revendication 5, dans lequel tous les calculs sont mis en oeuvre par une opération modulo N sur un anneau $Z_N$, dans lequel « N » est un produit de deux nombres premiers, et la matrice S comprend une clé de chiffrement symétrique.

18. Procédé de division d'une paire de sorties de texte chiffré $C_i$ et $C_j$, $C_i$ et $C_j$ comprenant des textes chiffrés produits en tant que sortie à partir d'une entrée de texte en clair, et dans lequel tous les calculs sont mis en oeuvre par une opération modulo N sur un anneau $Z_N$, dans lequel « N » est un produit de deux nombres premiers, et la matrice S comprend une clé de chiffrement symétrique, dans lequel les fonctions de chiffrement sont désignées par MEnc et PEnc et correspondent respectivement aux fonctions MRHT et PRHT, le procédé comprenant la division de $C_i$ et $C_j$ selon le procédé de la revendication 6, dans lequel tous les calculs sont mis en oeuvre par une opération modulo N sur un anneau $Z_N$, dans lequel « N » est un produit de deux nombres premiers, et la matrice S comprend une clé de chiffrement symétrique.

19. Procédé pour vérifier qu'un résultat retourné d'un calcul mis en oeuvre par un tiers est valide, le résultat étant exécuté par le procédé selon l'une quelconque des revendications 1 à 18, le résultat étant désigné par « $R^*_M$ » pour un résultat retourné en utilisant une fonction MRHT ou MEnc désignée par « M », et le résultat étant désigné par

« $R^*_P$ » pour un résultat retourné en utilisant une fonction PRHT ou PEnc désignée par « P », le résultat comprenant un résultat d'un calcul homomorphe désigné par «$f$» mis en oeuvre sur $A_1$, $A_2$, ..., $A_k$, dans lequel $A_i$ est égal à l'un parmi $M(X_i)$ et $P(X_i)$ ; $f(A_1, A_2, ..., A_k)$ est égal à l'un parmi : $M(f(X_1, X_2, ..., X_k)) = f(M(X_1), M(X_2), ..., M(X_k))$ et $P(f(X_1, X_2, ..., X_k)) = f(P(X_1), P(X_2), ..., P(X_k))$, le procédé comprenant les étapes ci-dessous consistant à :

recevoir le résultat de $f(A_1, A_2, ..., A_k)$ dans ladite une des formes :
et
$f(A_1, A_2, A_2, ..., A_k)$ sous la forme de $a^*_0, a^*_1, ..., a^*_{n-1} = R^*_P$ ;
dans le cas où le résultat se présente sous la forme de $R^*_M$ :

calculer $f(Y_{m1}, Y_{m2}, ..., Y_{mk})$, désigné par « Q », pour tout « m », m = 1, 2, ..., n - 1 où $Y_{mj}$ comprend la m-ième valeur aléatoire utilisée dans l'un parmi le chiffrement et la randomisation de $X_j$ ;
mettre en oeuvre l'un parmi le déchiffrement et la dé-randomisation de $R^*_M$, ce qui permet par conséquent de déterminer $f(Y_{m1}, Y_{m2}, ..., Y_{mk})$, désigné par « E » à partir de la diagonale de matrice résultante de la ligne « m + 1 » ; et
considérer le résultat du calcul de $f(X_i)$ comme valide si « E » est égal à « Q » ; et
dans le cas où le résultat se présente sous la forme de $R^*_P$ :

calculer $f(Y_{m1}, Y_{m2}, ..., Y_{mk})$, désigné par « Q », pour tout « m », m = 1, 2, ..., n - 1 où $Y_{mj}$ comprend la m-ième valeur aléatoire utilisée dans l'un parmi le chiffrement, et la randomisation de $X_j$ ;
mettre en oeuvre l'un parmi le déchiffrement ; et la dé-randomisation de $R^*_p$, ce qui permet par conséquent de déterminer :

$= f(R_{m1}, R_{m2}, ..., R_{mk})$, désigné par « E » ; et

considérer le résultat du calcul de $f(X_1, X_2, ..., X_k)$ comme valide si « E » est égal à « Q ».

FIG. 1

PERFORMANCE HOST/SERVER
(LOW SECURITY HIGH PERFORMANCE)
RUNNING HOMOMORPHIC-ENCRYPTED TASKS

FOR EXAMPLE: PUBLIC CLOUD SERVER
STANDARD HOME COMPUTER
SET TOP BOX
SMART PHONE ACPU

ENCRYPTED INPUT

ENCRYPTED RESULT

SECURITY ELEMENT
(HIGH SECURITY LOW PERFORMANCE)
HOMOMORPHIC-ENCRYPTION KEY

FOR EXAMPLE: SMARTCARD
SIM CARD
RFID
SECURE EXECUTION ENVIRONMENT AND OTP

FIG. 2

INPUT: $X_1, \ldots X_k$

ALGORITHM
$F(X_1, \ldots X_k, \ldots C_{H1}, \ldots C_{Hn}, \text{state})$

HOMOMORPHIC ENCRYPTED
COEFFICIENTS: $C_{H1}, \ldots C_{Hn}$

STATE

IV

OUTPUT TO SECURE
CLIENT

EP 2 873 186 B1

FIG. 3A

RECEIVE AN INPUT DENOTED INP COMPRISING A SEQUENCE OF K INPUT ELEMENTS IN CR

PERFORM ONE OF A OR B

A                                                                              B

FIG. 3B

A

RANDOMLY CHOOSE A SECRET NxN MATRIX IN CR, HEREINAFTER DENOTED AS S, S BEING UTILIZED AS A SYMMETRIC RANDOMIZING KEY, WHEREIN S COMPRISES AN INVERTIBLE MATRIX OVER CR

DETERMINE $S^{-1}$

FOR EACH SET i OF m DISTINCT INPUT ELEMENTS WHEREIN 0<m<k+1 AND m<n SELECTED FROM INP THAT ARE TO BE JOINTLY RANDOMIZED, AND DENOTED HEREINAFTER AS $X_1, X_2, ...,X_m,$ SELECTING n-m RANDOM NUMBERS $Y_1, Y_2, ... Y_{n-m}$ , IN CR, WHERE THE INPUT ELEMENTS $X_1, X_2, ...,X_m$ AND RANDOM NUMBERS $Y_1, Y_2, ... Y_{n-m}$ ARE PLACED IN ORDER ON THE DIAGONAL OF A NxN DIAGONAL MATRIX

$$
\begin{pmatrix}
X_1 & 0 & 0 & 0 & ... & & 0 \\
0 & X_2 & 0 & 0 & ... & & \vdots \\
 & & 0 & \ddots & & ... & \\
\vdots & \vdots & \vdots & X_m & ... & \vdots & \vdots \\
 & & & 0 & Y_1 & & 0 \\
 & & & 0 & & Y_2 & \\
 & & & \vdots & & & \ddots \\
0 & 0 & ... & & & & Y_{n-m}
\end{pmatrix}
$$

a

## FIG. 3C

EP 2 873 186 B1

DETERMINE RANDOM OUTPUT $A_{im}$ FOR THE m INPUT ELEMENTS IN SET i DENOTED
AS $\{X_{im}\}= X_1, X_2, ...,X_m$, BY
UTILIZING A MATRIX-BASED RANDOMIZING AND HOMOMORPHIC
TRANSFORMATION FUNCTION HEREINAFTER
DENOTED MRHT, WHEREIN $MRHT(\{X_{im}\}) = A_{im} =$

$$
S \begin{bmatrix}
X_1 & 0 & 0 & 0 & \cdots & & 0 \\
0 & X_2 & 0 & 0 & \cdots & & \vdots \\
 & & 0 & \ddots & \cdots & & \vdots \\
\vdots & \vdots & \vdots & X_m & \cdots & \vdots & \vdots \\
 & & & 0 & Y_1 & & 0 \\
 & & & 0 & & Y_2 & \\
 & & & \vdots & & & \ddots \\
0 & 0 & \cdots & & & & Y_{n-m}
\end{bmatrix}
S^{-1} =
\begin{bmatrix}
a_{11} & \cdots & a_{1n} \\
\vdots & \ddots & \vdots \\
a_{n1} & \cdots & a_{nn}
\end{bmatrix}
$$

THEREBY PRODUCING A RANDOM OUTPUT $A_{im}$ CORRESPONDING TO THE i SET OF m INPUT
ELEMENTS $=X_1, X_2, ...,X_m$

**FIG. 3D**

B

↓

SELECT n RANDOM NUMBERS IN CR, THE n RANDOM NUMBERS HEREINAFTER DENOTED AS $v_1, v_2, \ldots, v_n$

↓

DETERMINE A PUBLIC POLYNOMIAL $P(v) = \prod_{i=1}^{n}(v - v_i) = \sum_{j=0}^{n} C_j \cdot v^j$

↓

SELECT A POLYNOMIAL-BASED RANDOMIZING AND HOMOMORPHIC TRANSFORMATION FUNCTION HEREINAFTER DENOTED PRHT $(X_{im})$, COMPRISING ANY FUNCTION IN VARIABLE v OF THE FORM

$$\sum_{j=0}^{n-1} a_{ij} \cdot v^j$$

WHICH SATISFIES THE EQUATIONS

$$\sum_{j=0}^{n-1} a_{ij} \cdot v_1^j = X_1, \sum_{j=0}^{n-1} a_{ij} \cdot v_2^j = X_2, \ldots, \sum_{j=0}^{n-1} a_{ij} \cdot v_m^j = X_m$$

↓

CHOOSE n-m RANDOM VALUES IN CR, FOR $a_{i,m}, a_{i,m+1}, \ldots, a_{i,n-1}$, THAT WOULD YIELD A SOLUTION FOR THE ABOVE EQUATIONS FOR $a_{i,0}, a_{i,1}, \ldots, a_{i,m-1}$

↓

PERFORM ONE OF C OR D ————→ C

————→ D

EP 2 873 186 B1

FIG. 3E

EP 2 873 186 B1

C

PRODUCE A RANDOM OUTPUT $A_{im}$ CORRESPONDING TO INPUT ELEMENTS $X_1$, $X_2$,... ,$X_m$ COMPRISING THE SET ($a_{i0}$, $a_{i1}$, ..., $a_{i\,n-1}$) AND PUBLIC SET OF COEFFICIENTS ($C_0$, $C_1$, ..., $C_{n-1}$, $C_n$) OF $P(v)$, WHEREIN THE SET OF COEFFICIENTS ($C_0$, $C_1$, ..., $C_{n-1}$, $C_n$) ARE REQUIRED FOR ARITHMETIC PERFORMING OPERATIONS WITH INPUT ELEMENTS

D

SELECT FOR THE GIVEN INPUT ELEMENTS $X_1$ , $X_2$ , ...., $X_m$ , n-m RANDOM VALUES $R_1$, ..., $R_{n-m}$ IN CR THAT WOULD SOLVE THE FOLLOWING n SIMULTANEOUS EQUATIONS

$$\sum_{j=0}^{n-1} a_{ij} \cdot v_1^{\,j} = X_1 , \sum_{j=0}^{n-1} a_{ij} \cdot v_2^{\,j} = X_2 , ... , \sum_{j=0}^{n-1} a_{ij} \cdot v_m^{\,j} = X_m , \quad \cdots$$

$$\sum_{j=0}^{n-1} a_{ij} \cdot v_{m+1}^{\,j} = R_1 , \sum_{j=0}^{n-1} a_{ij} \cdot v_{m+2}^{\,j} = R_2 , ... , \sum_{j=0}^{n-1} a_{ij} \cdot v_n^{\,j} = R_{n-m}$$

FOR UNKNOWNS $a_{i0}$, $a_{i1}$, ..., $a_{i\,n-1}$, THEREBY PRODUCING, FOR $X_1$ , $X_2$,... $X_m$ A RANDOM TEXT COMPRISING THE SET($a_{i0}$, $a_{i1}$, ..., $a_{i\,n-1}$) AND PUBLIC ($C_0$, $C_1$, ..., $C_{n-1}$, $C_n$) OF $P(v)$

**EP 2 873 186 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IL 221152
- IL 224400
- US 7254586 B, Chen
- WO 2010100015 A
- US 20100329454 A, Takashima
- US 7472093 B, Juels
- US 20110110525 A, Gentry
- WO 9808323 A

### Non-patent literature cited in the description

- **KRISTIN LAUTER ; MICHAEL NAEHRIG ; VINOD VAIKUNTANATHAN.** *Can Homomorphic Encryption be Practical,* July 2011
- **GENTRY et al.** *STOC '09, Proceedings of the 41st Annual ACM Symposium on Theory of Computing,* 169-178
- **XIAO et al.** *An Efficient Homomorphic Encryption Protocol for Multi-User Systems, www.utdallas.edu/~ilyen/techrep/HPbound.pdf*
- Craig Gentry. Fully homomorphic encryption using ideal lattices. STOC. ACM, 2009, 169-178
- **GENTRY, S.** Implementing Gentry's fully-homomorphic encryption scheme. *Halevi - Advances in Cryptology-EUROCRYPT,* 2011
- **R. L. RIVEST ; L. ADLEMAN ; M. L. DERTOUZOS.** On data banks and privacy homomorphisms. *Foundations of Secure Computation,* 1978
- **ONG ; SCHNORR ; SHAMIR.** *An Efficient signature based on quadratic equations, proceedings of the 16'th symposium on theory of computing,* 1984, 208-216
- **RIVEST, R. ; A. SHAMIR ; L. ADLEMAN.** A Method for Obtaining Digital Signatures and Public-Key Cryptosystems. *Communications of the ACM,* 1978, vol. 21 (2), 120-126
- **J.POLLARD ; C.SCHNORR.** An efficient solution of the congruence $x2 + ky2 = m$ modulo n. *IEEE transactions on Information Theory,* September 1987, vol. IT-33 (5), 208-216